# EUROPEAN PATENT APPLICATION

(11) **EP 1 160 706 A1**
(43) Date of publication of application: **05.12.2001**
(21) Application number: 01113275.0
(22) Date of filing: 31.05.2001
(51) Int. Cl.: G06F 17/60

(54) **Methods and systems for collecting and paying taxes on contents delivered over a network**

(30) Priority: 31.05.2000 JP 2000161820; 12.06.2000 JP 2000176167; 26.09.2000 JP 2000291561
(71) Applicant: Casio Computer Co., Ltd., Shibuya-ku, Tokyo 151-8543 (JP)
(72) Inventor: Murata, Yoshiyuki, Casio Computer Co., Ltd., Hamura-shi, Tokyo 205-8555 (JP)
(74) Representative: Grünecker, Kinkeldey, Stockmair & Schwanhäusser Anwaltssozietät

(57) **Abstract**

Methods and systems for collecting and paying a tax on contents delivered over a network, and recording mediums having recorded such methods. Before a contents receiver 1 belonging to a first country requests delivery of desired contents over a network 100 from a contents dealer 3 belonging to a second country, the contents dealer 3 registers himself or herself as a dealer with a network customhouse 2 belonging to the first country. When the contents dealer 3 delivers contents to the contents receiver 1 in accordance with a request of the contents receiver, the contents dealer 3 pays a tax imposed on the delivered contents to the network customhouse 2 over the network 100. The network customhouse 2 receives this tax.

## Description

### [Technical Field of the Invention]

The present invention relates to methods for collecting and paying taxes imposed on contents delivered from a contents sender to a contents receiver over a network, and recording mediums that have recorded the methods, systems for processing taxes on the delivered contents and recording mediums that have recorded data for implementing the processing systems.

### [Background of the Invention]

International transaction (delivery) of contents over the Internet has deffused today. In this transaction, contents can easily imported into the contents receiver's country irrespective of a customhouse, by accessing an oversea server, downloading the contents, and settling accounts with a the server, using credit cards. This dealing is different from a customs system that involves importing general corporeal commodities.

### [Problem to be Solved by the Invention]

Even contents that are incorporeal commodities are not different from corporeal commodities in that they are available by paying for them. Taxation on incorporeal commodities transacted is now under examination as in general commodities.

At present, taxing methods and systems effective for transaction of the contents have not been constructed.

### [Summary of the Invention]

In view of such situation, the present invention has been made. It is an object of the present invention to provide contents transaction tax collecting and paying methods capable of collecting and paying rapidly and surely taxes on international or inter-area contents transaction over the network, recording mediums that have recorded the methods, systems for processing the taxes after delivery of the contents, and recording mediums that have recorded the systems.

According to one aspect of the present invention, there is provided a method of collecting taxes on contents delivered over a network, said method comprising:
registering a contents sender in a country or region based on an application for registration made by the contents sender through the network; and
in response to contents being delivered through the network from the registered contents sender to a contents receiver in a different country or region, causing a tax collecting authority in the different country or region to collect through the network a tax on the contents delivered to the contents receiver.

### BRIEF DESCRIPTION OF THE DRAWINGS

FIG. 1 illustrates a composition of a system of a first embodiment of the present invention;
FIG. 2 illustrates a composition of a RAM used in a contents receiver's terminal;
FIG. 3A illustrates a composition of a table ROM in a network customhouse's terminal;
FIG. 3B illustrates a composition of a RAM in the network customhouse's terminal;
FIG. 4A illustrates a composition of a table ROM in a contents dealer's terminal;
FIG. 4B illustrates a composition of a RAM in a contents dealer's terminal;
FIG. 5 illustrates a part of interactions performed among terminals of the system of the first embodiment;
FIG. 6 illustrates a remaining part of the interactions of FIG. 5;
FIG. 7 is a flowchart indicative of network processing by the contents receiver's terminal;
FIG. 8 is a flowchart indicative of network processing by a contents dealer's terminal in the first country;
FIG. 9 is a flowchart indicative of network processing by a financier's terminal;
FIG. 10 is a flowchart indicative of network processing by the contents dealer's terminal;
FIG. 11 illustrates a display picture of the contents dealer's terminal indicative of a registration application form;
FIG. 12 illustrates a display picture of a notice of completed registration and ID issue;
FIG. 13 illustrates a display picture of a menu;
FIG. 14 illustrates a display picture of data prior data;
FIG. 15 illustrates a display picture of a notice of rejection of delivery permit;
FIG. 16 illustrates a display picture of a notice of tax related information;
FIG. 17 illustrates a contents delivery permit application;
FIG. 18 illustrates a display picture of a notice of contents delivery permit;
FIG. 19 illustrates a display picture of a notice of delivery permission and request for contents delivery;
FIG. 20 illustrates a display picture of a tax return;
FIG. 21 illustrates a display picture of a notice of completed tax payment;
FIG. 22 illustrates a composition of a system of a second embodiment of the present invention;
FIG. 23 illustrates a part of interactions performed among terminals of the system of the second embodiment;
FIG. 24 illustrates a remaining part of the interactions of FIG. 23;
FIG. 25 illustrates an appearance of the system of each of the first and second embodiments;
FIG. 26 illustrates another system of the present invention;
FIG. 27 illustrates a composition of a system involving a third embodiment of the present invention;
FIG. 28 illustrates a composition of a RAM in a contents dealer's terminal in the third embodiment;
FIG. 29 illustrates a composition of a RAM in a network customhouse's terminal;
FIG. 30 illustrates a composition of a table RAM in an in-area dealer's terminal;
FIG. 31 illustrates a part of interactions performed among terminals of the system of the third embodiment;
FIG. 32 illustrates a remaining part of the interactions of FIG. 31;
FIG. 33 is a flowchart indicative of network processing by the contents receiver's terminal;
FIG. 34 is a flowchart indicative of network processing by a network customhouser's terminal in the first country;
FIG. 35 is a flowchart indicative of network processing by a financier's terminal;
FIG. 36 is a flowchart indicative of network processing by a contents dealer's terminal;
FIG. 37 is a flowchart indicative of network processing by an in-area dealer's terminal;
FIG. 38 illustrates a display picture of a corporation registration application form;
FIG. 39 illustrates a display picture of a notice of completed registration;
FIG. 40 illustrates an appearance of a system of a third embodiment of the present invention;
FIG. 41 illustrates a modification of the system of the third embodiment;
FIG. 42 illustrates a system of a fourth embodiment of the present invention;
FIG. 43 illustrates a system of a fifth embodiment of the present invention;
FIG. 44 illustrates a system of a sixth embodiment of the present invention;
FIG. 45 illustrates a system of a seventh embodiment of the present invention;
FIG. 46 illustrates a composition of a RAM in a contents receiver's terminal in the seventh embodiment;
FIG. 47A illustrates a composition of a RAM in the network customhouse's terminal;
FIG. 47B illustrates a composition of a RAM in a financier's terminal;
FIG. 48 illustrates a composition of a table ROM in a contents dealer's terminal;
FIG. 49 illustrates a part of interactions performed among terminals of the system of the seventh embodiment;
FIG. 50 illustrates a remaining part of the interactions of FIG. 49;
FIG. 51 is a flowchart indicative of network processing by the contents receiver's terminal;
FIG. 52 is a flowchart indicative of network processing by a network customhouse's terminal in the first country;
FIG. 53 is a flowchart indicative of network processing by a financier's terminal;
FIG. 54 is a flowchart indicative of network processing by a contents dealer's terminal;
FIG. 55 illustrates a display picture of a notice of completed registration and ID issue;
FIG. 56A illustrates a display picture of a tax return and a notice of completed tax payment for the contents receiver;
FIG. 56B illustrates a display picture of a tax return and a notice of completed tax payment for the contents dealer;
FIG. 56C illustrates a display picture of a tax return and a notice of completed tax payment for the financier; and

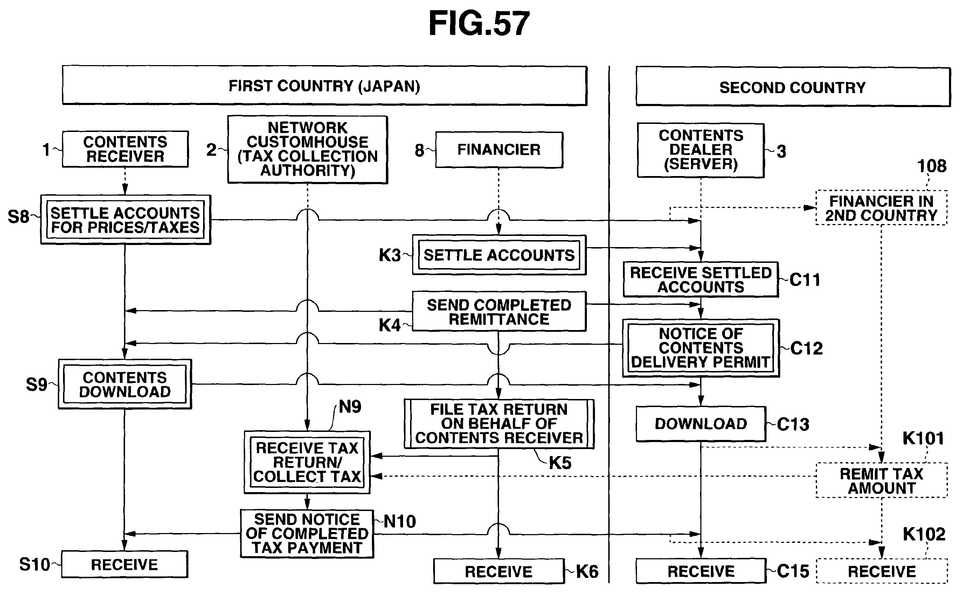

FIG. 57 illustrates a part of interactions performed among terminals of a system of an eighth embodiment;

### [Embodiments]

Embodiments of the present invention will be described next with reference to the drawings.

### (A) Dealer registering and tax collecting system:

Tax collecting methods that register international contents dealers beforehand, ensure grasping an international transaction of contents, clarify a contents dealer who is obliged to pay the tax, and collects the tax (hereinafter referred to as "Dealer registering and tax collecting system") will be explained before description of a first and a second embodiment.

In the "dealer registering and tax collecting system", a network customhouse as a tax collection authority in a first country or region (including a particular economic area such as a state or district, which applies in subsequent cases) to which a contents receiver belongs obliges a contents dealer in a second country or region to register the contents dealer beforehand in a network customhouse of the first country. When contents are delivered from the registered dealer to the contents receiver, the tax collecting authority collects a tax imposed on the delivered contents from the registered contents dealer or the second dealer.

### (1) [First Embodiment]:

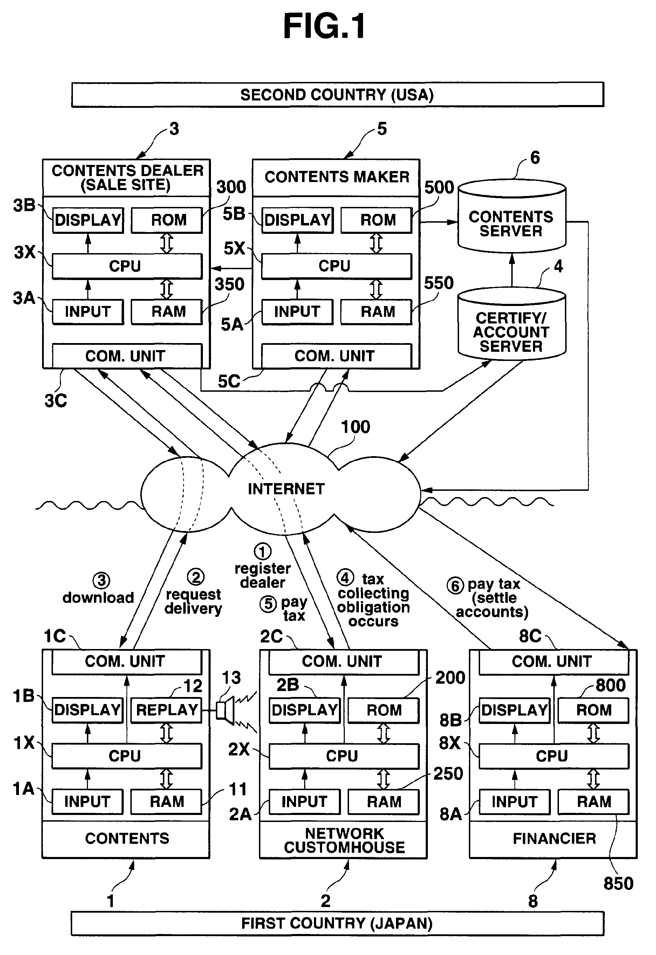

A first embodiment of FIG. 1 relates to the dealer registering and tax collecting system. In the embodiment, a network customhouse as a tax collection authority in a first country or region to which a contents receiver belongs obliges a contents dealer in a second country or region to register the contents dealer with the network customhouse in the first country. When contents are delivered from the registered dealer to the contents receiver, the tax collecting authority collects a tax imposed on the delivered contents from the registered contents dealer.

### (1-1) Composition:

As shown in FIG. 1, in the system of the first embodiment, a contents receiver's (consumer's or-individual importer's) terminal 1, a network customhouse's (a network Regional Taxation Bureau's) terminal 2 and a financier's terminal 8 are in the first country (for example, Japan). A contents dealer's terminal 3, a certifying/accounting server 4, a contents maker's terminal 5 and a contents server 6 are in the second country (for example, USA).

The contents receiver's terminal 1 comprises, for example, a PC audio device or a PC (Personal Computer) that requests delivery of contents from the contents dealer 3 over the Internet 100 and receives the delivered contents.

The contents receiver's terminal 1 comprises a CPU 1X that controls the overall terminal 1, an input unit 1A that includes a keyboard or mouse, a display 1B that displays data, a communication unit 1C that includes a transmitter and a receiver to communicate data with an external device, a RAM 11 that stores various data, a contents replayer 12 that replays delivered contents, and a speaker 13.

The network customhouse's device 2, contents dealer's device 3, contents maker's device 5, and financier's device 8 are each composed of a general-purpose computer, and include CPUs 2X, 3X, 5X and 8X; input units 2A, 3A, 5A, 8A each of a keyboard or mouse; displays 2B, 3B, 5B, 8B to display data; communication units 2C, 3C, 5C, 8C each composed of a transmitter and a receiver to communicate data with an external device; and RAMs 250, 350, 550, 850 to store various data, respectively.

The contents receiver's terminal 1, network customhouse's terminal 2, contents dealer's terminal 3, certifying/accounting server 4, and contents server 6 are connectable over Internet 100. The contents dealer 3, certifying/accounting server 4, contents maker's device 5, and contents server 6 are connected to each other through dedicated lines. The financier's device 8 is connected through a dedicated line (not shown) to contents dealer 3.

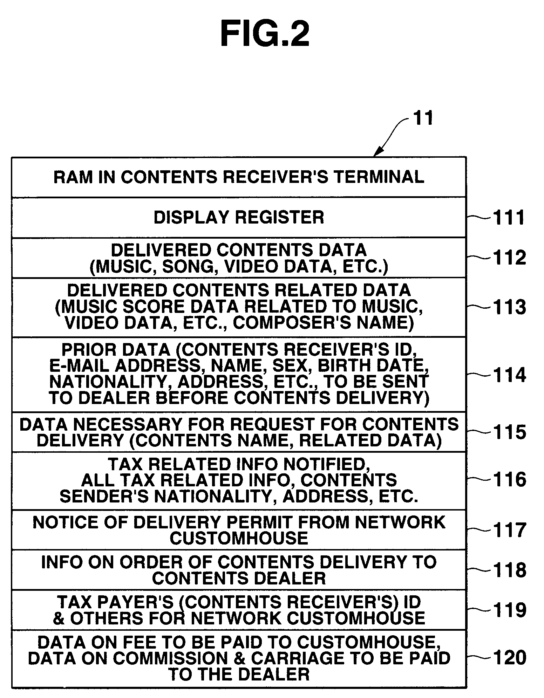

As shown in FIG. 2, RAM 11 of the contents receiver's terminal 1 includes a display register 111 used to indicate data on the display 1A, and also storage areas 112-120.

Area 112 stores contents data such as music, song, video data, etc., that the contents receiver 1 downloaded from the contents dealer's terminal 3. Area 113 stores contents related data such as music score/composition name related to music/video data. Area 14 stores prior data that includes the contents receiver's ID, electronic mail address, name, sex, birth date, nationality, etc., that are to be sent to the contents dealer 3 before delivery of contents. Area 115 stores data necessary for a request for contents delivery such as contents name, related data, etc. Area 116 stores data on a notice of tax related information, the contents dealer's or sender's nationality, address, etc. Area 117 stores data on a notice of delivery permit, given by the network customhouse 2. Area 118 stores data on an order for contents delivery given to the contents dealer. Area 119 stores a data on the ID of a contents receiver who acts, for example, as a tax payer to the network customhouse 2. Area 120 stores data on a brokerage and carriage on delivery of contents to be paid to the contents dealer.

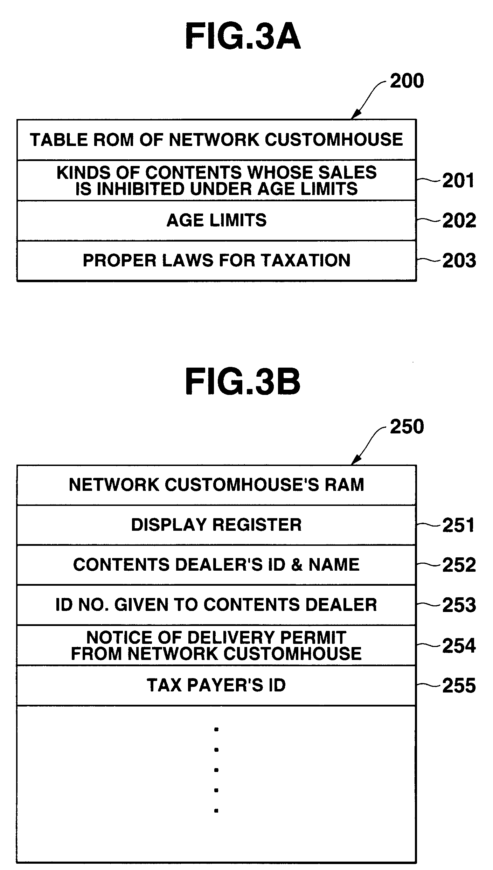

As shown in FIG. 3A, the network customhouse's terminal 2 comprises a general-purpose computer that includes a table ROM 200 having storage areas 201-203. Area 201 stores data on kinds of contents the sales of which is inhibited under the stipulation of a law and its articles that involve age limits. Area 202 stores data on the limit ages. Area 203 stores data on the law and its articles.

As shown in FIG. 3B, RAM 250 of the network customhouse's terminal 2 comprises a display register 251 used to display data on display unit 1A, and storage areas 252-255.

Area 252 stores data on the contents dealer's ID, mail address, name, etc. Area 253 stores the contents dealer's ID number given by the network customhouse 2 based on application for registration of the contents dealer. Area 254 stores data on a notice of delivery permit received from the network customhouse 2. Area 255 stores data on the ID of the contents receiver who acts, for example, as a tax payer to the network customhouse 2.

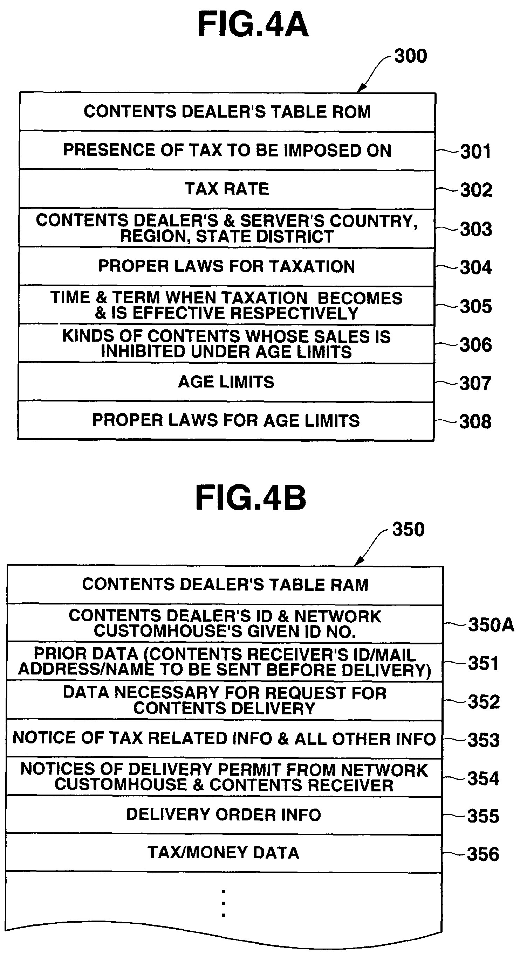

The contents dealer's terminal 3 comprises a general-purpose computer, which includes a table ROM 30 having storage areas 301-308, as shown in FIG. 4A. Area 301 has stored data on whether contents transactions are taxable in a country, region, state and district where the contents dealer 3 or server 6 is. Area 302 has stored data on the tax rates if the contents are taxable. Area 303 has stored data on the country, region, state and district of the contents dealer 3 or server 6. If the contents transactions are taxed in the country, region, etc., area 303-305 have stored data on proper law and its articles on taxation, and a start time and effective term of the taxation. Area 306 has stored kinds of contents whose sales is inhibited under the stipulation of age limits. Area 307 has stored data on the age limits. Area 308 has stored data on a proper law and its articles that involve the age limits. As shown in FIG. 4B, the contents dealer's terminal 3 comprises a table RAM 350 having storage areas 350-356.

### (1-2) Operation:

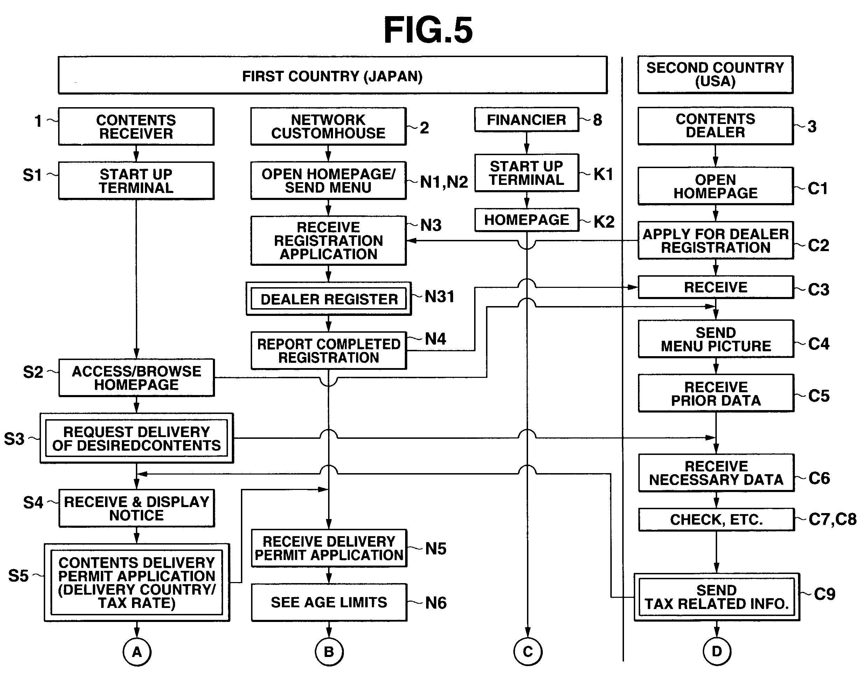

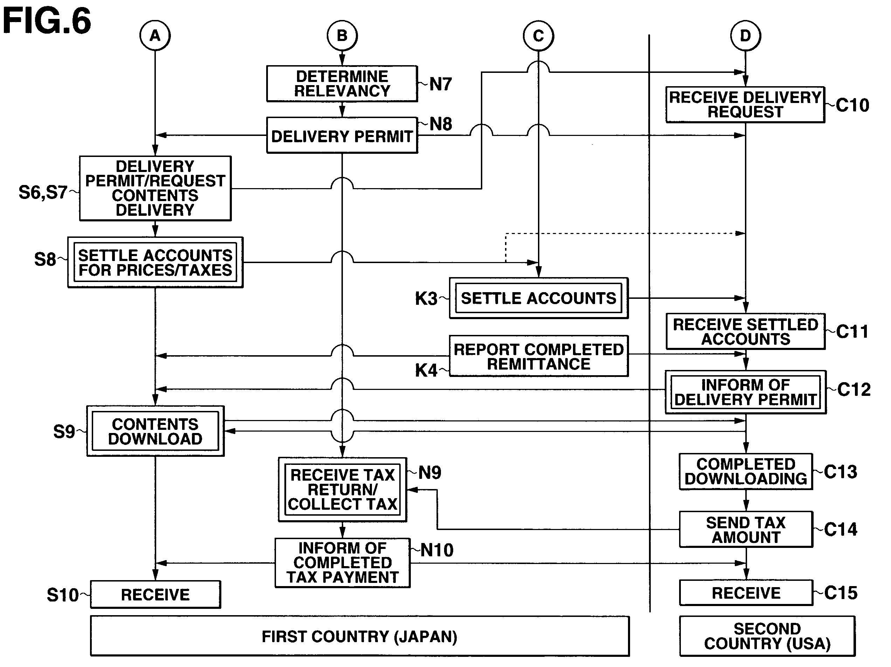

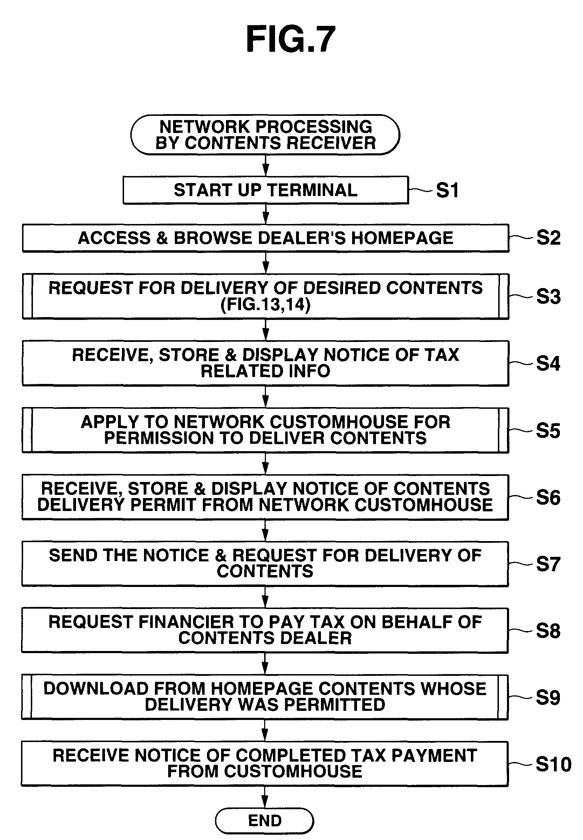

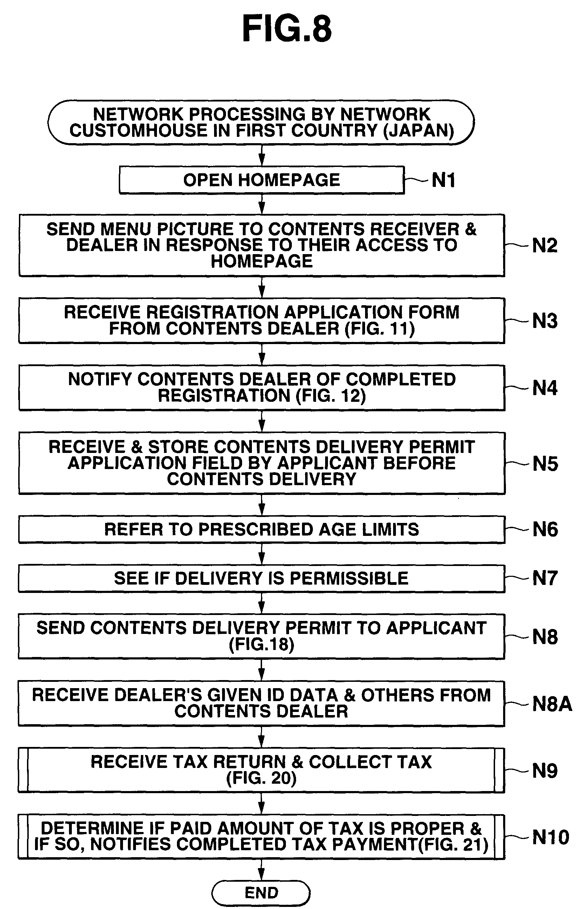

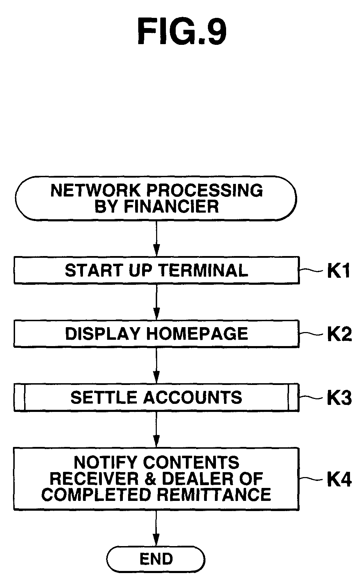

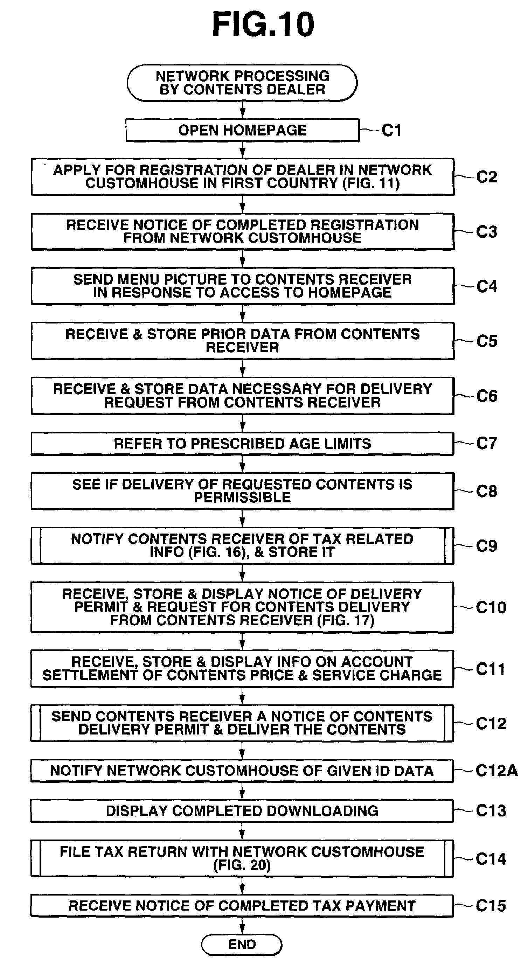

Operation of the first embodiment will be described next. FIGS. 5 and 6 illustrate a series of interactions to be performed in this system. FIG. 7 illustrates a flow of network processing by the contents receiver. FIG. 8 illustrates a flow of network processing by the network customhouse (including a network Regional Taxation Bureau) in the first country (Japan). FIG. 9 illustrates a flow of network processing by the financier (inclusive of a credit card company). FIG. 10 illustrates a flow of network processing by the contents dealer (provider, sales site). Step numbers used in the series of interactions to be performed in this system of FIGS. 5 and 6 correspond to step numbers used in the flowcharts of FIGS. 7-10. In the explanation below, data transfer such as data transmission, reception, notification, etc., should be performed over the Internet 100 or dedicated lines shown in FIG. 1. The contents "receiver's terminal 1" can be hereinafter referred to as "contents receiver 1"; the "network customhouse's terminal 2" as a "network customhouse 2"; the "contents deliver dealer's terminal 3" as "contents dealer 3"; the "contents maker's terminal 5" as "contents maker 5"; and the "financier's terminal 8" as "financier 8".

### (1-2A) Flow of Network Processing by Contents Receiver (FIG. 7):

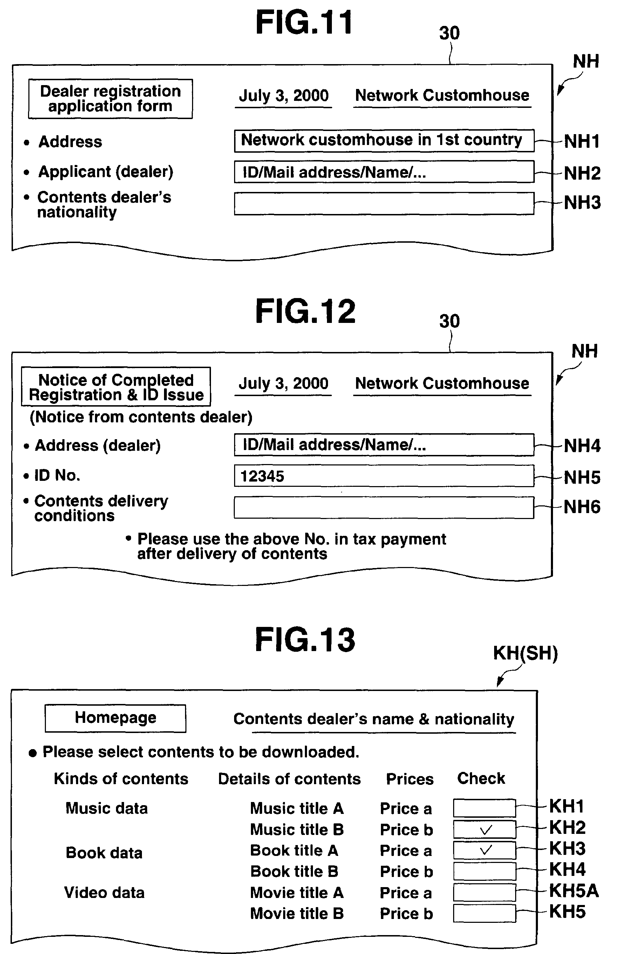

First, the flow of network processing by the contents receiver, as shown in FIG. 7 will be described. First, the contents receiver 1 starts up its terminal (step S1), and accesses a homepage KH of the contents dealer 3 of FIG. 13 to browse it (step S2).

In response to this, the contents dealer 3 sends the contents receiver 1 a menu picture (step C4 of FIG. 10).

As illustrated in FIG. 13, the menu picture of the homepage of the contents dealer 3 contains below the contents dealer's name and country name contents to be selected and downloaded. The picture contains kinds of contents that include music data, book data, video data, ...; two titles A and B for each kind, corresponding prices a and b, and check-off boxes KH1, KH2, KH3, ...KH5, .... The same menu picture of FIG. 13 is also displayed on the display unit SH of the contents receiver 1.

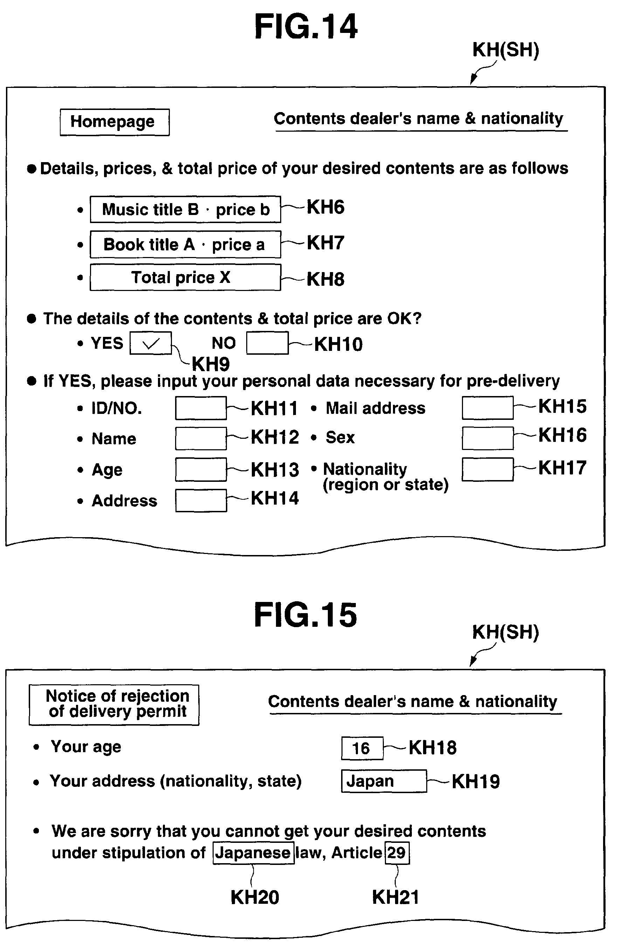

As illustrated in FIG. 13, the contents receiver 1 checks off those of check boxes KH1, ...KH5, ..., which correspond to the contents that the contents receiver desires to obtain. Then, as shown in FIG. 14, the homepage of the contents dealer 3 is changed to a picture that includes data boxes KH6-KH8 representing first desired contents and price; second desired contents and price; and the sum of the prices; check boxes KH6-KH8 used to confirm the contents and the sum of the prices; and boxes KH11-KH17 for the contents receiver's personal data to be inputted before the contents delivery. The same picture is also displayed on the display SH of the contents receiver 1.

The contents receiver 1 inputs to the displayed picture prior data to be sent before the contents delivery to the contents dealer in accordance with directions displayed on the picture. Then, as shown in FIG. 2, these data are stored in the area 114 of RAM 11 of the contents receiver 1, and then sent as such to the homepage KH of the contents receiver 3.

Receiving the data, the contents receiver 3 stores the data in area 351 of RAM 350 of FIG. 4B (step C6). The contents dealer 3 then determines in accordance with reference data in a reference data base prepared previously by the contents dealer 3 whether delivery of the required contents to the contents receiver 1 is permissible (step C8).

If it is not permissible, the contents dealer sends the contents receiver 1 a notice of rejection of delivery permit with an indication of proper laws and articles that indicate grounds that the delivery is not permissible, as shown in FIG. 15.

As illustrated in FIG. 15, the notice of rejection of delivery permit includes the "contents dealer's name and country name" and, for example, a description "Your desired contents cannot be delivered to you under the stipulation of 'Japanese' law, article '29'" since "Your age' is '16' and 'Your address (nationality, state)' is 'Japan',.

Conversely, if it is determined that delivery of the contents is permissible, the contents dealer 3 sends data on this fact to the contents receiver 1 along with a "Notice of tax related information" specifying the details of a tax to be imposed by the first-country network customhouse 2 on the contents to be delivered from the first country to the second country (step C9 of FIG. 10).

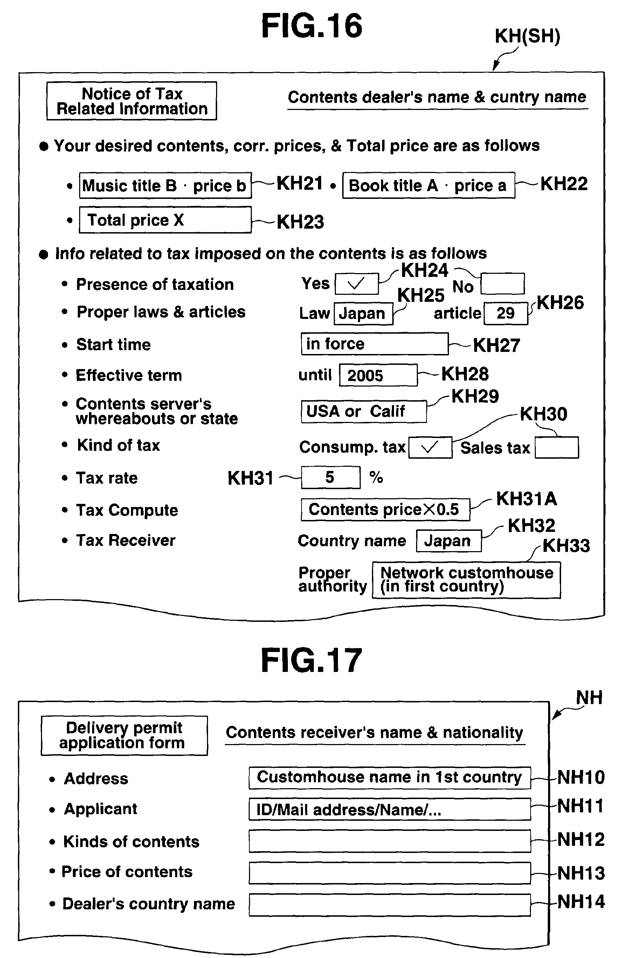

For example, as shown in FIG. 16, the "Notice of tax related information" includes below the names of the contents dealer 3 and his or her country, boxes KH21 and KH22 each indicating the name of the desired contents and their price, and a box KH23 indicating the sum of those prices, and boxes KH24-KH33 indicating "Presence of taxation" indicative of whether the delivered contents are taxable, proper "Law, Articles for taxation" indicating the grounds of taxation, "Time when taxation becomes effective", "Term" when the taxation is effective, "Contents server's whereabouts or state", "Kind of tax", "Tax rate", "Tax calculate" expression, "Tax Collection Authority", respectively.

When the contents receiver 1 receives this Notice, the contents receiver 1 stores this fact and the tax related information contained in the Notice in area 116 of RAM 11 thereof, as shown in FIG. 2 (step S4). This displays the contents of the notice of FIG. 16 on the display screen of the contents receiver 1.

When the contents receiver 1 receives a notice of delivery permit from the contents dealer 3, it submits a "Contents delivery permit application form" to the network customhouse 2 (step S5). As shown in FIG. 17, this form should contain data on "Address", "Applicant", "Kind of contents", "Price of contents", "Name of contents dealer's country", etc., in corresponding boxes NH10-NH14.

The network customhouse 2 receives the application form from the contents receiver 1 and stores it in RAM 250 (step N5 of FIG. 8), and also checks the application form to determine whether the delivery of the specified contents is permissible (step N7 of FIG. 8), by referring to "age limit information" stored beforehand in area 202 of table ROM 200 (step N6).

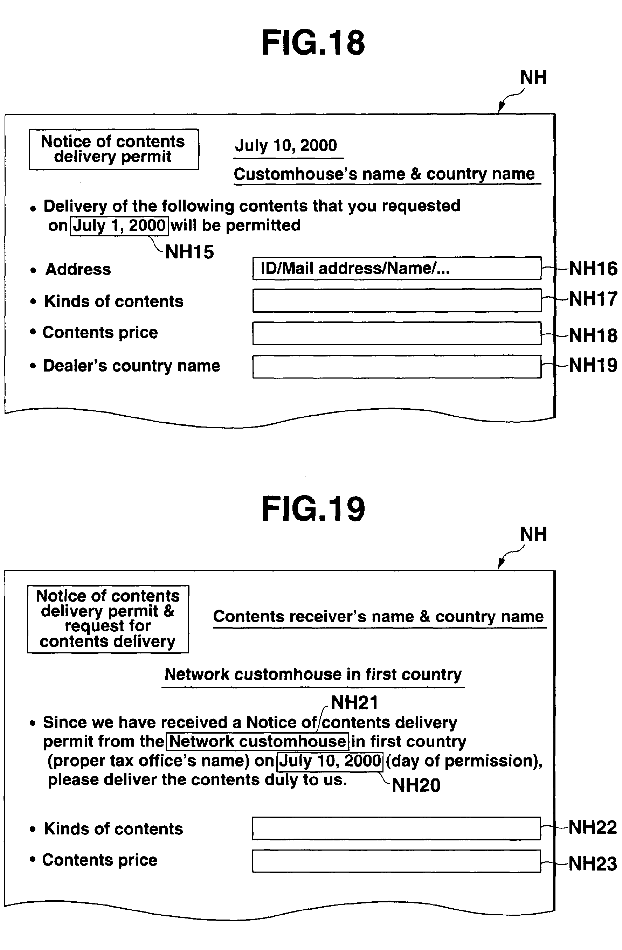

When the network customhouse 2 determines that the delivery of the contents is impermissible, it sends a notice to that effect to the contents receiver 1. Conversely, when the network customhouse determines that the delivery of the contents is permissible, it sends the contents receiver 1 a "Notice of contents delivery permit" with the contents of "Delivery of the following contents requested by you on July 1, 2000 will be permitted" appearing below the name of the "Network Customhouse" in the first country and the name of the first country, as shown in FIG. 18.

The contents receiver 1 receives the "Notice of contents delivery permit" from the network customhouse 2, stores it in RAM area 117, and displays it (step S6).

Then, the contents receiver 1 sends the contents dealer 3 the contents of the Notice and a Delivery permit & Request for delivery of the contents" (step S7). As shown in FIG. 19, this "Request" contains a description "Since we have received the Notice of contents delivery permit from a network customhouse (tax office) in first country on July 1, 2000, please deliver the following contents properly to us", "Kind of contents", "Price of contents", etc. The contents receiver 1 then stores data on the Delivery permit & Request as "Information on an order of contents delivery to contents dealer" in RAM area 118 thereof.

Contents dealer 3 receives data on the Delivery permit and Request from the contents receiver 1, stores it in RAM 350, and displays it (step C10 of FIG. 10).

After sending the contents dealer the delivery permit & Request, the contents receiver 1 requests the financier 8 to pay on his or her behalf to the contents dealer 3 the sum of the prices of the respective contents displayed on the picture of the contents dealer 3 of FIG. 14 beforehand, a carriage of the contents, and a tax to be imposed on the contents to be delivered (step S8). The tax includes a consumption tax, sales tax to be imposed on the delivered contents, a tax imposed on a charge necessary for delivery of the contents, etc.

The contents receiver 1 then downloads the contents delivered by the contents dealer 3 in area 112 of RAM 11 thereof (step S9). The contents includes music, song, video, game program, computer software data and related data such as music score data.

Due to the contents receiver 1 having downloaded the contents data from the second country, the contents dealer 3 is legally obliged to pay a tax to be imposed on the downloaded contents to the network customhouse 2 in the country or region to which the contents receiver 1 belongs.

After the contents receiver 1 has downloaded the contents, the contents dealer 3 displays completion of contents downloading on its homepage (step C13). This display is also made on the display screen of the contents receiver 1.

Then, the contents dealer 3 files a corresponding tax return with the network customhouse 2 over the Internet 100 (step C14). The network customhouse 2 receives the tax return and performs a tax collecting process (step N9). In this process, the tax on the delivered contents is paid by the contents dealer 3 to the network customhouse 2.

Then, the network customhouse 2 determines based on its internal data prepared beforehand whether the tax paid is proper. If it is, it sends a "Notice of completed of tax payment" to both of the contents receiver 1 and the contents dealer 3 or to the contents dealer 3 alone (step S10; N10 of FIG. 8).

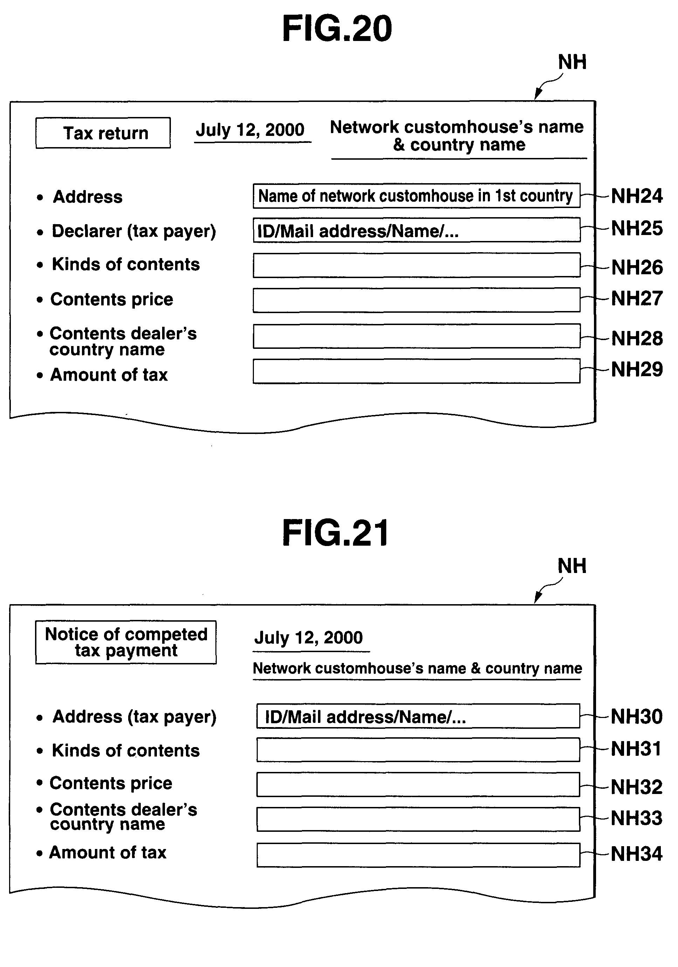

The "Notice of completed tax payment" has a format illustrated in FIG. 21. It contains data input by the network customhouse 2 into boxes NH30-NH34 indicating "Address (of tax payer)", "Kind of contents", "Price of contents", "Contents dealer's nationality and others", and "Amount of tax" below "Network customhouse's name in first country & Name of the first country".

Both the contents receiver 1 and the contents dealer 3 or the contents dealer 3 alone receive this Notice (steps S10, C15) to thereby complete delivery of the contents and related tax payment and collection.

### (1-2B) Flow of Network Processing by Network Customhouse;

A flow of network processing by a network customhouse in the first country (Japan) of FIG. 8 will be described next. The network customhouse 2 comprises a network Regional Taxation Bureau and opens its homepage NH (FIG. 17) on the network (step N1). When the network customhouse 2 receives an access to its homepage NH from the contents receiver 1 and the contents dealer 3, it sends a menu picture for the homepage NH to the contents receiver 1 and the contents dealer 3 (step N2).

Before the contents dealer 3 delivers the contents to the contents receiver, the network customhouse 2 receives an application for registration of himself or herself as a dealer from the contents dealer 3. This causes a "Dealer registration application form" illustrated in FIG. 11 to be displayed on the display unit of the terminal of the network customhouse 2.

The application form comprises a box NH1 for an "Address" where the name of the network customhouse in a country with which the contents dealer 3 intends to register himself or herself as a dealer should be input, a box NH2 for an "Applicant (dealer)" indicating the contents dealer, and a box NH3 for the "Name of the contents dealer's country and others", below "Network customhouse's name" that has opened the homepage.

The contents dealer 3 displays the overall dealer registration application form, obtained from the homepage NH of the network customhouse 2, on the display screen of the display 30 of the terminal of the contents dealer 3. The contents dealer 3 thus inputs required data into the displayed form.

First, the contents dealer 3 inputs into boxes NH1-NH3 the name of a network customhouse in the first country (Japan) for "Address (dealer)"; personal or identification data, which identifies the applicant, such as his or her ID, mail address and name(enterprise's name) for "Applicant (dealer)"; and the name of the contents dealer's country, respectively. As a result, the network customhouse 2 receives data on the completed application form from the contents dealer 3 (step N3) and stores it in RAM area 252 of the dealer 3.

Thereafter, the network customhouse 2 performs a predetermined registering process, and then sends the contents dealer 3 a "Notice of completed dealer registration & ID issue" indicating completion of the dealer registration and issue of an ID of the contents dealer (step N4).

This Notice includes a format illustrated, for example, in FIG. 12. It contains below "Network customhouse's name" data that identifies the contents dealer input to a box NH4 for an "Address (dealer)"; the contents dealer's ID number given by the network customhouse 2 and input to a box NH5 for an "ID number"; and data input to a box NH6 for "Conditions of contents delivery". In addition, it contains a note about the given ID number, that is, "Please add the ID number to your tax payment form when you pays the tax after the contents delivery".

The contents dealer 3 receives the "Notice of completed registration & ID issue" (step C3 of FIG. 10), and stores data on this Notice in RAM area 350A thereof (FIG. 4B).

In the above process, the contents dealer 3 in the second country registers himself or herself as a dealer with the network customhouse in the first country over the Internet 100 before delivery of the contents to the contents receiver.

Thereafter, the network customhouse 2 receives a "Contents delivery permit application form" sent by the contents receiver 1 and stores it in RAM 250 (step N5). Then, the network customhouse 2 checks to see if the delivery of the contents is permissible, by referring to the information on the age limits stored previously in the areas 201-203 of table ROM 200 (step N6).

When the customhouse 2 determines that the delivery of the contents should not be permitted as in the previous case, it reports this determination to the contents receiver 1 without performing steps N8-N10 to thereby terminate the processing in the flowchart of FIG. 8. Conversely, if the customhouse 2 determines that the delivery is permissible, it sends a "Notice of contents deliver permit" of FIG. 18 to the contents receiver 1.

If the network customhouse 2 receives a "Contents delivery permit application form" from the contents dealer 3, it sends the Notice in step N8 to contents dealer 3.

When the contents receiver 1 receives "Notice of contents delivery permit" (FIG. 18), the contents receiver stores and displays it (step S6).

When the contents dealer 3 delivers the desired contents to the contents receiver 1 over the network, the contents dealer 3 simultaneously notifies the network customhouse 2 of the ID, mail address, etc., of the contents dealer, and the ID number "12345" given to the contents dealer 3 by the network customhouse 2, similar to those data described in the "Notice of completed registration & ID issue" of FIG. 12 (step N8A).

The contents dealer's ID, mail address, ID number, etc., are stored in areas 252, 253 of RAM 250 of network customhouse 2, as shown in FIG. 3A. Thus, the network customhouse 2 can grasp through the ID number, etc., given to the contents dealer 3 that the contents dealer 3 in the second country delivered the contents to the contents receiver in the first country over the network.

Then, when the contents dealer 3 files a self-assessment tax return with the network customhouse 2 over the network, the network customhouse 2 performs a tax return receiving and tax collecting process (step N9). In this process, the tax produced due to the delivery of the contents is paid from the contents dealer 3 to the network customhouse 2.

In the tax return receiving and tax collecting process, a financial institution may pay the tax to the network customhouse 2 on behalf of the contents dealer 3 in its name or as its branch. Alternatively, the contents dealer 3 may deposit some money beforehand in an account opened with the network customhouse 2 and each time a tax is imposed on contents delivered, the tax may be paid from the account to the network customhouse 2.

When the tax collection is completed in this way, the network customhouse 2 determines based on the prepared internal data whether the paid amount of tax is proper. If it is, the network customhouse 2 sends a "Notice of completed tax payment" to both the contents receiver 1 and the contents dealer 3 or to the contents dealer 3 alone (step N10).

### (1-2C) Flow of Network Processing by Financier (FIG. 9):

A flow of network processing by a financier will be described next with reference to FIG. 9. The financier 8 starts up its terminal (step K1), opens his homepage on the network (step K2), and then settles an account with the contents dealer 3 in accordance with a request of the contents receiver 1 (step K3).

In this settling process, the financier 8 pays into the contents dealer's account an amount of money equal to the sum of the contents price, service charge and the imposed tax indicated beforehand by the contents dealer 3. Then, the financier 8 sends a Notice of completed tax payment to the contents receiver 1 and the contents dealer 3 (step K4).

### (1-2D) Flow of Network Processing by Contents Dealer (FIG. 10):

A flow of network processing by the contents dealer will be described with reference to FIG. 10. The contents dealer 3 includes a network provider and a sales site. In FIG. 10, the contents dealer 3 opens his or her homepage KH (FIG. 13) on the network (step C1). Before delivering the contents to the contents receiver 1, the contents dealer 3 accesses the homepage NH of the network customhouse 2 in the first country or region to which the contents receiver 1 belongs, downloads a menu picture from the homepage, inputs data in accordance with guides indicated on the menu picture, and files a "Dealer registration application form" with the network customhouse 2 over the Internet 100 (step C2).

As described above, when the network customhouse 2 receives the "application form" from the contents dealer 3 (step N3), it performs a predetermined registering process. Then, in step N4 the network customhouse 2 sends the contents dealer 3 a "Notice of completed registration & ID issue" of FIG. 12. This notice contains the contents dealer's ID and others, a "Given ID number" (in this example, "12345") given by the network customhouse 2, "Contents delivery conditions", and a "Note of the given ID" (step C3). The contents dealer 3 receives and stores these data in his or her RAM area 350A (FIG. 4B).

Thus, before the delivery of the contents to the contents receiver 1 in the first country, various data necessary for registration of dealership such as the "Given ID number of the contents dealer 3 in the second country is sent over the network to the network customhouse 2 in the first country, and registration of the dealership is made.

Then, if the contents receiver 1 accesses the homepage NH of the contents dealer 3, the contents dealer 3 sends a corresponding menu picture to the contents receiver 1 (step C4). Thus, as shown in FIG. 13, the contents receiver 1 checks off respective boxes KH1-KH5 of the menu picture concerning the contents that the contents receiver 1 desires to acquire.

As shown in FIG. 14, when before the contents delivery the contents receiver 1 inputs necessary data to boxes KH6-KH8 for the "contents and their prices" and the "sum of the prices", boxes KH9 and KH10 for confirming purposes and boxes KH11-KH17 for personal data on the homepage of the contents dealer 3, these data are stored as data "prior data" in a prior data area 351 of RAM 350 (step C5).

These data are also stored as "data necessary for a request for delivery of contents" in data area 352 of RAM 350 (step C6). Then, the contents dealer 3 determines by referring to the prescribed age limits (step C7) whether delivery of the contents to the contents receiver 1 is permissible (step C8).

If the contents dealer 3 determines that the delivery of the contents is impermissible, the contents dealer 3 sends a Notice of rejection of delivery permit with proper laws and their articles being indicated, as shown in FIG. 15. As shown in FIG. 15, this Notice states to the effect that, for example, "Your age" is "16", and "Your address (nationality and state)" is in "Japan" below the "contents dealer's name and its nationality", and that delivery of the contents is not permitted under the stipulation of "Japanese" law, article "29".

Conversely, if the contents dealer 3 determines that delivery of the contents is permissible, the contents dealer 3 informs the contents receiver 1 of it. When the contents are delivered from the contents dealer 3 in the second country to the contents receiver in the first country, the contents dealer 3 notifies the contents receiver 1 of information related to a tax to be imposed on the delivered contents by the network customhouse 2 in the first country (step C9 of FIG. 10).

For example, as shown in FIG. 16, the tax related information contains various data input to boxes KH21-KH23 indicating the respective contents, their prices, and the total sum of the prices, and boxes KH24-KH33 indicating "Presence of taxation", "Proper laws and articles", "Start time when the laws and articles become effective", "Effective term when the laws and articles are effective", "Contents server's whereabouts or state", "Kinds of the tax", "Tax rate", "Calculate expression" for taxation, "Tax receiver".

The contents dealer 3 stores data on the Notice, and the tax related information in the respective locations of RAM area 353 of FIG. 4B (step C9).

Then, as described above, the contents receiver 1 sends this Notice to the contents dealer 3 (step S7). Then, the contents dealer 3 receives and stores this data in RAM area 354 and displays it (step C10 of FIG. 10).

As shown in FIG. 19, this Notice contains data on "Kinds of contents", "Contents price", etc. The contents dealer 3 stores the data as "information on an order for contents delivery to the contents dealer" in RAM area 355 thereof.

When the contents dealer 3 then receives information on settlement of an account with the contents receiver for the contents prices, service charges and tax money from the contents receiver 1 or the financier 8, the contents dealer 3 stores and displays the information (step C11). Then, the contents dealer 3 sends the contents receiver 1 a Notice of contents delivery permit. Then, when the contents dealer 3 receives a request for delivery of contents from the contents receiver 1, the contents dealer 3 delivers to the contents receiver 1 the contents, the delivery of which was permitted, over the network (step C12).

Simultaneously, the contents dealer 3 notifies the network customhouse 2 of the contents dealer's ID, mail address, etc., and the Given ID number given-by the network customhouse 2, in a Notice similar to the Notice of completed registration and ID issue as shown in FIG. 12 (step 12A).

As shown in FIG. 4B, the contents dealer's ID, mail address, etc., and the "Given ID number" are stored in the contents dealer's RAM areas 350A and 351. The contents dealer's ID, mail address, and the "Given ID number" are stored in RAM areas 252 and 253 of the network customhouse, as shown in FIG. 3A.

Thus, the network customhouse 2 is able to grasp based on the contents dealer's Given ID number and others that the contents were delivered over the network from the contents dealer 3 in the second country to the contents receiver 1 in the first country.

The contents receiver 1 downloads in RAM area 112 thereof the contents delivered from the contents dealer 3 in step C12 (step S9). This legally puts the contents dealer 3 under an obligation to pay a tax on the downloaded contents to the network customhouse 2 in the country or region to which the contents receiver belongs.

When the contents receiver 1 has finished downloading the desired contents, the contents dealer 3 displays on its homepage that the contents have been downloaded (step C13). This displays on the display screen of the contents receiver 1 that the contents have been downloaded.

The contents dealer 3 then remits the network customhouse 2 in the first country an amount of money or a tax on the downloaded contents to thereby file a corresponding self-assessment tax return with the network customhouse 2 (step C14).

As shown in FIG. 20, the tax return filing process is performed by inputting data indicating "Address", "Declarer (tax payer)", "Kinds of contents", 'Trice of contents", "Contents dealer's country name, etc.", and "Amount of tax" into corresponding boxes NH24-NH29 displayed on the homepage of the network customhouse 2 in the first country.

When the network customhouse 2 receives data on the tax return over the network from the contents dealer 3, the network customhouse 2 performs a tax return receiving and tax collecting process (step N9). This process is different from the corresponding one performed in the first embodiment. In this case, the customhouse 2 may allow the financial institution to pay the tax to the network customhouse 2 on behalf of the contents dealer 3 in its name or as a branch of the contents dealer 3. Alternatively, the customhouse 2 may allow the contents dealer 3 to deposit some money in an account opened with the network customhouse 2 and each time a tax is produced due to delivery of contents, the tax may be paid from the account to the network customhouse 2.

When the tax collecting process is completed in this way, the network customhouse 2 determines whether the collected amount of tax is proper. If it is, the network customhouse 2 sends a Notice of completed tax payment to both the contents receiver 1 and the contents dealer 3 or the contents dealer 3 alone (step N10). This Notice comprises a format illustrated in FIG. 21, and contains data inputted by the network customhouse 2 to boxes NH30-NH34 and indicating "Address (tax payer)", "Kind of contents", "Contents price", "Contents dealer's country name, etc.", and "Amount of tax", respectively, below the name of the network customhouse in the first country and the name of the first country.

Both the contents receiver 1 and the contents dealer 3 or the contents dealer 3 alone receive it (steps S10, C15) to thereby complete the contents delivery and related tax payment and collection.

### (1-3) Effects of the First Embodiment:

As described above, according to the first embodiment, the contents dealer 3 in the second country (for example, USA) beforehand registers over the Internet 100 himself or herself as a dealer with the network customhouse 2 in the same first country (for example, Japan) as the contents receiver 1. Then, the contents dealer 3 delivers contents to the contents receiver 1 in the first country in accordance with a request of the contents receiver 1. The contents receiver 1 downloads the contents on the terminal thereof. As a result, the contents dealer 3 in the second country is obliged to pay a tax on the delivered contents to the network customhouse 2 in the first country. The contents dealer 3 in the second country or the financier 8 who acts on his behalf in the first country can securely and rapidly perform over the Internet 100 a tax payment process to the network customhouse 2 in the first country.

Since the contents dealer 3 has beforehand registered himself or herself as the dealer with the network customhouse 2 of the first country, the network customhouse 2 in the first country can rapidly and securely collect taxes such as a consumption tax, a sales tax, etc., produced due to the delivery of the contents from the second country to the first country in accordance with the tax rates and conditions stipulated under the law in the first country.

### (2) [Second Embodiment]

This embodiment also relates to the "Dealer registering and tax paying system". In this embodiment, the network customhouse 2 that comprises a tax collecting organ or authority in the "first region" (including a specified economic area such as a state or district, which applies also to first regions described in other embodiments) to which the contents receiver belongs places the contents dealer in the "second region" of that country under an obligation to register himself or herself as a dealer with the network customhouse. Thus, in the transaction of contents between the contents dealer and the contents receiver, the tax collecting organ in the first region to which the contents receiver belongs collects from the registered contents dealer the tax imposed on the delivered contents.

### (2-1) Composition:

It is assumed in the first embodiment of FIG. 1 that the contents receiver 1, network customhouse 2 and financier 8 are in the first country whereas the contents dealer 3, certifying/accounting server 4, contents maker 5, and contents server 6 are in the second country.

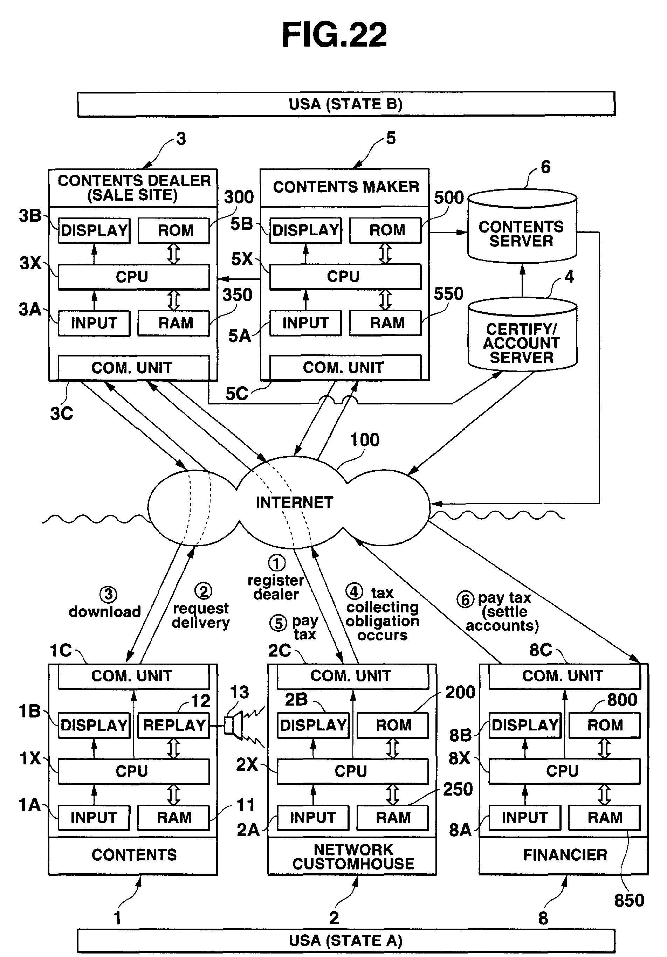

FIGS. 22-24 illustrate the second embodiment. As shown in FIG. 22, it is assumed in the second embodiment that a contents receiver 1, network customhouse 2 and financier 8 are in a state A in a country (in this example, USA) and that a contents dealer 3, certifying/accounting server 4, contents maker 5, and contents server 6 are in a state B of that country.

In this embodiment, each of the contents receiver 1, network customhouse 2, contents dealer 3, certifying/accounting server 4, contents maker 5, and contents server 6 is the same in construction as a corresponding one of them in the first embodiment.

### (2-2) Operation and Effects of the Second Embodiment:

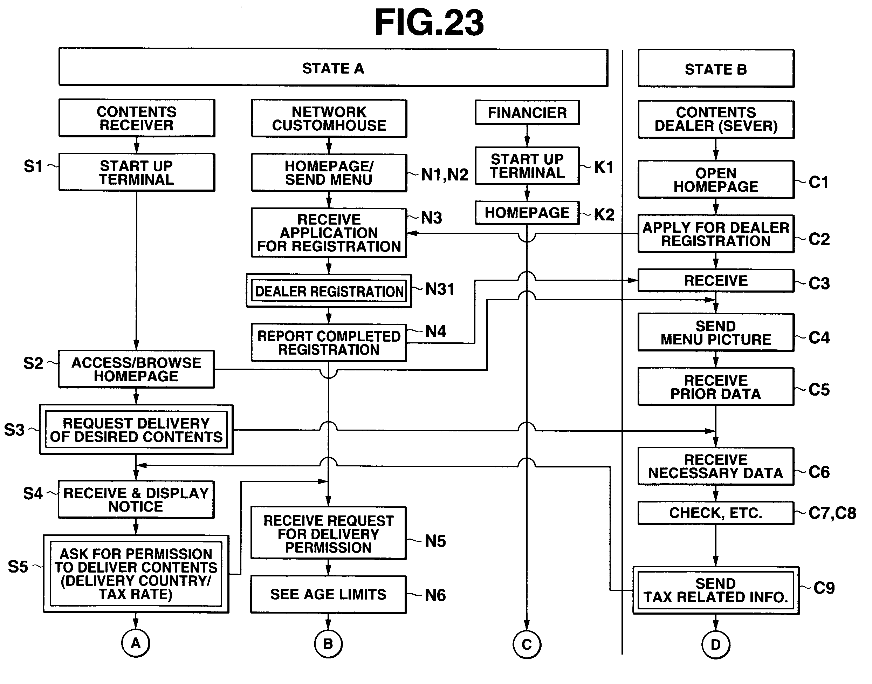

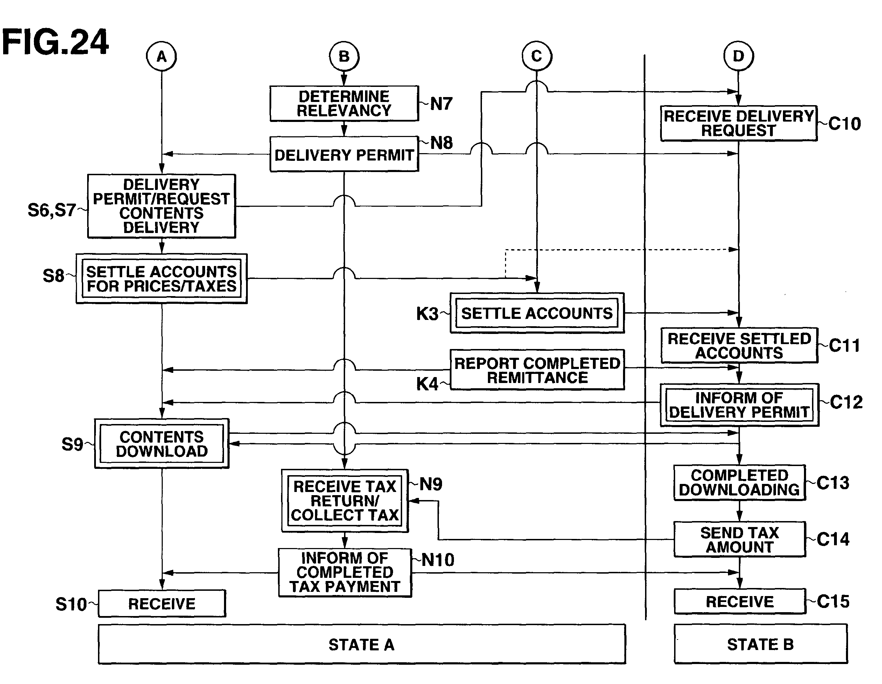

As shown in a series of interactions performed in the system of FIGS. 23 and 24, the contents receiver 1, network customhouse 2, and financier 8 perform in the state Asteps S1-S10 of FIG. 7, steps N1-N10 of FIG. 8, and steps K1-K4 of FIG. 9, respectively, as in the first embodiment. The contents dealer 4 performs steps C1-C15 of FIG. 10 in the state B as in the first embodiment.

The contents dealer 3 in the state B beforehand registers himself or herself as a dealer with the network customhouse 2 in the state A. In accordance with a request from the contents receiver 1 in the state A, the contents dealer 3 delivers the requested contents to the contents receiver 1 and the contents receiver 1 downloads the contents on its terminal. As a result, when the contents dealer 3 in the state B is obliged to pay the corresponding tax to the network customhouse 2 in the state A, the network customhouse 2B in the state A can rapidly and securely collect the tax from the contents dealer 3 in the state B (or the financier 8 in the state A that settles accounts concerned). The contents dealer 3 in the state B can securely pay to the network customhouse 2 the tax, imposed on the contents delivered from the state B to the state A, in accordance with the tax rate, tax paying conditions, etc., stipulated by the law of the state A.

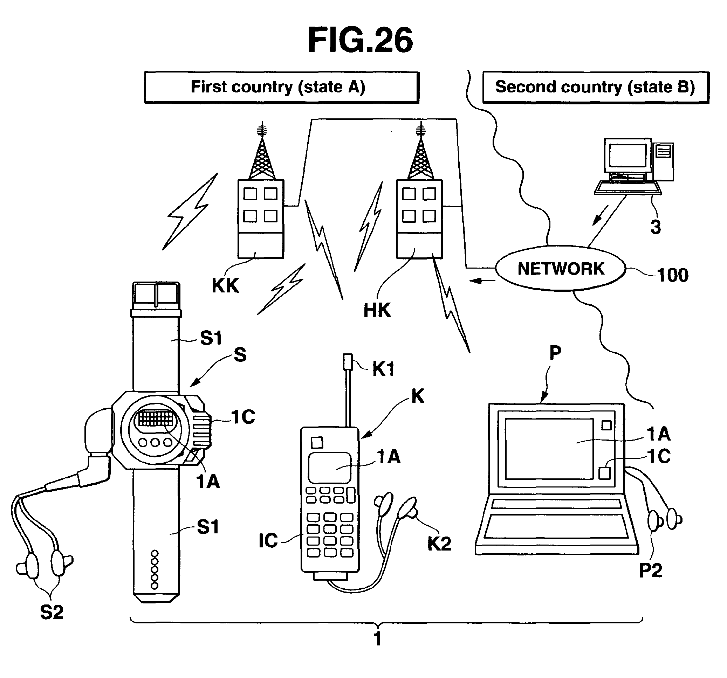

### (2-3) Modification (FIG. 26):

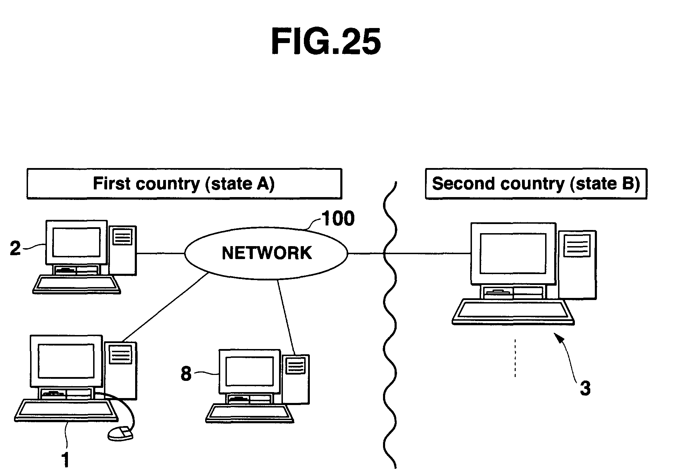

In the first and second embodiment as shown in FIG. 25, the contents receiver 1 includes a PC (Personal Computer). The network customhouse 2, contents dealer 3, contents maker 5 and financier 8 each comprise a general-purpose computer. As shown in FIG. 26, the contents receiver may comprise a wristwatch type device S that is composed of a wristband S1, an earphone S2, a display 1A, and a communication unit 1C; a mobile telephone type device that includes an earphone K2, a display 1A and a communication unit 1C with an antenna K1; or a portable personal computer type device P that includes an earphone P2, a display 1A and a communication unit 1C.

While in the above respective embodiments it is illustrated that contents are delivered directly from the overseas contents dealer 3 to the contents receiver over the network and that the contents dealer 3 pays the required tax to the network customhouse 2 over the network, the contents may be delivered and the tax may be paid over a system including a base station KK or a broadcasting station HK, the network 100 and their terminals.

### (2-4)[Conclusions and Effects of First and Second Embodiments]:

As described above, the embodiment involves contents transaction tax collecting method comprising, as shown in FIG. 1, the step of:
in response to contents (data or information, e.g. on music, game programs, movies or the like) being delivered over a network (e.g. the internet 100) from a contents sender (contents dealer 3 of FIG. 1) belonging to a country (e.g. USA) or local area (e.g. any particular state "B" of USA) to a contents receiver (1) in a different country ( e.g. Japan) or local area (any particular state "A of USA) in accordance with a request of the contents receiver (e.g. S3 → C6 → S9), causing tax collecting authority (e.g. a network customhouse 2 ) in the different country or local area to collect over the network 100 a tax on the contents delivered from the contents sender (e.g. C14 → N9).

As shown in FIGS. 5 and 6, the embodiment also involves a contents transaction tax collecting method comprises the steps of:
registering as a contents dealer a contents sender (e.g. contents dealer 3) belonging to a country (e.g. USA) or local area based on an application for registration of the contents sender (e.g. C2) made electronically by the contents sender over a network, before the contents sender delivers contents to a contents receiver (e.g. consumer 1) in a different country (e.g. Japan) or local area (N3, N31); and
in response to the contents receiver having received the contents delivered from the contents sender, after the contents sender has been registered in the registering step (e.g. S2, S6, S7 → S9), causing a tax collection authority (e.g. a network customhouse 2) in the different country or local area to collect over the network a tax on the contents delivered from the contents sender (S9).

As shown in FIGS. 5 and 6, the embodiment also involves a contents transaction tax collecting method in which when a contents receiver (e.g. consumer 1) in a first country (e.g. Japan) or local area receives, by downloading, contents from a contents sender (contents dealer 3) in a second country (e.g. USA) over a network, a tax collection authority (e.g. a network customhouse 2) in the first country or local area collects a tax on the delivered contents from the contents sender via the network, the method comprising the steps of:
receiving beforehand (e.g. N3) an application for registration of the contents sender as a contents dealer made electronically by the contents sender over the network (e.g. C2), before the contents sender delivers the contents to the contents receiver;
determining based on the received application for registration if delivery of the contents from the contents sender to the contents receiver should be permitted or not; and
in response to the determining step determining that the delivery of the contents from the contents sender to the contents receiver should be permitted, registering the contents sender and sending the contents sender a notice of permission over the network (e.g. N31, S5 → N5, N7, N8); and
in response to the contents being downloaded from the contents sender to the contents receiver after the notice of permission is sent to the contents sender (e.g. S9), causing a tax collection authority(e.g. network customhouse 2) in the first country or local area to collect over the network a tax on the contents delivered from the contents sender to the contents receiver (N9).

As shown in FIGS. 5 and 6, the embodiment also involves a content delivery tax paying method comprises the step of:
in response to contents being downloaded over a network from a contents sender in a country or local area to a contents receiver in a different country or local area (S9) in accordance with the contents receiver's request (e.g. S3), causing the contents sender to pay a tax on the delivered contents to a tax collection authority in the different country or local area over the network (e.g. N9).

As shown in FIGS. 5 and 6, the embodiment also involves a content delivery tax paying method comprises the steps of:
applying for registration, as a dealer, of a contents sender belonging to a country or local area, before the contents sender delivers contents to a contents receiver in a different country or local area (e.g. C2 → N3, N31);
downloading the contents delivered from the contents sender to the contents receiver (e.g. S9) after the contents sender has received a notice that the registration of the contents sender has been made based on the application (e.g. N4); and
paying over the network a tax on the delivered contents from the contents sender to a tax collection authority in the different country or local area (e.g. N9).

As shown in FIGS. 1, 5 and 6, the embodiment also involves a contents transaction tax processing method comprising the steps of:
in response to a contents receiver (e. g. consumer terminal 1) belonging to a first country or local area and having a first terminal downloading via a network contents from a contents sender(e. g. contents dealer terminal 2) belonging to a second country or local area and having a second terminal(e.g. S9), paying via the network a tax on the downloaded contents from the contents sender to a tax collection authority belonging to the first country or local area and having a third terminal (e. g. network custom terminal 2) (e. g. C14) and causing the tax collection authority to receive the paid tax (e. g. N9).

As shown in FIGS. 1, 5 and 6, in the contents transaction tax processing method according to the embodiment, the first terminal (e. g. contents receiver terminal 1) comprises:
delivery requesting means (e. g. 1A, 1C of FIG. 1, ②; S3) for requesting delivery of the contents from the contents sender; and
downloading means (e. g. 1A, 1C, 11, ③ of FIG. 1; S9) for downloading the requested contents from the contents sender over the network,
the second terminal (e. g. contents sender terminal 3) comprises:
   applying means (e. g. 3A, 3C, ① of FIG. 1; C2) for applying registration of the contents sender via the network to the tax collection authority before the contents are delivered to the contents receiver from the contents sender;
   delivering means (e. g. 3A, 3C, ③ of FIG. 1; S9) for delivering the requested contents via the network to the contents receiver after the registration of the contents sender has been made based on the application; and
   paying means (e. g. 3A, 3C, ⑤ of FIG. 1; C14), responsive to the contents being downloaded to the contents receiver by said delivering means, for paying a tax on the downloaded contents via the network to the tax collection authority, and
   the third terminal (e. g. network customhouse terminal 2) comprises:
      registering means (e. g. 2A, 2C, ① of FIG. 1; N31) for receiving the application for registration of the contents sender made by said applying means and for registering the contents sender as a dealer; and
      tax collecting means (e. g. 2A, 2C, ④⑤ of FIG. 1; N9), responsive to the contents receiver downloading the contents from the contents sender via the network after the registration of the contents sender was made by said registering means, for collecting a tax on the downloaded contents via the network from the contents sender.

As shown in FIGS. 5 and 6, the embodiment also involves a contents transaction tax information providing method comprises the step of:
in response to a content receiver in a first country or local area requesting delivery of contents from a contents sender in a second country or local area via a network (e. g. S3), causing the contents sender to inform the contents receiver of information on a tax on the contents (e. g. presence/absence of taxation on the contents, tax rate, a time and term of the taxation) via the network (e. g. C6-C9).

As shown in FIGS. 5 and 6, the embodiment also involves a recording medium that has recorded a computer-executable contents transaction tax collecting program comprising the step of:
in response to contents being delivered over a from a contents sender belonging to a country or local area to a contents receiver (contents consumer 1) in a different country (e.g. Japan) or local area (any particular state "A of USA) in accordance with the contents receiver's request (e.g. S3 → C6 → S9), causing tax collecting authority (e.g. a network customhouse) in the different country or local area to collect over the network a tax on the contents delivered from the contents.

As shown in FIGS. 5 and 6, the embodiment also involves a recording medium that has recorded a computer-executable contents transaction tax collecting program comprising the steps of:
registering a contents sender belonging to a country or local area based on an application for registration of the contents sender made electronically by the contents sender over a network, before the contents sender delivers contents to a contents receiver in a different country or local area (e. g. C2 → N3 → N4); and
in response to the contents sender delivering the contents to the contents receiver (e. g. S9), after the contents sender has been registered in the registering step, causing a tax collection authority (e.g. a network customhouse) in the different country or local area to collect over the network a tax on the contents delivered from the contents sender (e.g. C14 → N9).

As shown in FIGS. 5 and 6, the embodiment also involves a recording medium that has recorded a computer executable program which carries out a contents transaction tax collecting method in which when a contents receiver in a first country or local area receives, by downloading, contents from a content sender in a second country over a network (e. g. S9), a tax collection authority (e.g. a network customhouse) in the first country or local area collect a tax on the delivered contents from the contents sender via the network (e.g. C14 → N9), the method comprises the steps of:
receiving beforehand an application for registration of the contents sender as a dealer made electronically by the contents sender over the network (e.g. C2 → N3), before the contents sender delivers the contents to the contents receiver;
determining based on the received application if delivery of the contents from the contents sender to the contents receiver should be permitted or not; and
in response to the determining step determining that the delivery of the contents from the contents sender to the contents receiver should be permitted, registering the contents sender as a dealer and sending the contents sender a notice of permission over the network (e.g. N31 → N4); and
in response to the contents being downloaded from the contents sender to the contents receiver after the notice of permission is sent to the contents sender (e.g. S9), causing a tax collection authority (e.g. network customhouse) in the first country or local area to collect over the network a tax on the contents delivered from the contents sender to the contents receiver (N9).

As shown in FIGS. 5 and 6, the embodiment also involves a recording medium that has recorded a computer executable content delivery tax paying program comprising the step of:
in response to contents being downloaded from a network from a contents sender in a country or local area to a contents receiver in a different country or local area in accordance with a request of the contents receiver (e.g. S3 → C6 → S9), causing the contents sender to pay a tax on the delivered contents over the network to a tax collection authority in the first country or local area (e.g. C14 → N9).

As shown in FIGS. 5 and 6, the embodiment also involves a recording medium that has recorded a computer executable content delivery tax paying program comprising the steps of:
applying for registration of a contents sender as a contents dealer belonging to a country or local area, before the contents sender delivers contents to a contents receiver in a different country or local area (e.g. C2);
downloading the contents delivered from the contents sender to the contents receiver (e.g. S9) after the contents sender has received a notice that the registration of the contents sender has been made based on the application (e.g. N31, N4); and
causing the contents sender to pay a tax on the delivered contents to a tax collection authority in the different country or local area over the network (e.g. C14 → N9).

As shown in FIGS. 5 and 6, the embodiment also involves a recording medium that has recorded a computer executable contents transaction tax information providing program comprising the step of:
in response to a content receiver in a first country or local area requesting delivery of contents from a contents sender in a second country or local area via a network (e. g. S3 → C6), causing the contents sender to inform the contents receiver of information on a tax on the contents (e. g. presence/absence of taxation on the contents, tax rate, etc.) via the network (e. g. C9).

As described above, according to the embodiment, in response to contents being delivered through the network from a contents sender belonging to the first-mentioed country or region to the contents receiver in the different country or region in accordance with the request of the contents receiver, the tax collecting authority in the different country or region can rapidly and securely collect through the network the tax on the contents delivered from the contents sender.

According to the embodiment, the contents sender belonging to the country or region is registered as the contents dealer based on the application for registration of the contents sender made electronically by the contents sender through the network, before the contents sender delivers contents to the contents receiver in the different country or region. When the contents receiver receives the contents delivered from the contents sender, after the contents sender has been registered in the registering step, the tax collection authority in the different country or region can rapidly and securely collect through the network the tax on the contents delivered from the contents sender.

According to the embodiment, when the contents receiver in the first country or region downloads contents fdelovered by the contents sender in the second country through the network, the tax collection authority in the first country or region can rapidly and securely collect the tax on the delivered contents from the contents sender via the network.

According to the embodiment, when contents are downloaded through the network from the contents sender in the first-mentioned country or region to the contents receiver in the different country or region in accordance with a request of the contents receiver, the contents sender can rapidly and securely pay the tax on the delivered contents to the tax collection authority in the different country or region through the network.

According to the embodiment, the contents sender belonging to the first-mentioned country or region electronically applies for registration as a dealer at the network customhouse in the different country before the contents sender delivers contents to the contents receiver in the different country or region. The contents senders delivers the contents from the contents sender to the contents receiver after the contents sender has received a notice that the registration of the contents sender has been made based on the application. The contents dealer then can rapidly and securely pay through the network the tax on the delivered contents from the contents sender to the tax collection authority in the different country or region.

According to the embodiment, when the contents receiver belonging to the first country or region and having the first terminal downloads via the network contents from the contents sender belonging to the second country or region and having the second terminal, the contents dealer pays via the network the tax on the downloaded contents to the tax collection authority belonging to the first country or region and having the third terminal and the tax collection authority can rapidly and securely receive the paid tax.

According to the embodiment, when the content receiver in the first country or region requests delivery of contents from the contents sender in the second country or region via the network, the contents sender informs the contents receiver of information on the tax on the contents via the network. Thus, the contents receiver can rapidly know information on the contents.

According to this embodiment, a tax collecting system suitable and effective for collecting taxes imposed on the contents transaction is established in which taxes can be paid in a lump to the tax collection authority from the contents dealer who is permitted to deliver contents by beforehand registration of the dealer itself in the tax collection authority.

### (B) Corporation Registering and Tax Collecting System:

Before description of a third embodiment, a corporation registering and tax collecting system will be described next by which (1) international transactions of contents can be grasped securely, (2) who are tax payers can be clarified and (3) tax collection is ensured irrespective of a country where the contents dealer lives.

In this system, a corporative dealer engaging in economic activities in a first country or region (including a specified economic region such as a state, a district or the European Community) and designated by a contents dealer in a second country or region (The designated dealer is hereinafter referred to as an in-area dealer) is obliged to register with the Legal Affairs Bureau of the first country himself or herself as a tax payer to a tax collection organ or or authority or a network customhouse in the first country. In an international transaction of contents the tax collection organ or authority in the first country or region collects from the registered in-area dealer the tax imposed on the delivered contents. It is noted that the in-area dealer is not necessarily required to have a capital relation to the contents dealer.

In the undermentioned description and and attached claims, the "registration" means that of a qualification such as a corporation at the Legal Affairs Bureau in a country to engage in economic activities in the country.

### (3) [Third Embodiment]

This embodiment relates to the corporation registering and tax collecting system. That is, the (in-area) dealer registered as a corporation in the first country in accordance with a request of the contents dealer in the second country pays to a tax collection organ or authority in the first country a tax on contents delivered to the contents receiver in the first country from the contents dealer in the second country. The tax collection organ collects the tax from the in-area dealer.

### (3-1) Composition:

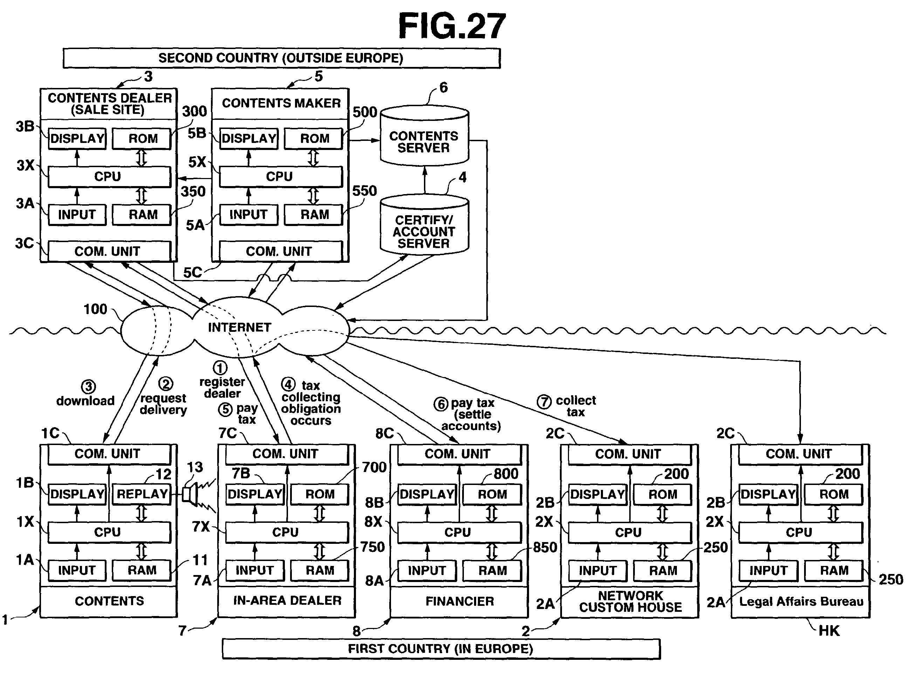

As shown in FIG. 27, in a system of this embodiment, a contents receiver 1, network customhouse 2, a registered corporate in-area dealer 7, and a financier 8 are in a first country (for example, any one of the European countries). A contents dealer or sender 3, a certifying/accounting server 4, a contents maker 5, and a contents server 6 are in a second country (outside the European region).

As in the first embodiment of FIG. 1, the contents receiver's terminal 1 comprises a CPU 1X, an input unit 1A, a display 1B, a communication unit 1C, a RAM 11, a contents replay unit 12, a speaker 13.

The network customhouse 2, contents sender 3, contents maker 5, in-area dealer 7 and financier 8 each comprise a general-purpose computer. As in the first-embodiment of FIG. 1, the network customhouse 2 comprises a CPU 2X, an input unit 2A, a display 2B, a communication unit 2C, a ROM 200 and a RAM 250. The contents dealer 3 comprises a CPU 3x, an input unit 3A, a display 3B, a communication unit 3C, a ROM 300 and a RAM 350. The contents maker 5 comprises a CPU 5x, an input unit 5A, a display 5B, a communication unit 5C, a ROM 500 and a RAM 550. The in-area dealer 7 comprises a CPU 7x, an input unit 7A, a display 7B, a communication unit 7C, a ROM 700 and a RAM 750. The financier 8 comprises a CPU 8x, an input unit 8A, a display 8B, a communication unit 8C, a ROM 800 and a RAM 850. The contents receiver 1, network customhouse 2, contents dealer 3, certifying/accounting server 4, contents maker 5, contents server 6, in-area dealer 7 and financier 8 are connectable over the Internet 100 to each other as in the first embodiment of FIG. 1. The contents dealer 3, the certifying/accounting server 4 and the contents server 6 are also connected through their dedicated lines to each other.

The RAM 11 of the contents receiver's terminal 1 comprises a display register 111 and storage areas 112-120 as in the first embodiment of FIG. 2.

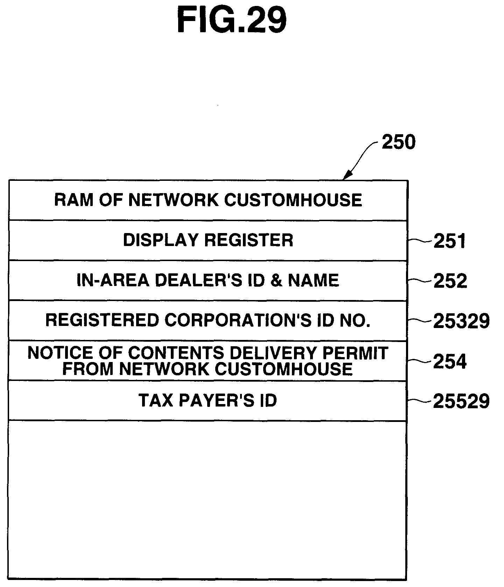

The network customhouse 2 comprises a table ROM 200 having storage areas 201-203 as in the first embodiment of FIG. 3A. As shown in FIG. 29A, the RAM 250 of the network customhouse 2 comprises a display register 251 and storage areas 252 and 254 similar to that of the first embodiment of FIG. 3B. The area 25329 stores the ID number given by the network customhouse 2 based on registration of the contents dealer as a corporation in the first country. The area 25529 stores data on the ID and others of the in-area dealer 7 as a tax payer to the network customhouse 2.

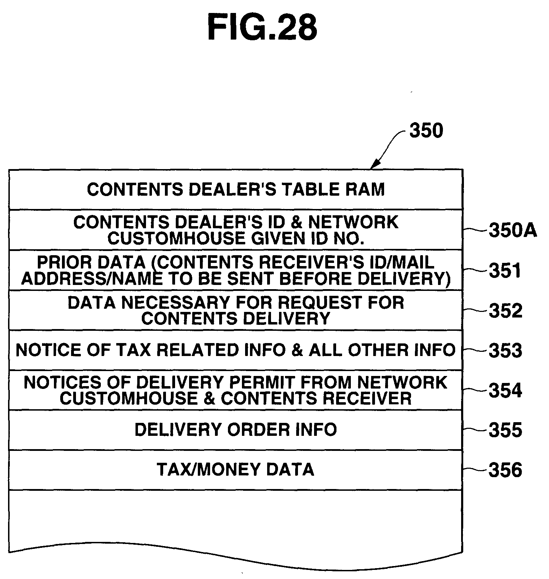

The contents dealer's terminal 3 comprises a table ROM 300 having storage areas 301-308 as in the first embodiment of FIG. 4A. The contents dealer's terminal 3 comprises a table RAM 350 having storage areas 351-357 (FIG. 28) as in the first embodiment of FIG. 4B.

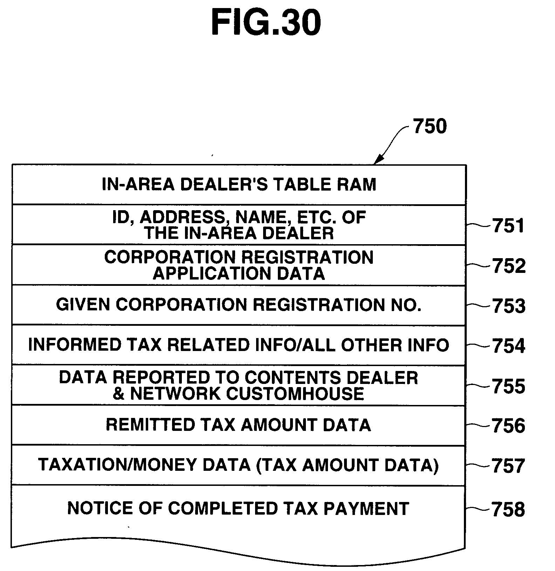

As shown in FIG. 30, the in-area dealer's terminal 7 has a table RAM 750 having storage areas 751-758. The area 751 stores the in-area dealer's ID, address and name. The area 752 stores data on application for registration of the dealer as a corporation. The area 753 stores a registered corporation number given by the Legal Affairs Bureau when the dealer is registered as a corporation. The area 754 stores data on a notice of tax related information. The area 755 stores data reported to the contents sender and the network customhouse. The area 756 stores data on an amount of money remitted for the tax. The are 358 stores data a Notice of completed tax payment.

### (3-2) Operation:

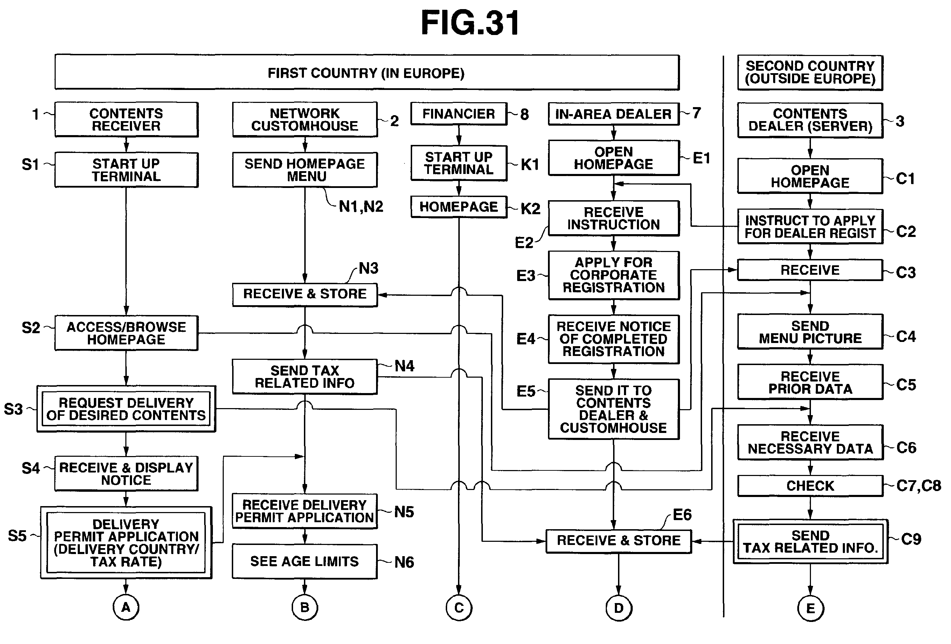

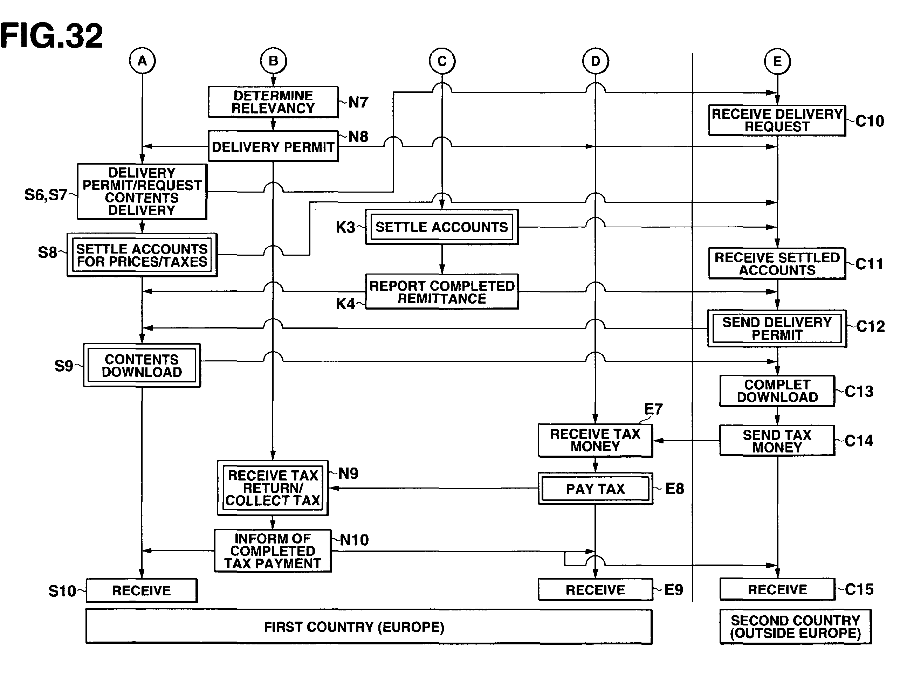

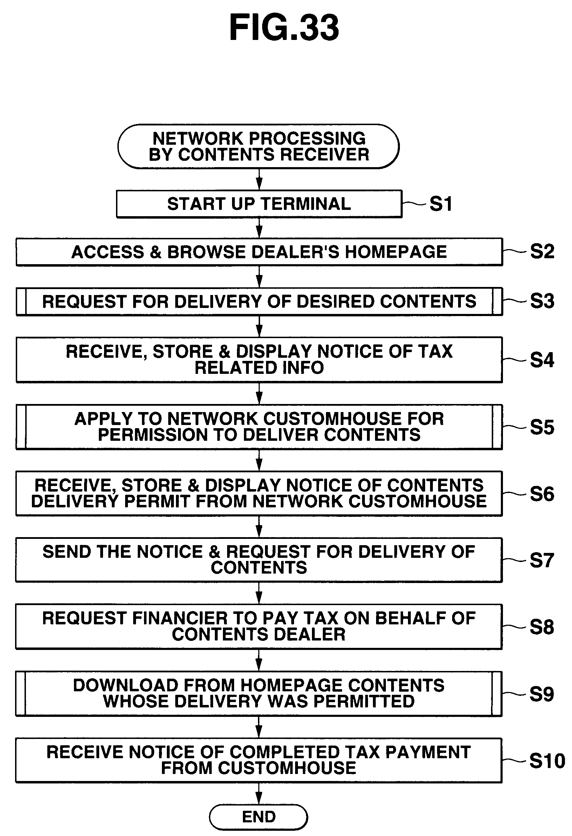

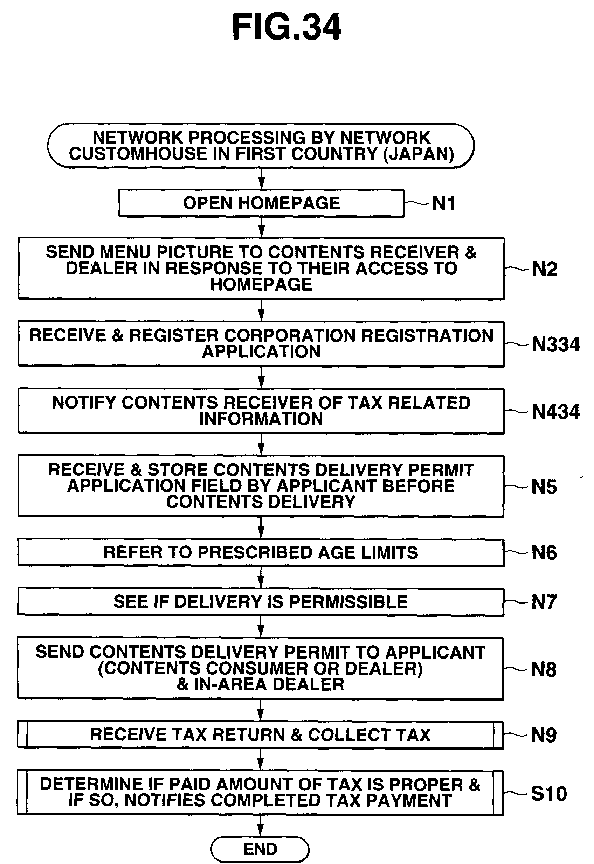

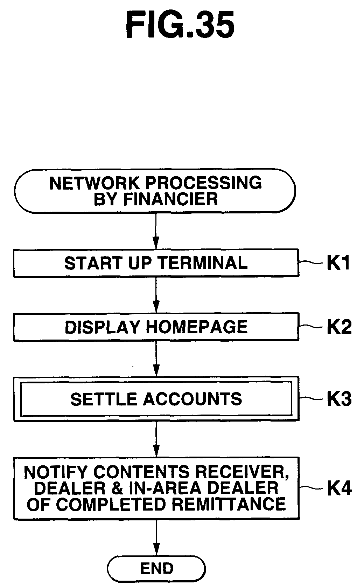

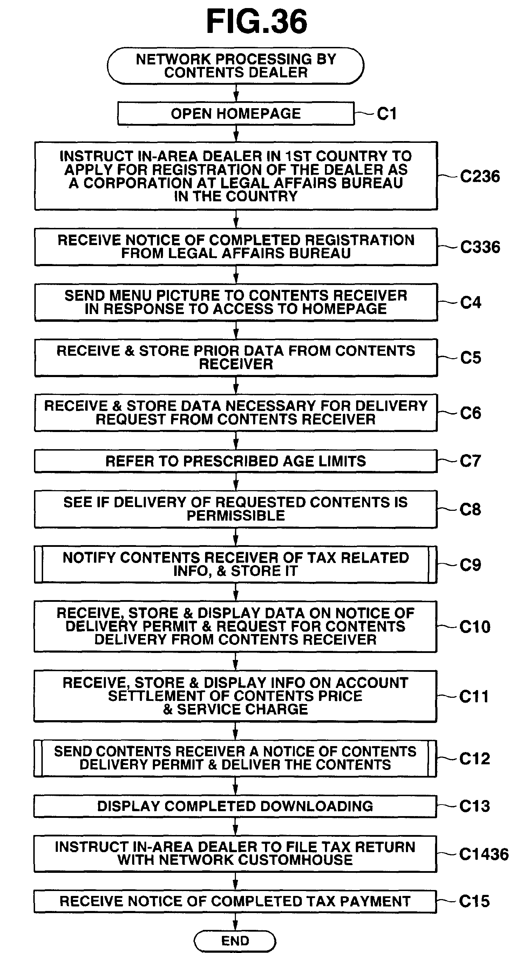

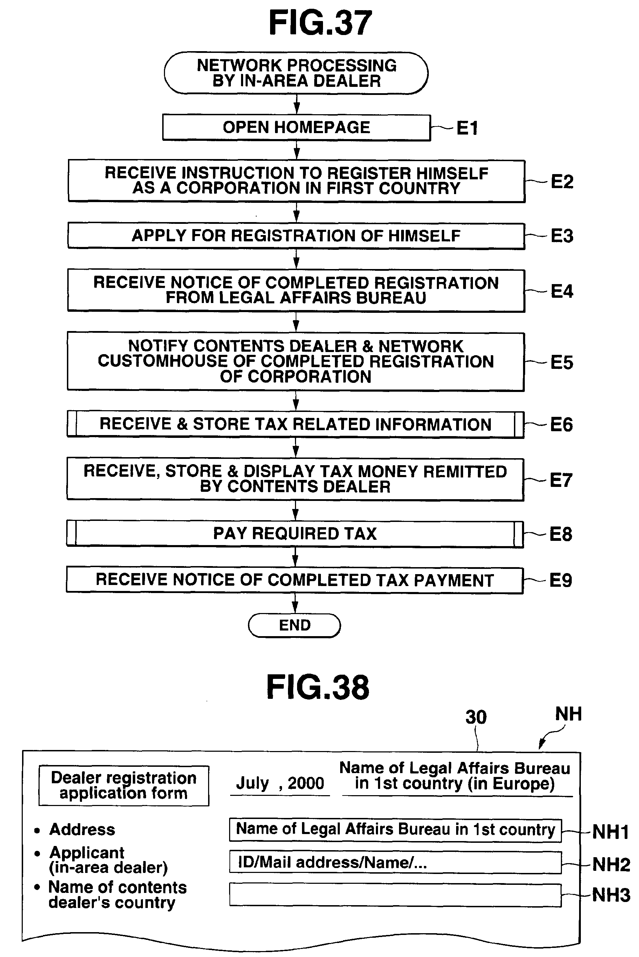

Operation of the third embodiment will be described next. FIGS. 31 and 32 illustrate a series of interactions performed in the system of the third embodiment. FIG. 33 illustrates a flow of network processing by the contents receiver 1. FIG. 34 illustrates a flow of network processing by the network customhouse in the first country (in Europe). FIG. 35 illustrates a flow of network processing by the financier. FIG. 36 illustrates a flow of network processing by the contents dealer. FIG. 37 is a flow of network processing by the in-area dealer.

Step numbers used in the series of interactions performed in the system of FIGS. 31 and 32 correspond respectively to the step numbers of flowcharts of FIGS. 33-37.

### (3-2A) Flow of Network Processing by the Contents receiver (FIG. 33):

First, this network processing of FIG. 33 will be described. This process is basically the same as that of the first embodiment of FIG. 7, and further description thereof will be omitted.

Due to the downloading of the contents by the contents receiver from the contents dealer 3 in step S9, the in-area dealer 7 is legally obliged to pay a tax imposed on the downloaded contents to the network customhouse 2 in the first country or region to which the contents receiver 1 belongs.

Thus, the contents dealer 3 remits an amount of money for the tax to the in-area dealer 7 (step C1436 of FIG. 36). Receiving the amount of money for the tax, the in-area dealer 7 files a self-assessment tax return with the network customhouse 2 over the network (step E8 of FIG. 37 including payment of the tax to the customhouse).

The network customhouse 2 receives the tax return and the paid tax (step N9 of FIG. 34).

Then, the network customhouse 2 determines whether the paid amount of tax is proper. If it is, the network customhouse 2 sends the same Notice of completed tax payment as in FIG. 21 to both the contents receiver 1 and the in-area dealer 7 or the contents dealer 3 alone (step S10 of FIG. 33, N10 of FIG. 34).

Thus, both the contents receiver 1 and the in-area dealer 7 or the contents dealer 3 alone receive such Notice (steps S10 of FIG. 33, E9 of FIG. 37, C15 of FIG. 35) to thereby complete the delivery of the contents, the payment of the related tax and reception of the tax.

### (3-2B) Flow of Network Processing by Network Customhouse (FIG. 34):

The flow of network processing by the network customhouse in the first country (Europe) of FIG. 34 will be described. Except for steps N334 and N434, this process is the same as the process including steps N1-N10 of the first embodiment of FIG. 8 and further description will be omitted.

If the contents receiver 1 and contents dealer 3 or in-area dealer 7 access the homepage NH of network customhouse 2, the network customhouse sends a menu picture to them (step N2).

The network customhouse receives from the in-area dealer 7 a "Notice of completed registration", if any, over the Internet 100 (step N334 of FIG. 34 before the delivery of the contents from the contents dealer to the contents receiver). This Notice is similar to the "Notice of completed registration" of FIG. 12 in the first embodiment. The Notice contains data on the "in-area dealer's ID, mail address, name, etc." in box NH4 for "Address (in-area dealer)" filled in by the in-area dealer, data filled in box NH5 for "ID No." and given by the Legal Affairs Bureau, and "Contents delivery conditions", etc., in box NH6.

Then, the network customhouse 2 informs the in-area dealer 7 of tax related information (step N434 of FIG. 34). In step N9 the in-area dealer 7 pays to the network customhouse the tax on delivered contents on behalf of the contents dealer 3 via the Internet 100. The network customhouse 2 receives this tax. As a result, the income tax return receiving and tax collecting process is completed.

Unlike this embodiment, a financial institution may pay the tax to the network customhouse 2 on behalf of the in-area dealer in its name or as its branch. Alternatively, the in-area dealer 7 may deposit some money beforehand in the network customhouse 2 so that each time a tax is imposed on delivered contents, the tax may be paid from the deposit to the network customhouse 2.

In this case, the network customhouse 2 determines whether the paid amount of the tax is proper. If it is, the network customhouse 2 sends a Notice of completed tax payment to the in-area dealer 7, contents receiver 1 or contents dealer 3 (step N10).

### (3-2C) Flow of Network Processing by Financier (FIG. 35):

In the flowchart of FIG. 35, steps K1-K3 are similar to corresponding ones of the process of FIG. 9 performed in the first embodiment, and further description thereof will be omitted. In the flowchart of FIG. 35, steps K4 informs the contents receiver 1, contents dealer 3 and in-area dealer 7 that an amount of money for the contents price has been paid into the contents dealer's account.

### (3-2D) Flow of Network Processing by Contents dealer (FIG. 36):

The flow of FIG. 36 will be described next. In FIG. 36, the contents dealer 3 opens a homepage KH (FIG. 15) (step C1). Before delivering the contents to the contents receiver 1, the contents dealer 3 instructs the in-area dealer in a first country, for example, in Europe or region to follow the necessary procedures for registering the in-area dealer himself or herself as a corporation with the Legal Affairs Bureau in the first country or region in that country or region (step C236).

As will be described later, the in-area dealer 7 is required by the contents dealer 3 to access the homepage of the Legal Affairs Bureau HK in the first country or region, inputs data necessary for registration of the in-area dealer 7 as a corporation into a Corporation registration application form in accordance with directions indicated on a menu picture of the homepage to complete the application, and sends this application to the Legal Affairs Bureau HK over the network 100 (step E3 of FIG. 37).

As shown in FIG. 38, the Corporation registration application contains data on "Name of Legal Affairs Bureau in first country", "In-area dealer's ID, mail address, name, ...", "Name of contents dealer's country, ..." input into boxes NH1-NH3 for "Address", "Applicant (in-area dealer)", "Name of contents dealer's country, ...", respectively.

The in-area dealer 7 then receives a "Notice of completed registration" sent over the Internet 100 from the Legal Affairs Bureau when the registration is completed (step E4 of FIG. 37). The in-area dealer 7 then reports to the contents dealer 3 and the network customhouse 2 that the registration has been completed (step E5).

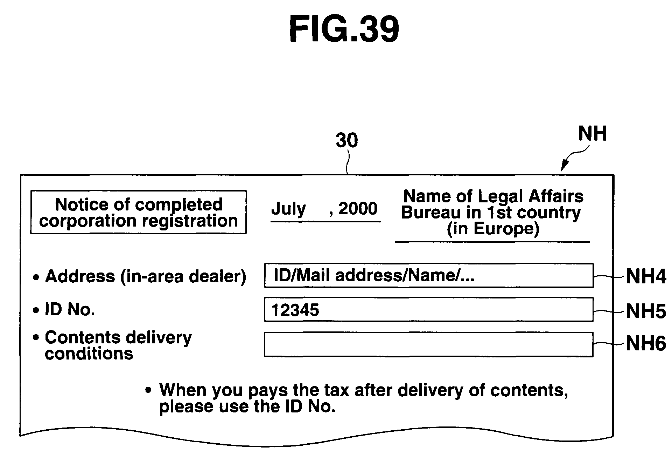

As shown in FIG. 39, the "Notice of completed registration" contains data inputted to boxes NH4-NH6 for "Address (in-area dealer)", 'ID number" given by the network customhouse and "contents delivery conditions", respectively, below "Name of Legal Affairs Bureau in the first country". The Notice also contains a note given by the Legal Affairs Bureau to the in-area dealer, indicating "Please use the ID number in tax payment after the contents were delivered".

After receiving and storing data on the reported registration of a corporation (step N334 of FIG. 34), the network customhouse 2 sends tax related information to the in-area dealer 7 (step N434). The in-area dealer 7 receives and stores this information (step E6 of FIG. 37).

In brief, before delivery of contents to the contents receiver in the first country, the in-area dealer 7 in the first country or region files over the network 100 a "Corporation registration application form" to the Legal Affairs Bureau HK in the first country or region in accordance with the contents dealer's request in the second country or region, and then sends the network customhouse 2 a "Notice of completed corporation registration" sent by the Legal Affairs Bureau HK. Thus, data on the registration of the dealer 7 as a corporation such as the in-area dealer's given ID number, and other data are stored in the network customhouse 2 in the first country.

Step C4-C13 performed by the contents dealer 3 are similar to corresponding ones performed in the first embodiment of FIG. 10, and further description thereof will be omitted.

In step C1436 subsequent to step C13 the contents dealer 3 instructs the in-area dealer 7 to file with the network customhouse 2 in the first country a tax return on the contents downloaded by the contents receiver 1 in the first country.

This tax return process is performed by inputting various required data to boxes for "Address", "Declarer (tax payer)", "Kind of contents", "Price of contents", "Name of contents dealer's country" and "Amount of tax" described in a "Tax return" of the homepage of the network customhouse 2 in the first country as in the tax return of FIG. 20 used in the first embodiment.

When the network customhouse 2 receives this "Tax return" over the Internet 100, it performs a tax return receiving and tax collecting process (steg N9 of FIG. 34).

In this process, a financial institution who acts on behalf of the in-area dealer 7 may pay the tax to the network customhouse 2 in the name, or as a branch, of the in-area dealer. Alternatively, the in-area 7 may beforehand deposit some money in the network customhouse 2 so that each time a tax is produced due to delivery of new contents, the tax may be paid from the deposit to the network customhouse 2.

When the tax is collected in this way, the network customhouse 2 determines whether the amount of tax paid is proper. If it is, the network customhouse 2 sends a "Notice of completed tax payment" to the in-area dealer 7, both the contents receiver 1 and the contents dealer 3 or the contents dealer 3 alone (step N10).

The Notice has a similar format to that of the first embodiment shown in FIG. 21. Thus, this means completion of the contents delivery and the tax payment and collection.

### (3-2E) Flow of Network Processing by In-area Dealer (FIG. 37):

A flow of network processing by the in-area dealer will be described next with reference to FIG. 37. In FIG. 37, the in-area dealer 7 opens his or her homepage (step E1). As described above, the in-area dealer 7 is instructed to take the necessary procedures for applying for registration of himself or herself as a corporation in the first country (in Europe) before delivery of contents to the contents receiver 1 (step C2 of FIG. 36).

The in-area dealer 7 downloads a menu picture from a homepage NH of the Legal Affairs Bureau in the first country or region, fills in with necessary data boxes NH1-NH3 in the picture of a "Corporation registration application form" (FIG. 38) of the homepage NH in accordance with directions indicated on the picture to complete the application form, and then sends the application form to the Legal Affairs Bureau in the first country over the Internet 100 (step E3).

The necessary data to fill in NH1-NH3 includes data on the articles and members of the in-area dealer's association, and data on a certificate that the contents dealer in the second country or region has entrusted the in-area dealer with payment of taxes on contents, delivered from the contents dealer in the second country or region to the contents receiver in the first country or region, to the network customhoues in the first country. Thus, the Legal Affairs Bureau receives data on this application form.

The in-area dealer 7 receives a "Notice of completed registration" sent by the Legal Affairs Bureau in the first country over the Internet 100 when the registration is completed (step E4). The Notice is similar to "Notice of completed registration" of FIG. 39 used in the first embodiment. The in-area dealer 7 then reports that the corporation registration has been completed over the Internet 100 to the contents dealer 3 and the network customhouse 2 (step E5).

Then, receiving tax related information from the network customhouse 2, the in-area dealer 7 stores this information (step E6).

Receiving an amount of money for the tax from the contents dealer 3 over the network 100 (step C14), the in-area dealer 7 stores data on, and displays, the amount of money (step E7), and then files a tax return that includes paying the network customhouse 2 the tax from the received money (step E8).

The network customhouse 2 receives this tax return and the tax (step N9 of FIG. 34).

The in area dealer 7 then receives a "Notice of completed tax payment" from the network customhouse 2 (step E9), at which time the contents delivery and the related tax payment and collection are completed.

In brief, according to the third embodiment, the contents dealer 3 in the second country (for example Japan, outside Europe) causes a second dealer (in-area dealer) belonging to the first country (in Europe) or region to register the second dealer as a corporative dealer, who acts a tax payer to the network customhouse on behalf of the contents dealer, with the Legal Affairs Bureau in the first country or region. Thus, when the contents receiver in the first country downloads contents from the contents dealer 3, the in-area dealer 7 in the first country is obliged to pay a tax on the downloaded contents to the network customhouse 2 in the first country over the Internet 100. This in-area dealer 7 pays the tax.

The network customhouse 2 in the first country can surely collect from the in-area dealer 7 in the first country taxes such as consumption and/or sales taxes on the contents delivered from the second country to the first country in accordance with the tax rate, tax conditions, etc., stipulated under the laws of the first country.

The financier A in the first country may pay the tax to the network customhouse 2 in the first country in the capacity of the in-area dealer 7 in the first country or region.

### (3-3) Modification:

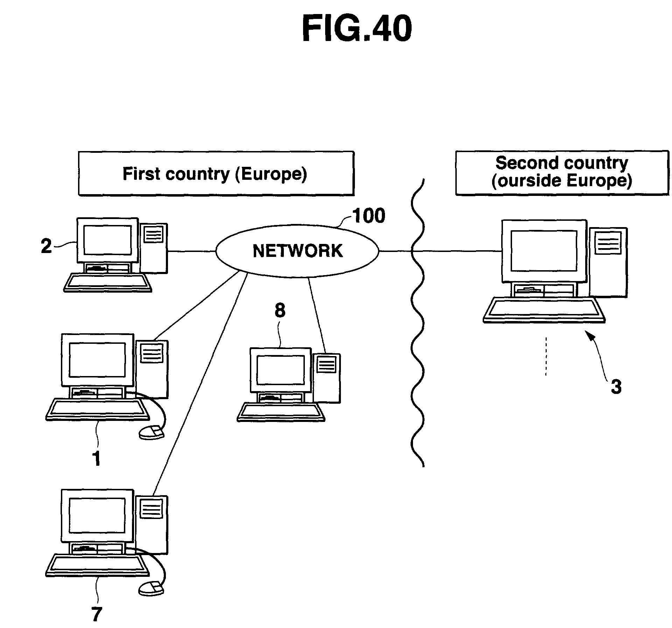

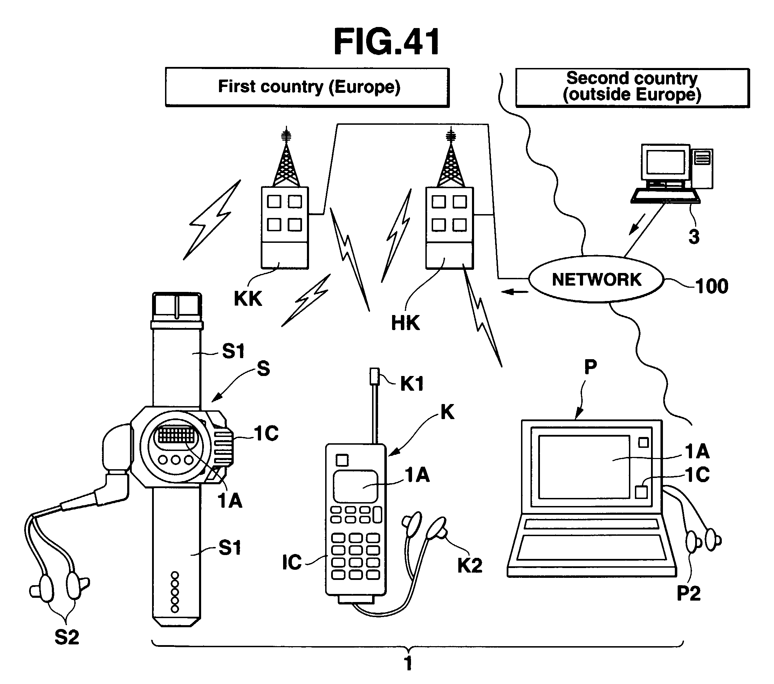

As shown in FIG. 40, in the respective above mentioned embodiments, the contents dealer's terminal 1 comprises a PC (Personal Computer). The terminals or devices of the network customhouse 2, contents dealer 3, contents maker 5, in-area dealer 7 and financier 8 each comprise a general-purpose computer. As shown in FIG. 41, the contents receiver's terminal 1 may comprise a wristwatch type device S composed of a wristband S1, an earphone S2, a display 1A, and a communication unit 1C; a mobile telephone type device K composed of an earphone K2, a display 1A, a communication unit 1C, and an antenna K1; or a portable personal computer type device P composed of an earphone P2, a display 1A, and a communication unit 1C.

In the above respective embodiments the contents dealer 3 in the second country (except in Europe) delivers contents directly to the contents receiver 1 over the network 100, and the in-area dealer 7 in the first country pays the tax directly to the network customhouse 2 over the network 100. Alternatively, a base station KK or a broadcasting station HK may be combined with the network 100 to deliver required contents from the contents dealer to the receiver and to allow the in-area dealer to pay corresponding taxes to the network customhouse 2.

### (4) [Fourth Embodiment]

It is assumed in the third embodiment that the contents receiver 1, network customhouse 2, registered in-area dealer 7, and financier 8 are in the first country (for example, any one of countries in Europe) whereas the contents dealer 3, certifying/accounting server 4, contents maker 5, and contents server 6 are in the second country (for example, outside Europe).

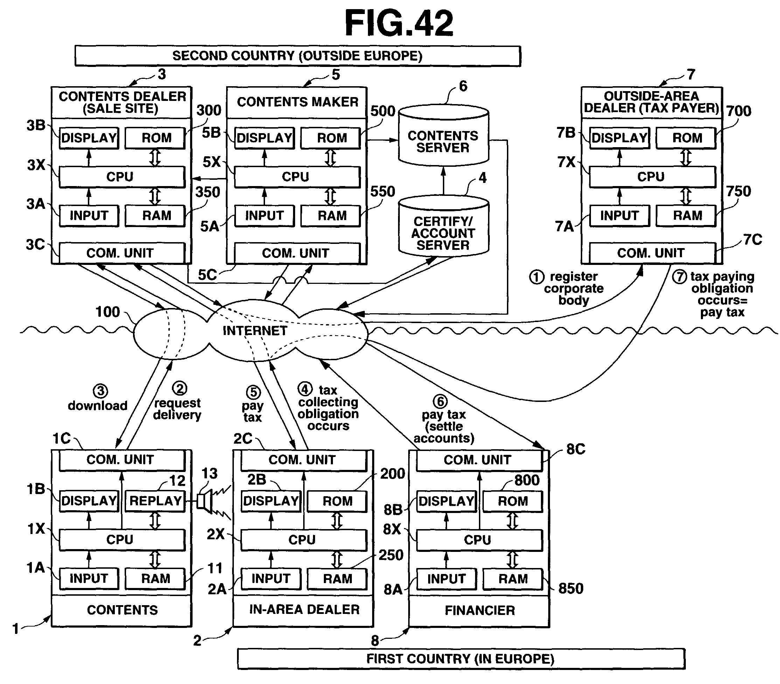

FIG. 42 illustrates a fourth embodiment of the present invention. As shown in FIG. 42, it is assumed in the fourth embodiment that the contents receiver 1, network customhouse (including the Regional Taxation Bureau) 2, and financier 8 are in the first country (in Europe) while the contents dealer 3, certifying/accounting server 4, contents maker 5, contents server 6 and registered in-area dealer 7 are in the second country (for example, outside Europe).

In the fourth embodiment, the in-area dealer 7 in the second country is requested or instructed by the contents dealer 3 in the second country to follow over the Internet 100 the necessary procedures for registering the in-area dealer as a corporative tax payer in the second country. When the contents dealer 3 in the second country delivers the contents to the contents receiver 1 over the Internet 100, the in-area dealer 7 is requested or instructed by the contents dealer 3 to pay the network customhouse 2 in the first country the tax on the delivered contents over the Internet 100.

The network customhouse 2 collects the tax from the in-area dealer 7 through the Internet 100.

### (5) [Fifth Embodiment]

As described above, it is assumed in the fourth embodiment of FIG. 42 that the contents receiver 1, network customhouse 2 and financier 8 are in the first country (any country in Europe) while the contents dealer 3, certifying/accounting server 4, contents maker 5, contents server 6 and in-area dealer 7 are in the second country (outside Europe).

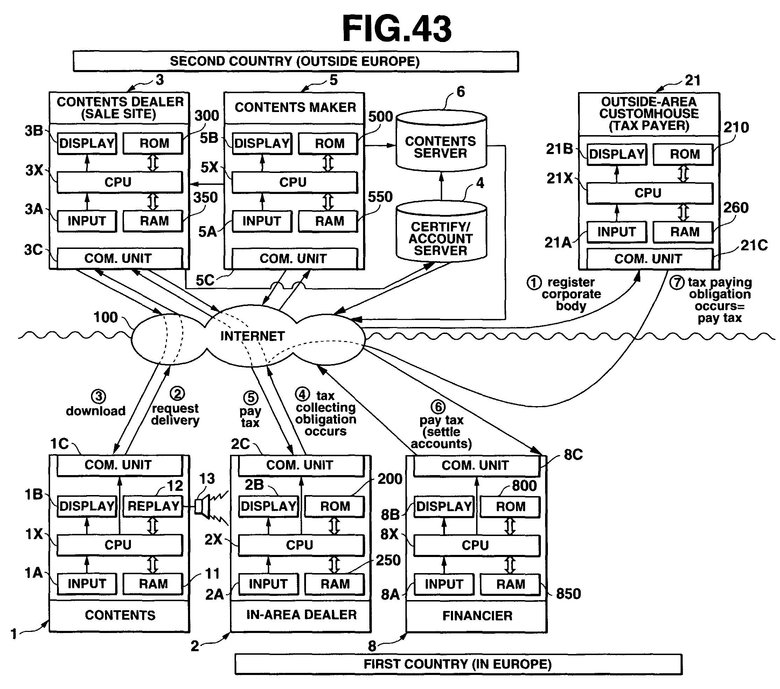

In contrast, it is assumed in a fifth embodiment of FIG. 43 that the contents receiver 1, network customhouse 2 and financier 8 are in the first country while the contents dealer 3, certifying/accounting server 4, contents maker 5, contents server 6 and an outside-area network customhouse 21, which is obliged to pay taxes on delivered contents on behalf of the contents dealer 3 to the network customhouse 2 in the first country, are in the second country.

The outside-area network customhouse 21 collects from the contents dealer 3 a tax on the contents downloaded from the contents dealer 3 to the contents receiver, and pays the collected tax to the network customhouse 2 in the first country over the Internet 100. The network customhouse 2 in the first country receives the tax paid by the network customhouse 21 in the second country.

### (6) [Sixth Embodiment]

### (6-1) Composition:

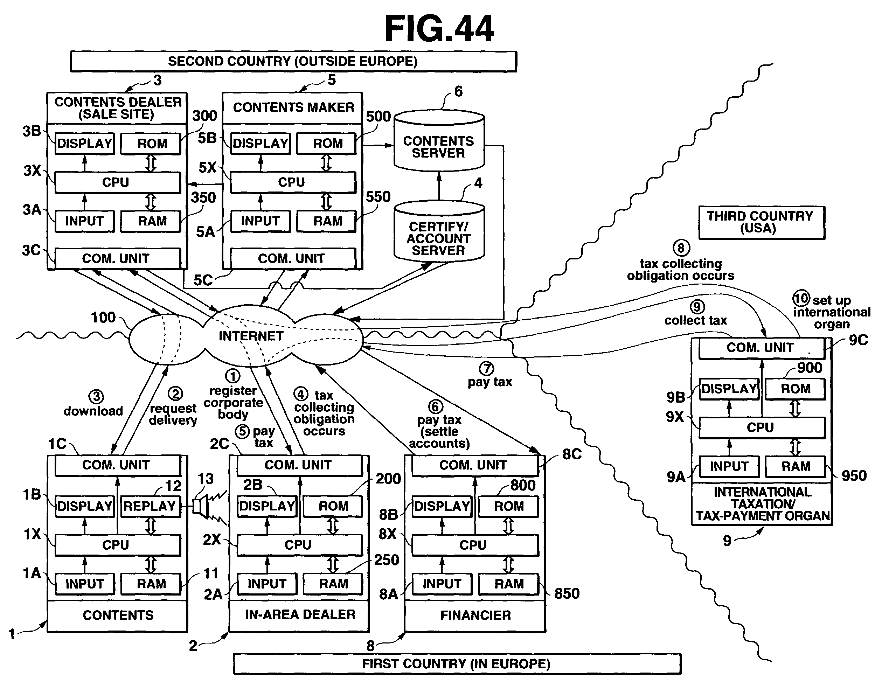

FIG. 44 shows a sixth embodiment of the present invention. It is assumed in this embodiment that the contents receiver 1, network customhouse 2 and financier 8 are in the first country (any country in Europe), that the contents dealer 3, certifying/accounting server 4, contents maker 5, and contents server 6 are in the second country (outside Europe), and that an international tax collection and payment organ 9, for example, established under a treaty, is in a third country (for example, in USA).

The international tax collection and payment organ 9 comprises a general-purpose computer, which in turn comprises a CPU 9X, an input unit 9A, a display 9B, a communication unit 9C, a ROM 900 and a RAM 950 similar to the contents receiver 1 in the first embodiment of FIG. 1.

In the sixth embodiment the international tax collection and payment organ 9 collects from the contents dealer 3 a tax on the downloaded contents and pays the tax over the Internet 100 to the network customhouse 2 in the same first country as the contents receiver 1 lives. The network customhouse 2 in the first country receives this tax.

The international tax collection and payment organ 9 may be in the first or second country.

In the fourth embodiment the tax payer is the in-area dealer 7 registered as a corporation in the first country (in Europe) or region. Alternatively, the tax payer may be an outside-area corporation registered in the second country (for example, outside Europe) or a region in accordance with designation of the contents dealer or an international tax matters organ set up in the first, second or third country in accordance with a treaty concluded under international cooperation.

In this case, the outside-area corporation or the international tax matters organ is obliged to pay the tax collection organ a tax on the contents delivered by the contents receiver in a predetermined term after the delivery of the contents.

In this embodiment, the first country or region is illustrated as "being in Europe" whereas the second country or region is illustrated as "being outside Europe", the present invention is not limited to this particular case. For example, the first country or region may be "outside Europe" or "in USA" while the second country or region may be "in Europe" or "Japan".

### (6-2)[Conclusion and Effects of each of the third-sixth embodiments]

As described above, the embodiment involves a contents delivery network taxation processing method for imposing over a network (e. g. the Internet 100) a tax on contents delivered, comprises the steps of:
after a contents receiver belonging to a first country (e. g. Europe) or local area (e. g. one state "A" of USA) has downloaded contents (e. g. data on music, movies, games) via a network from a contents sender (contents trader 3) belonging to a second country (e. g. Japan or USA outside Europe) or local area (e. g. local areas other than the state "A" of USA) (e. g. S9), causing a tax payer (e. g. ① an original tax payer 3; ② an in-area dealer 7 who lives in the first country and who is designated so as to make, or entrusted with, tax payment on behalf of the contents sender 3 who is the original tax payer, FIG. 1; ③ an in-area dealer 7 who lives in the second country, FIG. 26; ④ an outside-area network customhouse 21 set up outside the first country or local area, FIG. 27; and ⑤ an international organization 9 set up outside the first country or local area, FIG. 28) to pay the tax via the network to a tax collection authority (e. g. network customhouse) having a right of tax collection in the first country (e. g. C14 → E7 → E8 → N9); and
causing the tax collection authority to collect the tax via the network from the tax payer (e. g. in-area dealer 7) (e. g. E8 → N9).

The embodiment also involves a contents delivery network taxing method comprising the steps of:
in response to a contents receiver 1 belonging to a first country (e.g. outside Europe) or local area downloading contents via a network from a contents sender 3 belonging to a second country or local area (e. g. S9), causing a tax collection authority (e. g. network customhouse 2) having a right to impose a tax on the downloaded contents in the first country or local area to collect the tax via the network from a tax payer who is liable to pay the tax (e. g. the original tax payer 3 or an in-area dealer 7 living in the first country) (e. g. C14 → E7 → E8 → N9).

The embodiment also involves a contents delivery network taxing method comprising the steps of:
in response to a contents receiver 1 belonging to a first country (e. g. in Europe) or local area downloading contents via a network 100 from a contents sender 3 belonging to a second country (outside Europe) or local area (e. g. S9), causing a tax payer who is liable to pay the tax (e. g. original tax payer 3 or an in-area dealer 7 living in the first country) on the downloaded contents to pay the tax via the network 100 to a tax collection authority (e. g. network customhouse 2) having a right to impose a tax on the delivered contents in the first country or local area (e. g. C14 → E7 → E8 → N9).

The embodiment also involves a contents delivery network taxing method comprising the steps of:
in response to a contents receiver 1 belonging to a first country (e. g. in Europe) or local area downloading contents via a network 100 from a contents sender 3 belonging to a second country (outside Europe) or local area (S9), causing the first country or local area as an entity (e.g. customhouse 2) having the right of taxation to receive a tax on the downloaded contents paid over the network by a tax payer on the downloaded contents (e.g. original tax payer 3 or an in-area dealer 7 living in the first country) (e. g. C14 → E7 → E8 → N9).

The embodiment also involves a contents transaction taxing method comprising the steps of:
in response to a contents receiver 1 belonging to a first country (e. g. in Europe) or local area downloading contents via a network 100 from a contents sender 3 belonging to a second country (outside Europe) or local area (e. g. 59), causing a tax payer (e.g. an international tax paying organ 9 of FIG. 28) belonging to any one of the first and second countries or local areas and a third country or local area to pay the tax via the network to a tax collection authority (e. g. network customhouse 2) having the right to impose taxes in the first country or local area.

The embodiment also involves a contents delivery network taxing method comprising the steps of:
delivering contents requested by a contents receiver 0 belonging to a first country (e. g. in Europe) or local area to the contents receiver on condition that the delivery of the contents is requested by the contents receiver via a network (e. g. the Internet 100) (e, g, S3 → C6 → S9); and
instructing via the network a tax payer (e. g. an in-area dealer 7 who actually pays a tax on the delivered contents in accordance with a request of tax payment given by the contents sender 3) to pay the tax on the downloaded contents to a tax collection authority (e. g. network customhouse 2) having a right to collecte tax in the first country or local area (e. g. C4 → E7).

The embodiment also involves a contents delivery network taxing method comprising the steps of:
in response to a contents receiver 1 belonging to a first country (e. g. in Europe) or local area downloading contents via a network 100 from a contents sender 3 belonging to a second country (e. g. outside Europe) or local area, causing the contents sender (e.g. contents trader 3) or a tax collection authority (e. g. network customhouse 2) having a right to impose a tax on the downloaded contents in the first country or local area to notify via the network a tax payer (an in-area dealer 7 entrusted with tax payment on the downloaded contents by the contents dealer 3) information on taxation on the downloaded contents (e. g. N4 → E6; C9 → E6).

The embodiment also involves a contents delivery network taxing method comprising the steps of:
connecting to a network 2 a first terminal provided at a contents receiver 1(e. g. consumer 1) belonging to a first country (e. g. in Europe) or local area, a second terminal provided at a contents sender (e. g. contents dealer 3) belonging to a second country (e. g. outside Europe) or local area, a third terminal provided at a tax collection authority (e. g. network customhouse 2) belong to the first country or local area, and a fourth terminal provided at a tax payer (e. g. an in-area dealer 7 entrusted with tax payment by contents sender 3).belonging to the first country or local area; and
when the contents receiver has downloaded on its first terminal the contents delivered from the contents sender (e. g. S9), causing the tax payer to pay a tax on the downloaded contents via the network to the tax collection authority, using the fourth terminal (e. g. E8 → N9); and
causing the tax collection authority (e. g. network customhouse 2) to receive the tax via the network, using the third terminal (e. g. E8 → N9).

In the method according to the embodiment, the first terminal (e. g. terminal of contents receiver 1) comprises:
delivery requesting means (e. g. 1A, 1C) for requesting delivery of contents from the contents sender; and
downloading means (e. g. 1A, 1C, 11) for downloading via a network the contents the delivery of which is requested by said delivery requesting means,
the second terminal (e.g. contents trader 3) comprises:
   delivering means (e. g. 3A, 3C, 300) for delivering the requested contents to the contents receiver via the network,
   the third terminal (e. g. terminal of the network customhouse) comprises:
      collecting means (e. g. 2A, 2C, 250), responsive to the contents receiver downloading via the network the contents from the contents sender, for collecting a tax on the downloaded contents via the network (e. g. 2A, 2C, 250), and
      the fourth terminal (e. g. in-area dealer 7 terminal) comprises:
         tax paying means (e. g. 7A, 7C), responsive to the contents receiver downloading the contents from the contents sender, for paying a tax on the downloaded contents via the network to the tax collection authority.

In the method according to the embodiment, the tax payer (international organization 9 set up as the tax payer of FIG. 44 in accordance with treaties) and the tax collection authority (e. g. network customhouse) belongs to any one of the first country (e. g. in Europe) and the second country (e. g. Japan outside Europe) or local area and a third country (e. g. USA outside Europe) or local area.

In the method according to the embodiment, the tax payer (e. g. in-area dealer 7) is a corporate body set up in the first and second countries or local areas in accordance with a request of the contents sender, and the corporate body pays the tax to the tax collection authority via the network.

In the method according to the embodiment, the tax payer comprises at least one of international organizations (e. g. international organization 9 of FIG. 44) set up in at least one of the first and second countries or local areas and the third country or local area, irrespective of an instruction given by the contents sender, and the at least one of the international organizations pays the tax via the network to the tax collection authority.

The method according to the embodiment comprises an accounts settling organization (e. g. financial institution 8) that pays the tax on the contents on behalf of the tax payer to the tax collection authority via the network in accordance with the contents sender's request.

In the method according to the embodiment, the contents sender (e. g. contents trader 3) instructs the tax payer (e. g. in-area dealer) to apply via the network for setting up a corporate body, which pays the tax on the delivered contents on behalf of the contents sender, in a country to which the contents sender should be liable to tax payment, before payment of the tax to the tax collection authority (e. g. C2 → E2).

In the method according to the embodiment, the tax payer pays the tax on the contents via the network in accordance with a tax rate in the country or local area to which the tax collection authority belongs.

The embodiment involves a recording medium (ROM 200 of FIG. 1) that has recorded a computer (CPU 2X of FIG. 1) executable program for imposing a tax on delivered contents over a network (e. g. the Internet 100), comprising the steps of:
after a contents receiver 1 belonging to a first country (e. g. in Europe) or local area has downloaded contents via a network 100 from a contents sender 3 (e. g. outside Europe) belonging to a second country (e. g. outside Europe) or local area, causing a tax payer (e. g. an original tax payer 3 of FIG. 1; an in-area dealer 7 of FIGS. 1 and 42; an outside-area network customhouse 21 of FIG. 43; and an international organization 9 of FIG. 44) to pay the tax via the network (e. g. C14 → E7 → E8 → N9); and
causing the tax collection authority to receive the tax via the network from the tax payer.

The embodiment also involves a recording medium (ROM 200 of FIG. 1) that has recorded a computer (CPU 2X of FIG. 1) executable program comprising the steps of:
in response to a contents receiver 1 belonging to a first country (e. g. in Europe) or local area downloading contents via a network 100 from a contents sender 3 belonging to a second country (e. g. outside Europe) or local area, causing a tax collection authority (e. g. network customhouse 2) having a right to impose a tax on the downloaded contents in the first country or local area to collect the tax via the network from a tax payer who is liable to pay the tax (e. g. the contents sender 3 or an in-area dealer 7).

The embodiment also involves a recording medium (ROMS 300, 700 of FIG. 1) that has recorded a computer (CPU 1X of FIG. 1) executable program comprising the steps of:
in response to a contents receiver 1 belonging to a first country (e. g. in Europe) or local area downloading contents via a network 100 from a contents sender 3 belonging to a second country (e. g. outside Europe) or local area, causing a tax payer (e. g. contents sender 3 or an in-area dealer 7) who is liable to pay the tax on the downloaded contents to pay the tax via the network to a tax collection authority having a right to impose the tax on the delivered contents in the first country or local area.

The embodiment also involves a recording medium (ROM 200 of FIG. 1) that has recorded a computer (CPU 2X of FIG. 1) executable program comprising the steps of:
in response to a contents receiver 1 belonging to a first country (e. g. in Europe) or-local area downloading contents via a network 100 from a contents sender 3 belonging to a second country (e. g. outside Europe) or local area, causing the first country or local area as an entity having the right of taxation to receive a tax on the downloaded contents paid over the network by a tax payer liable to pay the tax.

A recording medium (ROM 900 of FIG. 28) that has recorded a computer (CPU 9X of FIG. 28) executable program according to the embodiment comprises the steps of:
in response to a contents receiver 1 belonging to a first country (e. g. in Europe) or local area downloading contents via a network 100 from a contents sender3 belonging to a second country (e. g. outside Europe) or local area, causing a tax payer (e.g. an international taxing organ 9) belonging to any one of the first and second countries or local areas and a third country or local area to pay the tax via the network to a tax collection authority (e. g. network customhouse) having the right to impose taxes in the first country or local area.

A recording medium (ROM 300 of FIG. 1) that has recorded a computer (CPU 3X of FIG. 28) executable program according to the embodiment comprise the steps of:
causing a contents dealer 3 in FIG. 2 or a second region to deliver contents requested by a contents receiver1 belonging to a first country (e. g. in Europe) or local area to the contents receiver on condition that the delivery of the contents was requested by the contents receiver via a network (③ of FIG. 1); and
instructing a tax payer (e. g. an in-area dealer 7 or a financier 8) to pay the tax on the downloaded contents to a tax collection authority (e. g. network customhouse 2) in the first country or local area (e. g. ⑤ of FIG. 1).

A recording medium (ROM 300; ROM 200) that has recorded a computer (CPU 3X, CPU 2X of FIG. 28) executable program according to the embodiment comprises the steps of:
in response to a contents receiver 1 belonging to a first country (e. g. in Europe) or local area downloading contents via a network 100 from a contents sender 3 belonging to a second country (e. g. outside Europe) or local area, causing the contents sender (e.g. contents dealer 3) or a tax collection authority (e. g. network customhouse 2) having the right to impose a tax on the downloaded contents in the first country or local area to notify via the network a tax payer (an in-area dealer 7 entrusted with tax payment on the delivered contents by the contents dealer 3) of information on taxation on the delivered contents (e. g. N4, C9 of FIG. 6).

As described above, according to the third-sixth embodiments, after the contents receiver belonging to the first country or region has downloaded contents via the network from the contents sender belonging to the second country or region, the tax payer can rapidly and securely pay the tax via the network to the tax collection authority in the first country. The tax collection authority can rapidly and securely collect the tax via the network from the tax payer.

According to the third-sixth embodiments, when the contents receiver belonging to the first country or region downloads contents via the network from the contents sender belonging to the second country or region, the tax collection authority having the right to impose the tax on the downloaded contents in the first country or region can rapidly and securely collect the tax via the network from the tax payer.

According to the third-sixth embodiments, when the contents receiver belonging to the first country or region downloads contents via the network from the contents sender belonging to the second country or region, the tax payer liable to tax payment on the downloaded contents can rapidly and securely pay the tax via the network to the tax collection authority having the right to impose the tax on the delivered contents in the first country or region.

According to the third-sixth embodiments, when the contents receiver belonging to the first country or region downloads contents via the network from the contents sender belonging to the second country or region, the tax payer can rapidly and securely pay the tax to the entity having the right of taxation through the network.

According to the third-sixth embodiments, when the contents receiver belonging to the first country or region downloads contents via the network from the contents sender belonging to the second country or region, the tax payer belonging to any one of the first and second countries or regions and the third country or region can rapidly and securely pay the tax via the network to the tax collection authority having the right to impose taxes in the first country or region.

According to the third-sixth embodiments, when the contents receiver has downloaded the contents on the terminal thereof, the tax payer is instructed to pay the tax on the downloaded contents to the proper tax collection authority in the first country or region. The tax payer can rapidly and securely pay the tax in accordance to the instruction.

According to the third-sixth embodiments, when the contents receiver belonging to the first country or region downloads contents via the network from the contents dealer belonging to the second country or region, the contents dealer or the tax collection authority having the right to impose the tax on the downloaded contents in the first country or region notifies via the network the tax payer of information on taxation on the downloaded contents. Thus, the tax collection can be made rapidly and securely.

According to the third-sixth embodiments, when the contents receiver has downloaded on its first terminal the contents delivered from the contents dealer, the tax payer can rapidly and securely pay the tax on the downloaded contents via the network to the tax collection authority, using the fourth terminal. The tax collection authority can rapidly and securely receive the tax via the network.

### (C) Tax Collecting System (Tax Payer Number System):

This system that is utilized in a seventh and eighth embodiment will be described next. This system enables to securely grasp an international transaction of contents, to clarify the contents dealer who is obliged to pay the tax concerned, and to ensure collection of the tax from him. In this system, a number allocating organ in a first country or region (a specified economic region such as a state or district, which applies in the subsequent other cases) to which the contents receiver belongs allocates tax payer numbers to the contents receiver and dealer in accordance with an instruction of an inhabitant/corporation registering organ. A tax collection organ in the first country or region collects the tax on the delivered contents based on the tax payer numbers.

### (7) [Seventh Embodiment]

### (7-1) Composition:

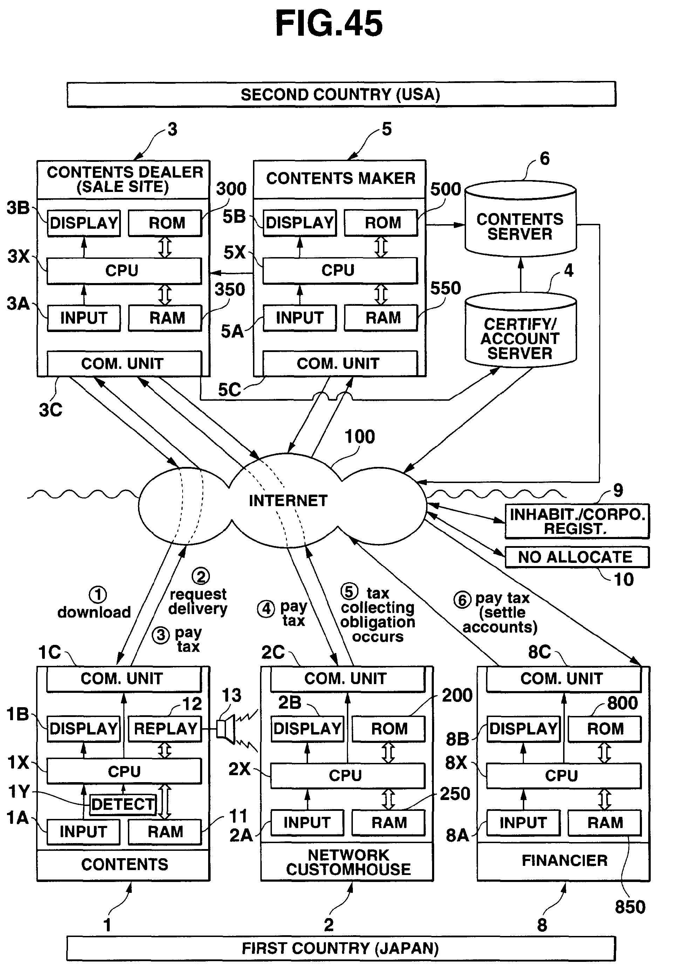

As shown in FIG. 45, in the system of the seventh embodiment, a plurality of contents receivers' terminals 1, a network customhouse 2, a financier 8, an inhabitant and corporation registration organ 9 and a number allocating organ 10 are in a first country (for example, Japan) while a plurality of contents dealers 3, a certifying/accounting server 4, a contents maker 5, and a contents server 6 are in a second country (for example, USA).

As in the first embodiment of FIG. 1, each of the contents receivers' terminals 1 comprises a CPU 1X, an input unit 1A, a display 1B, a communication unit 1C, a RAM 11, a contents layer 12, and a speaker 13.

Also as in the first embodiment of FIG. 1, the network customhouse 2 comprises a CPU 2X, an input unit 2A, a display 2B, a communication unit 2C, a ROM 200, and a RAM 250. The contents dealer 3 comprises a CPU 3X, an input unit 3A, a display 3B, a communication unit 3C, a ROM 300, and a RAM 350. The contents maker 5 comprises a CPU 5X, an input unit 5A, a display 5B, a communication unit 5C, a ROM 500, an a RAM 550. The financier 8 comprises a CPU 8X, an input unit 8A, a display 8B, a communication unit 8C, a ROM 800 and a RAM 850.

The inhabitant and corporation registration organ 9 and the number allocating organ 10 each comprise a general-purpose computer. The plurality of contents receivers' terminals 1, the network customhouse 2, the plurality -of contents dealers 3, the certifying/accounting server 4, the contents maker 5, the contents server 6, the financier 8, the inhabitant and corporation registration organ 9 and the number allocating organ 10 are connectable to each other over the Internet 100. The contents dealer 3, the certifying/accounting server 4, the contents maker 5, and the contents server 6 are connected to each other through dedicated lines.

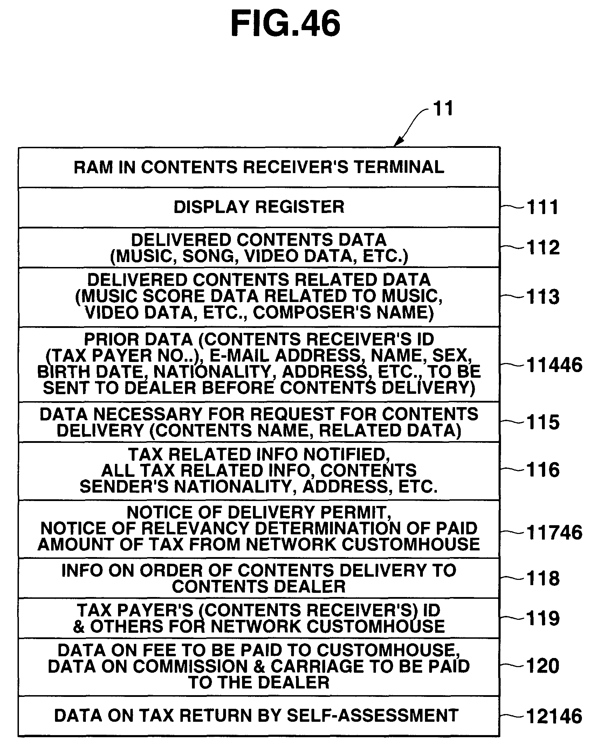

As shown in FIG. 46, RAM 11 of each of the contents receivers' terminals 1 comprises a display register 111, storage areas 112-113, 115, 116, 118-120, similar to the FIG. 2 RAM of the first embodiment, and other storage areas 11446, 11746 and 12146. Area 11446 stores data on the contents receiver's ID (tax payer number), electronic mail address, name, sex, birth date, and nationality to be sent to the contents dealer 3 before the contents are delivered to the contents receiver. The "Tax payer number" is a one allocated by the number allocating organ 10 to the contents receiver in accordance with an instruction of the inhabitant and corporation registration organ 9. Area 117 stores data on a Notice of contents delivery permit given by the network customhouse and a Notice of a result of determination of relevance of the paid amount of tax to be described later. Area 12146 stores data on the contents receiver's tax return by self assessment.

As in the first embodiment of FIG. 3A, the network customhouse 2 has a table ROM 200 having storage areas 201-203.

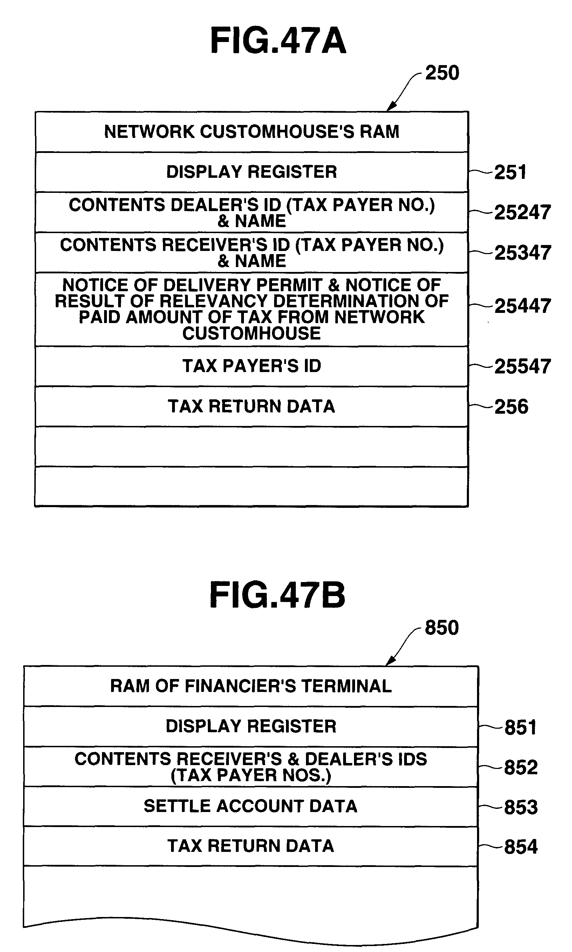

As shown in FIG. 47A, RAM 250 of the network customhouse 2 has a display register 251 and a storage area 256 as in the first embodiment of FIG. 3B and other storage areas 25247, 25347, 25447 and 25547. Area 25247 stores data on the contents dealer's ID (tax payer number) and name. Area 25347 stores data on the contents receiver's ID (tax payer number) and name. Area 25447 stores data on a Notice of contents delivery permit and a Notice of determination of relevancy of the paid amount of the tax. Area 25547 stores data on IDs (numbers) of the tax payer (contents receiver and contents dealer) who pay taxes to the network customhouse 2.

The financier's terminal 8 of FIG. 47B comprises a RAM 850 having a display register 851 and storage areas 851-854. Area 852 stores a contents receiver's and contents dealer's IDs (tax payer's numbers). Area 853 stores settled account data. Area 854 stores tax return data.

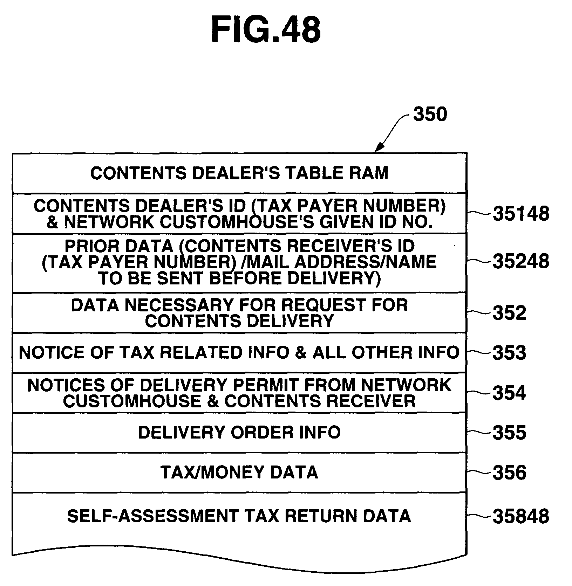

As shown in FIG. 48A, the contents dealer's terminal 3 comprises a table ROM 300 having storage areas 301-308 as in the first embodiment of FIG. 4A.

The table ROM 350 of contents dealer's terminal 3 of FIG. 48B has areas 352-356 as in the first embodiment of FIG. 4B and other areas 35148, 35248 and 35848. Area 35148 stores a contents dealer's ID (tax payer number) or a given ID number, if any, given by the network customhouse as being used in the tax return when the contents dealer applies for registration of his or her name to the network customhouse before the network dealer files the tax return. Area 35248 stores the prior data, contents receiver's ID (tax payer number), mail address and name. Area 358 stores data on the contents dealer's tax return data.

### (7-2) Operation:

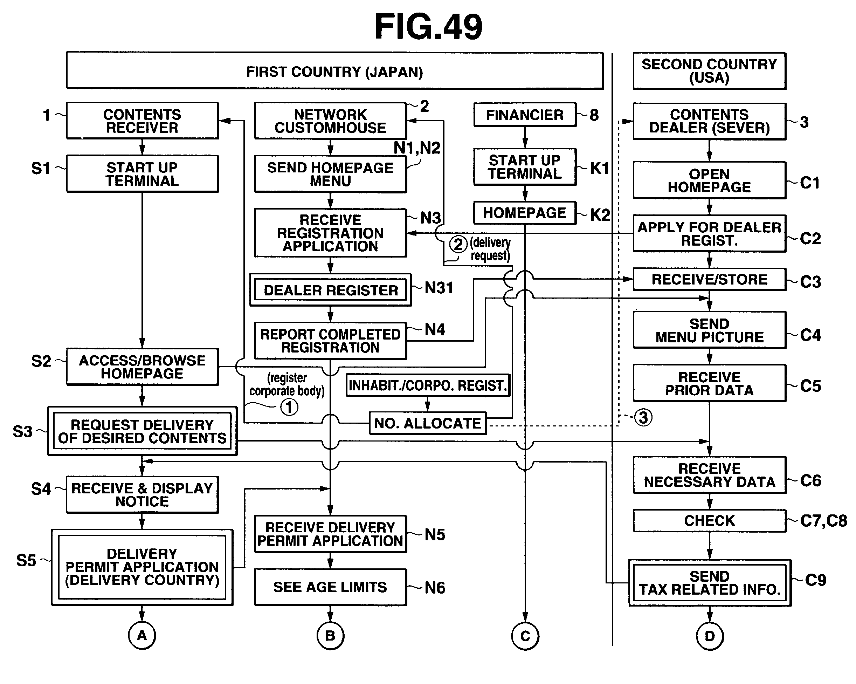

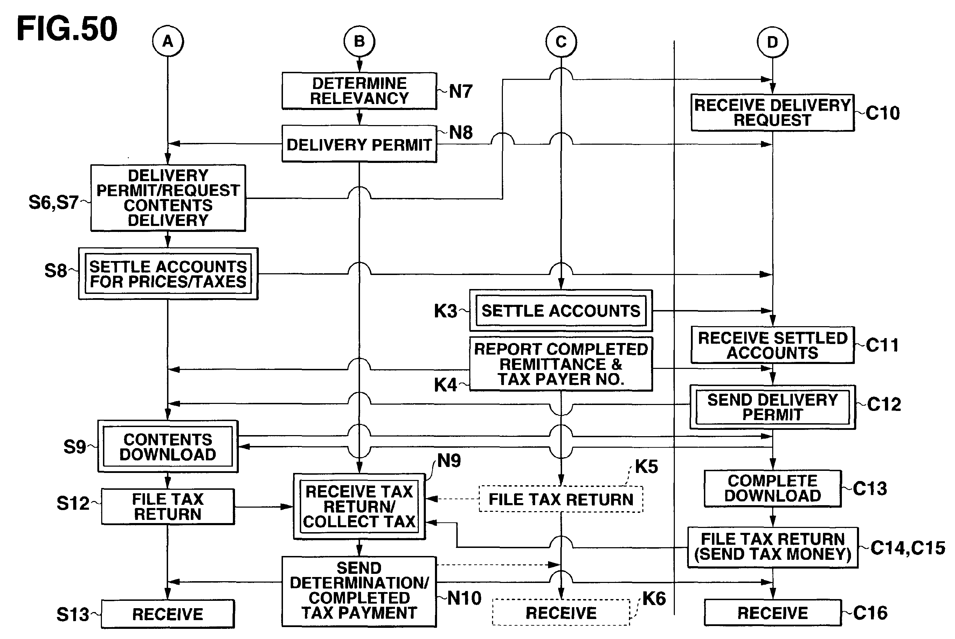

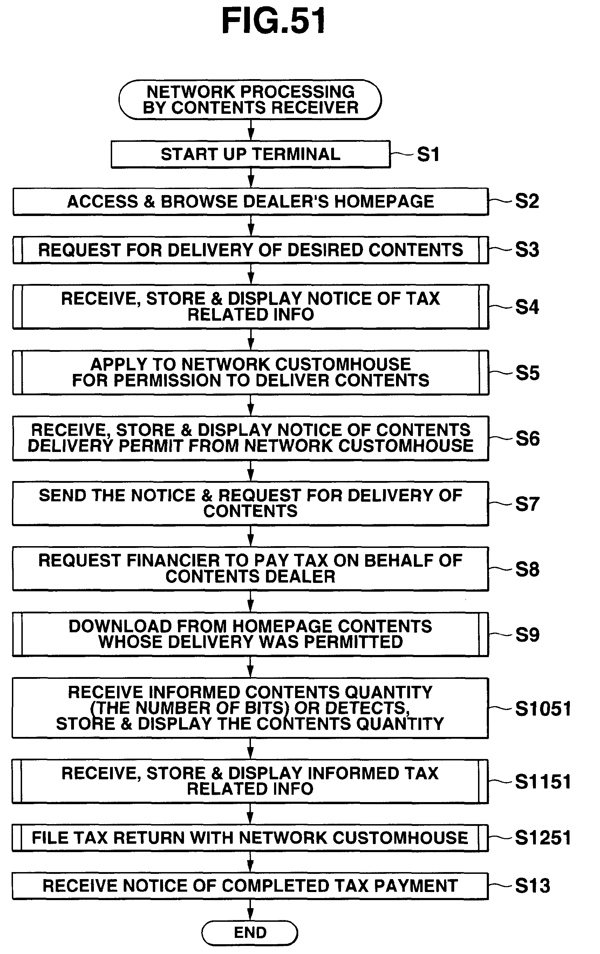

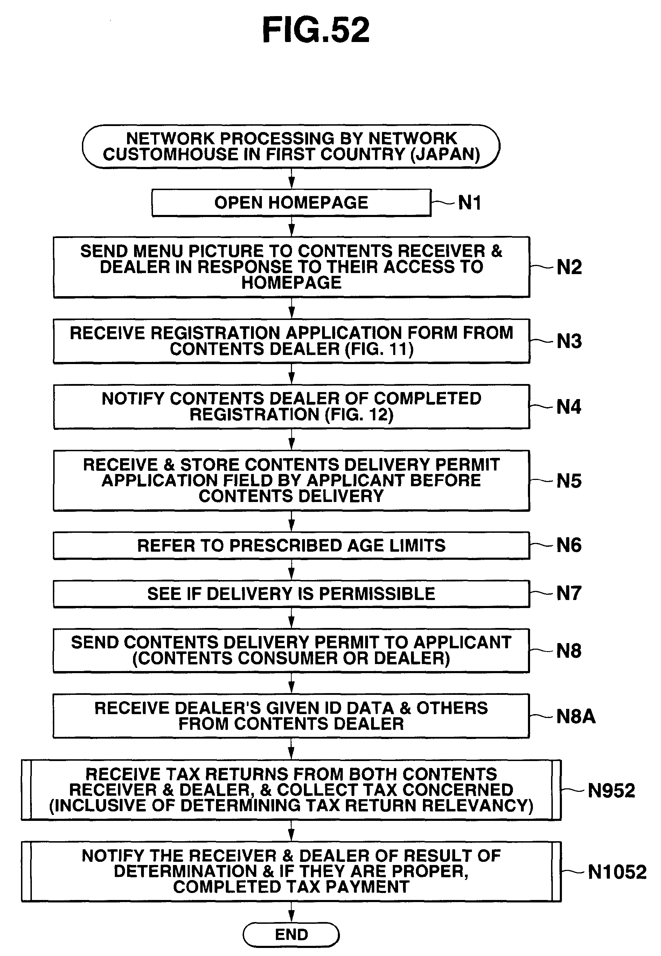

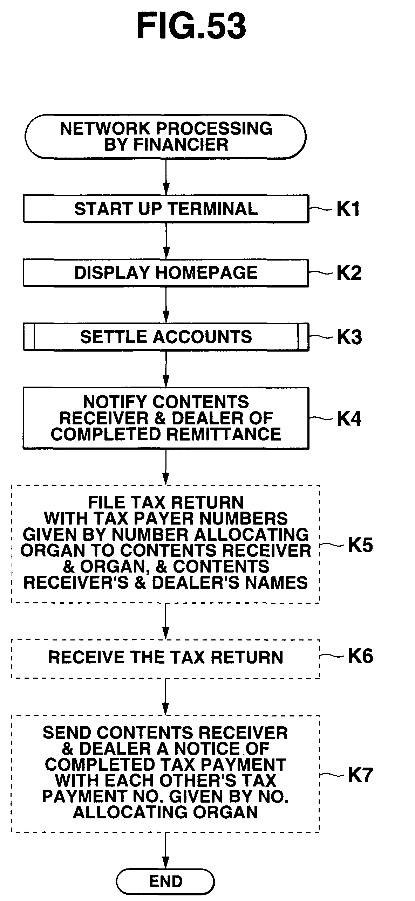

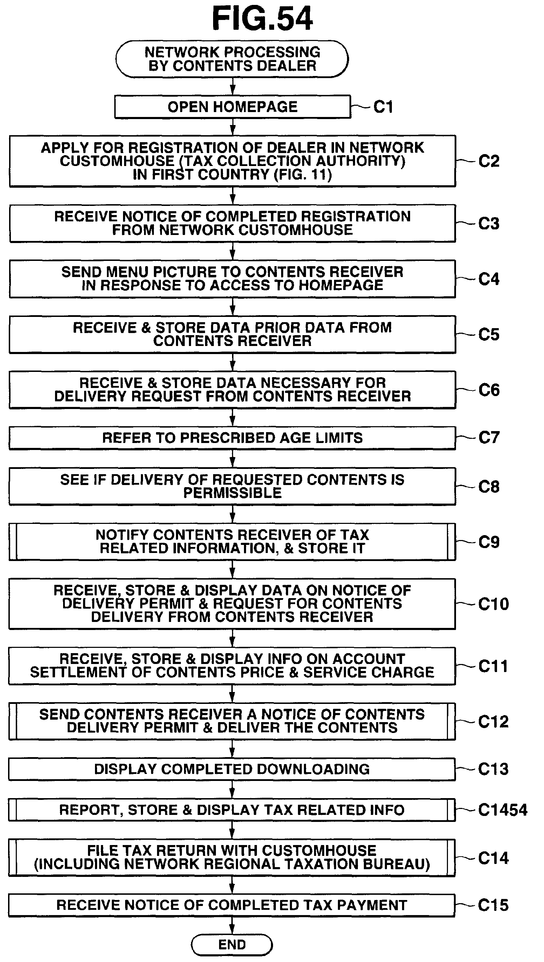

Operation of the seventh embodiment will be described next. FIGS. 49 and 50 illustrate a series of interactions performed in the system of the seventh embodiment. FIG. 51 illustrates a flow of network processing performed by the contents receiver. FIG. 52 illustrates a flow of network processing by the network customhouse in the first country (Japan). FIG. 53 illustrates a flow of network processing by the financier. FIG. 54 illustrates a flow of network processing by the contents dealer.

The step numbers used in the series of interactions performed in the present system of FIGS. 49 and 50 correspond respectively to the step numbers of the flowcharts of FIG. 51 and 54.

### (7-2A) Essential Portion of FIG. 49:

As shown in FIG. 49, the inhabitant and corporation registration organ 9 provides the number allocating organ 10 with inhabitant data (including inhabitants' names, addresses, etc.), corporation data (including corporations' names, base addresses, registration addresses, residences, etc.) in accordance with a request of the number allocating organ 10 (step J1).

The number allocating organ 10 receives these data. It gives a tax payer number to the contents receiver 1 (including a person, a personal importer or a corporative importer) based on the received data (step F1) before delivery of contents (①).

When the contents dealer 3 registers himself or herself as a corporation with the Legal Affairs Bureau in the first country (Japan), data on this registration is sent to the inhabitant and corporation registration organ 9. The organ 9 also sends the number allocating organ 10 the inhabitant data (inhabitants' names, addresses, etc.), and corporation data (corporations' names, base addresses, registration addresses, residences, etc.) in accordance with a request of the number allocating organ 10 (step J1). The number allocating organ 10 receives these data and allocates a tax payer number to the contents dealer 3. Thus, the contents dealer 3 receives the allocated tax payer number before delivery of the contents (①).

(7-2B) Flow of Network Processing by the Contents Receiver (FIG. 51):

A flow of network processing by the contents receiver 1 of FIG. 51 will be described next. Steps S1-S9 of this flow are identical to corresponding ones S1-S9 of FIG. 7 performed in the first embodiment, and further description thereof will be omitted.

When the contents receiver 1 downloads the contents delivered by the contents dealer 3 on RAM 11 of the terminal thereof in step S9 after the processing in steps S1-S8, the content receiver 1 is obliged legally to pay a tax imposed on the downloaded contents to the network customhouse 2 in the first country or region to which the contents receiver 1 belongs.

If the contents receiver 1 is notified of a quantity of data (for example, the number of data bits) of the downloaded contents by the contents dealer 3 when or after the contents are downloaded by the contents receiver 1, the contents receiver 1 receives this data and stores it in area 112 of RAM 11.

If the contents receiver 1 is not notified of the quantity of contents data, a data quantity sensor 1Y of the contents receiver's terminal 1 senses the quantity of contents data downloaded. The data is also stored in RAM area 112 and then displayed on the display unit 1B (step S1051).

When the contents receiver 1 is notified of tax related information by the contents dealer 3 before the contents are delivered from the contents dealer 3 to the contents receiver 1, in step S4 this information is received, stored in RAM area 116 of FIG. 46 and displayed. When the contents receiver 1 is notified of tax related information after the contents were delivered from the contents dealer 3 to the contents receiver 1, in step S1151 this information is received and stored in RAM area 116 of FIG. 46 and displayed on the display unit 1B. Thus, the contents receiver 1 can know the information related to the tax to be collected by the network customhouse 2.

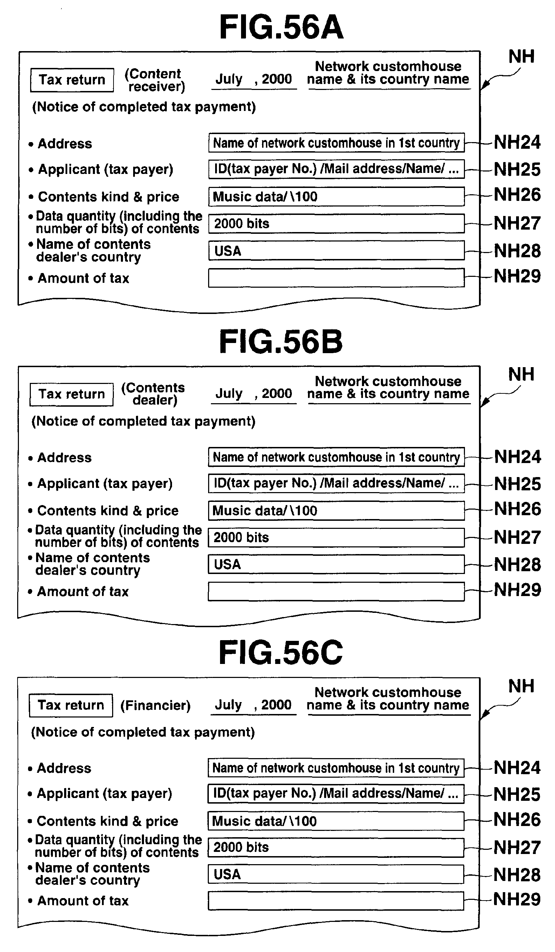

The contents receiver 1 then files a self-assessment tax return with the network customhouse 2 in accordance with the tax related information (step S1251). In this case, the tax return process in step S1251 is made in a "Tax return" of FIG. 56A that is basically the same as that of FIG. 20 in the first embodiment except that the contents receiver's ID ("tax payer number" and others are filled into the "Declarer (tax payer)", and data on a delivered quantity of contents data is filled into the "Quantity of contents data (number of bits)".

### (7-2C) Flow of Network Processing by Network Customhouse (FIG. 52):

A flow of network processing by the network customhouse in the first country (Japan) of FIG. 52 will be described next. In this process, steps N1-N8A except for steps N3 and N8A are identical to corresponding ones of FIG. 8 performed in the first embodiment, and further description thereof will be omitted.

In step N3 the contents dealer 3 fills in boxes NH1-NH3 for "Address", "Declarer (dealer)" and "Dealer's nationality" with "Network customhouse in first country (Japan)", "Tax payer number or ID given by the number allocating organ, mail address and name (enterprise's name, etc.)" and "Contents dealer's country name", etc., respectively, in a Registration application form (not shown) similar to that of FIG. 11. As a result, data on the completed "Registration application form" is delivered from the contents dealer 3 to the network customhouse 2 (step N3), which stores the data in RAM area 252 thereof. That is, the contents dealer 3 in the second country registers himself or herself as a dealer with the network customhouse 2 in the first country before the contents dealer 3 delivers contents to the contents receiver in the first country.

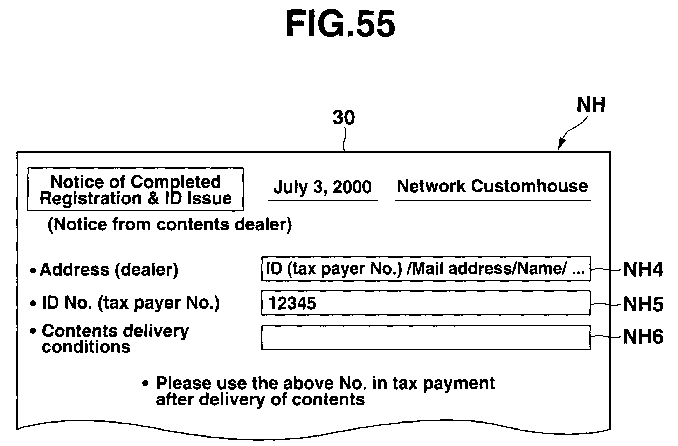

When the contents dealer 3 delivers contents to the contents receiver 1 in step N8A, the contents dealer 3 simultaneously notifies the network customhouse 2 of the contents dealer's ID, mail address and others along with the tax payer number, for example, "12345" given to the contents dealer by the number allocating organ 10 (step N9), as shown in FIG. 55.

As shown in FIG. 47A, the contents dealer's mail address, tax payer number, etc., are stored in RAM areas 252 and 253 of the network customhouse 2, which can grasp through the tax payer number, etc., that the contents dealer 3 in the second country delivered the contents to the contents receiver 1 in the first country.

When both the contents receiver 1 and the contents dealer 3 file tax returns with the network customhouse 2, in step N952 the network customhouse 2 receives those tax returns and collects the tax concerned.

At this time, the network customhouse 2 compares data on the tax returns filed by both the contents receiver 1 and the contents dealer 3 and determines whether the amounts of tax assessed by them are proper in step N952. Thus, even if one of the contents receiver and the contents dealer tries to avoid the tax return, it will be easily revealed to thereby promote a correct tax return and to prevent an incorrect tax return.

When the tax returns are determined to be proper, the network customhouse 2 sends a Notice of completed tax payment to both the contents receiver 1 and the contents dealer 3 (step N1052).

### (7-2D) Flow of Network Processing by Financier (FIG. 53):

A flow of network processing by the financier of FIG. 53 will be described next. Steps K1-K4 of this flow are identical to corresponding ones of FIG. 9 performed in the first embodiment, and further description thereof will be omitted.

In step K5 when the financier 8 is requested to pay taxes to the network customhouse 2 on behalf of the contents receiver 1 and the contents dealer 3, the financier 8 files with the network customhouse 2 a tax return with the contents receiver's name and the tax payer number given by the number allocating organ 10 to the contents receiver 1, and the contents dealer's corporation name and the tax payer number given by the number allocating organ 10 to the contents dealer.

When the financier 8 is then notified that the amount of tax paid based on the tax return was received by the network customhouse 2 (step K6), the financier 8 sends a Notice of completed tax payment to each of the contents receiver 1 and the contents dealer 3 with each other's tax payer number being added thereto (step K7).

### (7-2E) Flow of Network Processing by Contents dealer (FIG. 54):

A flow of network processing by the contents dealer of FIG. 54 will be described next. Steps C1-C13 of this flow except for steps C3 and C12 are identical to corresponding ones of FIG. 10 performed in the first embodiment, and further description thereof will be omitted.

In step C3 when the contents dealer 3 receives data on the ID set by himself or herself, the tax payer number (in this embodiment, "12345") given by the number allocating organ 10, "Contents delivery conditions", a note of the given ID (tax payer number), etc., the contents dealer stores these data in an area 351 of RAM 350 thereof.

By this processing, registration data such as "the contents dealer's tax payer number, etc." are registered with the network customhouse 2 in the first country before the contents are delivered by the contents dealer to the contents receiver.

In this process, in addition to the delivery of the contents from the contents dealer 3 to the contents receiver 1, the contents receiver 1 is notified by the contents dealer 3 of the contents receiver's ID (tax payer number), mail address and as needed the ID number given by the network customhouse 2 to the contents dealer 3 in advance, as in FIG. 55.

The contents dealer's ID (tax payer number), mail address, etc., are stored in RAM areas 35148 and 35248 of the contents dealer 3, as shown in FIG. 48 and also in RAM areas 25247 and 25347 of the network customhouse 2, as shown in FIG. 47A. Thus, the network customhouse 2 can grasp based on the tax payer number given to the contents dealer 3, etc., that the contents were delivered from the contents dealer 3 in the second country to the contents receiver in the first country.

In step C14 the contents dealer 3 performs a process for remitting an amount of money for the tax on the contents downloaded by the contents receiver 1 to the network customhouse 2 in the first country in order to file a self-assessment tax return with the network customhouse 2.

As shown in FIG. 56B, this tax return is made by filling in boxes NH24-NH29 that indicate "Address", "Declarer (tax payer)", "Kind of contents", "Quantity of contents data (including the number of bits)", "Contents price", "Contents dealer's country name, etc.", and "Amount of tax" with corresponding necessary data, as shown.

Receiving this tax return, the network customhouse 2 performs a tax return and tax collecting process (step N952). In this process, the network customhouse 2 collects a tax on the delivered contents from the contents dealer 3 having a corresponding tax payer number. The financial institution may pay the tax to the network customhouse 2 on behalf of the contents dealer 3 in his or her name or as his or her branch. Alternatively, the tax may be paid to the network customhouse 2 from some money deposited previously in the network customhouse 2 by the contents dealer 3.

When the tax has been collected in this way, the network customhouse 2 determines whether the paid amount of tax is proper. If it is, the network customhouse 2 sends a Notice of completed tax payment to both the contents receiver 1 and the contents dealer 3 or the contents dealer 3 alone (step N1052). Receiving this Notice (steps S13, C15), the contents receiver 1 and the contents dealer 3 know that the contents delivery and the related tax payment and collection have been completed. The Notice of completed tax payment takes the same format as in FIG. 21 used in the first embodiment, and further description thereof will be omitted.

As described above, according to the seventh embodiment, the contents receiver 1 living in the first country (for example, Japan) is given a tax payer number by the number allocating organ 10 based on the inhabitant data, etc., present in the inhabitant and corporation registration organ 9. The contents dealer 3 in the second country (for example, USA) is given a tax payer number by the number allocating organ 10 based data on the registration of himself or herself as a corporation in the inhabitant and corporation registration organ 9 in the first country.

Then, when the contents dealer 3 receives a request for delivery of contents from the contents receiver 1 in the first country, the contents dealer 3 delivers the contents to the contents receiver 1, and the contents receiver 1 downloads the delivered contents on the terminal thereof, at which time the contents receiver 1 and the contents dealer 3 are obliged to pay the tax on the delivered contents.

When the contents receiver 1 and the contents dealer 3 send the tax returns to the network customhouse 2, the network customhouse 2 in the first country compares both the tax returns to grasp the entity of the transaction and checks to see whether the tax returns are proper. Thus, the network customhouse 2 can securely collect a tax such as a consumption tax or a sales tax produced, due to the delivery of the contents from the second country to the first country, in accordance with the tax rate, tax payment conditions, etc., stipulated under the laws of the first country.

### (8) [Eighth Embodiment]

### (8-1) Composition:

As described above, in the seventh embodiment the financier 8 in the first country pays the tax on the delivered contents to the network customhouse 2 on behalf of the contents receiver in the first country or the contents dealer in the second country (step K3). In this case, the financier 8 notifies the contents receiver and the contents dealer of completed account settlement (step K4) and then files a tax return over the network with the network customhouse 2 on behalf of the contents receiver 1 (step K5).

FIG; 57 shows an eighth embodiment in which financiers 8 and 108 in the first and second countries pay taxes on delivered contents to the network customhouse 2 in the first country on behalf of the contents receiver and the contents dealer, respectively.

When contents have been downloaded from the contents dealer 3 to the contents receiver 1, the financier 8 in the first country files a tax return, also including remitting a corresponding proper amount of tax, with the network customhouse 2 in the first country on behalf of the contents receiver 1 (step K5). The financier 108 in the second country remits over the network a proper amount of tax in the tax return with the network customhouse 2 in the first country on behalf of the contents dealer 3 in the second country (step K101). When the network customhouse 2 receives these tax returns, it performs a tax return receiving and collecting process (step N952).

Thus, the network customhouse 2 receives taxes on the delivery of the contents from both financiers 8 and 108 in the first and second countries, respectively. Then, the network customhouse 2 determines whether the paid amount of taxes are proper. If they are, the network customhouse 2 sends data on a Notice of completed tax payment of FIG. 56 to both the contents receiver 1 and the contents dealer 3 or to both financiers 8 and 108.

### (8-2) Modifications:

A) While in the eighth embodiment the contents dealer 3 registers himself or herself as a corporation with the Legal affairs Bureau of the first country (for example, Japan) and is given a tax payer number by the number allocating organ 10 in the first country through the inhabitant and corporation registration organ 9, the tax payer number may be given by a number allocating organ in the second country (for example, USA). The contents dealer 3 may pay a tax concerned to the tax collection organ in the first country, using the last-mentioned tax payer number.
B) While after the contents receiver 1 has downloaded the contents from the contents dealer 3 the contents receiver 1 and the contents dealer 3 pay taxes on the downloaded contents to the tax collection organ in the first country (for example, Japan) in their tax returns, one of the contents receiver and the contents dealer may pay the tax to the tax collection organ in the first country in its tax return after the contents was delivered and downloaded to the contents receiver.
C) In the previous embodiment when the contents receiver 1 requests delivery of contents from the contents dealer 3, the contents dealer checks to see whether delivery of the contents to the contents receiver is permissible (step C8). Alternatively, the contents dealer 3 may immediately deliver the contents to the contents receiver without performing such checking process.
D) In the previous embodiment the network customhouse 2 receives a "Contents delivery permit application form " containing the contents receiver's ID (tax payer number), checks to see whether delivery of contents required should be permissible, and notifies the contents receiver of a result of the determination. The contents dealer 3 determines whether delivery of the contents to the contents receiver is permissible based on the determination. Such determination may not be made by the network customhouse 2.
[0104] E) While in the previous embodiment the plurality of contents receivers' terminals 1 each comprise a mobile or fixed type personal computer, they may each comprise a portable telephone with a built-in computer or a wristwatch type electronic device with a built-in computer.
F) While in the second embodiment the financiers 8 and 108 in the first and second countries pay taxes concerned to the network customhouse 2 in the first country on behalf of the contents receiver and the contents dealer in the first and second countries, respectively, only the financier 8 in the first country may pay the taxes concerned to the network customhouse 2 in the first country on behalf of the contents receiver 1 in the first country. Alternatively, only the financier 108 in the second country may pay the tax concerned to the network customhouse 2 on behalf of the contents dealer 3 in the second country.
G) While in the respective systems of the embodiments it is illustrated that the plurality of contents receivers' terminals 1, network customhouse (comprising a network Regional Taxation Bureau) 2, financier 8, inhabitant and corporation registration organ 9 and number allocating organ 10 are in the first country (for example, Japan) whereas the plurality of contents dealers 3, certifying/accounting server 4, contents maker 5, and contents server 6 are in the second country (for example, USA), the plurality of contents receivers' terminals 1, network customhouse (comprising a network Regional Taxation Bureau) 2, financier 8, inhabitant and corporation registration organ 9 and number allocating organ 10 are in a first state of a country (for example, Texa, USA) or a first region (for example, Europe) whereas the plurality of contents dealers 3, certifying/accounting server 4, contents maker 5, and contents server 6 are in a second state of that country (for example, New York, USA) or a second region (outside-Europe).
H) While it is illustrated that the contents dealer notifies the contents receiver of tax related information before or after the contents are delivered to the contents receiver, the contents receiver may be notified of the tax related information when the contents are delivered to the contents receiver.

### (8-3) [Conclusion and Effects of each of the seventh and eighth embodiments]

As described above, the embodiment involves a post-contents delivery system for performing a post-contents delivery after a contents sender's (e. g. contents dealer 3) terminal delivers contents via a network 100 to a contents receiver's (e. g. consumer 1) terminal.

The contents sender's terminal comprises notifying means (e. g. C9 of FIG. 49) for notifying via the network the contents receiver's terminal of information (e. g. presence/absence of a taxable event; tax rate, etc.) on a tax on the contents before or after the contents are delivered from the contents sender to the contents receiver's terminal.

The embodiment also involves a post-contents delivery method performed after a contents sender's (e. g. contents dealer 3) terminal has delivered contents to a contents receiver's (1) terminal via a network 100. The method comprises the step of:
notafying via the network the contents receiver's terminal of information on a tax on the contents before or after the contents is delivered from the contents sender to the contents receiver's terminal (e. g. C9 of FIG. 49).

The embodiment also involves a contents sender's (contents dealer 3) terminal for delivering contents to a contents receiver's terminal (1) via a network, comprising:
notifying means (e. g. 1A, 1C of FIG. 45; S3 of FIG. 49) for notifying a request for delivery of contents from the contents receiver's terminal; and
informing means (e. g. 300, 3C of FIG. 45; C9 of FIG. 49) for informing via the network the contents receiver's terminal of information on a tax to be imposed on the contents to be delivered to the contents receiver's terminal when the contents are delivered to contents receiver's terminal in accordance with the contents receiver's request received by said receiving means.

The embodiment also involves a recording medium that has recorded a computer (CPU 3X of FIG. 1) readable a taxing program comprising the step of:
receiving via a network 100 a request for delivery of contents from a contents receiver's terminal (1) (C6 of FIG. 49);
delivering the contents to the contents receiver's terminal in accordance with the request for delivery of contents received in the receiving step (S9 of FIG. 49); and
notifying via the network the contents receiver's terminal of information on a tax imposed on the contents delivered to the contents receiver's terminal in the delivering step.

The embodiment also involves a contents receiver's terminal (1) for receiving contents via a network 100 from a contents sender's (contents dealer 3) terminal, comprising:
sending means (1A, 1C of FIG. 45) for sending a request for delivery of contents to the contents sender's terminal; and
receiving means (1C of FIG. 45; C9 of FIG. 49), responsive to the contents sender's terminal delivering the contents to the contents receiver in accordance with the request for delivery of the contents sent by said sending means, for receiving information on a tax on the contents to be delivered.

The embodiment also involves a recording medium that has recorded a contents receiver terminal (1) (CPU 1X of FIG. 45) executable taxing program comprising the steps of:
sending via a network a request for delivery of contents to a contents sender's (contents dealer 3) terminal (S3 of FIG. 45); and
responsive to the contents sender's terminal delivering the contents to the contents receiver in accordance with the request for delivery of the contents sent in said sending step, receiving information on a tax on the contents to be delivered (S4 of FIG. 1).

The embodiment also involves a post-contents delivery system for performing a post-contents delivery process after a contents sender's (contents tradler 3) terminal delivers contents via a network 100 to a contents receiver's terminal (1) in accordance with a request of the contents receiver's terminal for delivery of contents, wherein:
at least one of the contents receiver's and sender's terminals comprises tax paying means (1A, 1C, 3A, 3C of FIG. 45; S12, C14, C15 → N9 of FIG. 50) for paying a tax on the delivered contents to a tax collection authority (network customhouse 2) via the network.

The embodiment also involves a post-contents delivery method performed after a contents sender's (contents dealer 3) terminal has delivered contents requested by a contents receiver's (consumer 1) terminal via a network 100 to the contents receiver's terminal (S9 of FIG. 50), wherein:
at least one of the contents receiver's and sender's terminals pays a tax on the delivered contents to a tax collection authority (network customhouse 2) via the network (S12, C14, C15→ N9 of FIG. 50).

The embodiment also involves a contents sender's (contents trader 3) terminal for delivering contents requested by a contents receiver's (consumer 1) terminal via a network 100 to the contents receiver's terminal in accordance with a request from the contents receiver's terminal, comprising:
tax paying means (3A, 3C of FIG. 1; C14, C15 → N9 of FIG. 50) for paying a tax on the delivered contents via the network to a tax collection authority (network customhouse 2).

The embodiment also involves a recording medium (ROM 300 of FIG. 1) that has recorded a contents sender's terminal (CPU 3X of FIG. 1) executable tax payment program comprising the steps of:
delivering contents requested by a contents receiver's (1) terminal via a network 100 from a contents sender's (contents dealer 3) terminal to the contents receiver's terminal in accordance with a request from the contents receiver's terminal (S9 of FIG. 50); and
paying a tax on the delivered contents via the network to a tax collection authority (network customhouse 2) (C14, C15 → N9 of FIG. 50).

The embodiment also involves a contents receiver's (1) terminal for receiving contents via a network from a contents sender's (contents trader 3's) terminal, comprising:
tax paying means (1A, 1C of FIG. 45; S12 → N9 of FIG. 49) for paying a tax on the contents received from the contents sender's terminal to a tax collection authority (network customhouse 2).

The embodiment also involves a recording medium that has recorded a contents receiver's terminal (CPU 1X of FIG. 45) executable tax paying program comprising the steps of:
sending a request for delivery of contents via a network to a contents sender's (contents dealer 3) terminal (S3 of FIG. 49); and
paying via the network to a tax collection authority (network customhouse 2) a tax on the contents delivered via the network from the contents sender's terminal in response to the request for delivery of the contents sent in said sending step (S12 of FIG. 50).

The embodiment also involves a post-contents delivery system in which a contents receiver's (1) terminal is connected via a network to a contents sender's (contents dealer 3) terminal for delivering contents requested by the contents receiver's terminal from the contents sender's terminal to the contents receiver's terminal, wherein:
in order to perform a post-contents delivery process, a financier's (8 of FIG. 45) terminal requested by at least one of the contents receiver and sender so as to pay a tax on the delivered contents comprises means for paying (8A, 8C of FUG. 45; K5→N9 of FIG. 50) the tax via the network to a tax collection authority (network customhouse 2).

The embodiment also involves a post-contents delivery method performed after a contents sender's (contents dealer 3) terminal has delivered contents via a network 100 to a contents receiver's (1) terminal in accordance with a request of the contents receiver's terminal, comprising the step of:
causing a financier's (8 of FIG. 45) terminal requested by at least one of the contents receiver and sender so as to pay a tax on the delivered contents to pay the tax via the network to a tax collection authority (network customhouse 2)(K5→N9 of FIG. 50).

The embodiment also involves a contents sender's (contents dealer 3) trminal for delivering contents via a network 100 to a contents receiver's (1) terminal in accordance with a request of the contents receiver's terminal, comprising:
sending means (3A, 3C of FIG. 45; not shown in FIG. 50) for sending a financier's (financier 8 of FIG. 45) terminal via the network 100 a request to the effect that the financier should pay a tax on the delivered contents to a tax collection authority (network customhouse 2).

The embodiment also involves a recording medium (ROM 300 of FIG. 1) that has recorded a contents sender's (CPU 3X of FIG. 1) terminal executable tax payment program comprising the steps of:
delivering contents via a network to a contents receiver's (contents receiver 1) terminal in accordance with a request of the contents receiver's terminal (S9 of FIG. 50); and
sending a financier's terminal via a network a request to the effect that the financier should pay a tax on the delivered contents to a tax collection authority (network customhouse 2) (3A, 3C of FIG. 1; not shown in FIG. 50).

The embodiment also involves a contents receiver's (1) terminal for receiving contents dlivered via a network 100 from a contents sender's (contents dealer 3) terminal in accordance with a request of the contents receiver's terminal, the contents receiver's terminal comprising:
sending menas (1A, 1C of FIG. 45; not shown in FIG. 50) for sending a financier's terminal via a network a request to the effect that the financier should pay a tax on the delivered contents to a tax collection authority (network customhouse 2).

The embodiment also involves a recording medium (ROM 300 of FIG. 1) that has recorded a contents receiver's terminal (CPU 3X of FIG. 1) executable tax paying program comprising the steps of:
sending a request for delivery of contents via a network 100 to a contents sender's (contents trader 3) terminal (S3 of FIG. 49); and
sending a financier's terminal a request for paying (not shown in FIG. 50) via the network to a tax collection authority (network customhouse 2) a tax on the contents delivered via the network from the contents sender's terminal in response to the request for delivery of the contents sent in said sending step.

contents receiver's (1) terminal is connected via a network 100 to a contents sender's (contents trader 3) terminal for delivering contents requested by the contents receiver's terminal from the contents sender's terminal to the contents receiver's terminal, wherein:
in order to perform a post-contents delivery process, either a terminal of at least one of the contents receiver and sender as a tax payer or a terminal of an entity (a financier's (8)) requested by the tax payer so as to pay a tax on the delivered contents comprises means (8A, 8C of FIG. 45; K5 →N9 of FIG. 50) for paying the tax via the network to a tax collection authority (network customhouse 2) in a sum of money corresponding to an amount of data on the delivered contents.

The embodiment also involves a post-contents delivery method performed after a contents sender's (contents dealer 3) terminal delivers contents via a network to a contents receiver's (1) terminal in accordance with a request of the contents receiver's terminal (S9 of FIG. 45), wherein:
in order to perform a post-contents delivery process, either a terminal of at least one of the contents receiver and sender as a tax payer or a terminal of an entity (a financier's (8)) requested by the tax payer so as to pay a tax on the delivered contents comprises means (8A, 8C of FIG. 45; K5 → N9 of FIG. 50) for paying the tax via the network to a tax collection authority (network customhouse 2) in a sum of money corresponding to an amount of data on the delivered contents (C14, C15 → N9 of FIG. 50; K5 → N9).

The embodiment also involves a contents sender's (contents dealer 3) terminal for delivering contents via a network to a contents receiver's (contents receiver 1) terminal, comprising:
receiving means (3C of FIG. 45 C6 of FIG. 49) for receiving a request for delivery of contents from the contents receiver's terminal; and
informing means (3C of FIG. 45; C9 of FIG. 49), responsive to the contents sender's terminal delivering the contents to the contents receiver's terminal in accordance with the request for delivery of the contents received by said receiving means, for informing the contents receiver's terminal of a quantity of data on the delivered contents as a basis of calculation of the sum of a tax imposed on the delivered contents.

The embodiment also involves a recording medium (ROM 3000 of FIG. 1) that has recorded a contents receiver's terminal (CPU 3X of FIG. 1) executable taxing program comprising the steps of:
receiving (C6 of FIG.49) via a network a request for delivery of contents from a contents receiver's (contents receiver 1) terminal (C6 of FIG. 49);
delivering contents to the contents receiver's terminal in accordance with a request of delivery of the contents received in the receiving step (S9 of FIG. 49); and
informing the contents receiver's terminal of a quantity of data on the delivered contents as a basis of calculation of the sum of a tax imposed on the contents delivered in said delivering step (C9 of FIG. 49).

The embodiment also involves a contents receiver's (content receiver 1) terminal (1C of FIG. 45) that receives contents via a network 100 from a contents sender's (contents trader 3) terminal, comprising:
sending means (1C of FIG. 45) for sending a request for delivery of contents to the contents sender's terminal; and
receiving means (1C of FIG.45) for receiving the contents delivered by the contents sender's terminal in accordance with the request for delivery of the contents sent by said sending means, and for receiving a quantity of data on the delivered contents as a basis for calculating the sum of a tax imposed on the delivered contents.

The embodiment also involves a recording medium that has recorded a contents receiver's (CPU 1X of FIG. 45) terminal executable tax payment program, comprising the steps of:
sending a request for delivery of contents to a contents sender's (contents dealer 3) terminal (S3 of FIG. 49); and
receiving the contents delivered by the contents sender's terminal in accordance with the request for delivery of the contents sent in said sending step, and receiving a quantity of data on the delivered contents as a basis for calculating the sum of a tax on the delivered contents (C9, S9 of FIG.50).

The embodiment also involves a post-contents delivery system in which a contents sender's (contents dealer 3) terminal is connected via a network 100 to a contents receiver's (contents receiver 1) terminal so that contents are delivered from the contents sender's terminal to the contents receiver's terminal in accordance with a request of the contents receiver's terminal with a terminal of a tax collection authority (network customhouse 2) being connected to the network to collect a tax on the contents delivered from the contents sender's terminal to the contents receiver's terminal, wherein:
in order to perform a post-contents delivery process, the terminal (2 of FIG. 45) of the tax collection authority comprises:
determining means (2X of FIG. 45; S12 → N9, C14, C15 → N9 of FIG. 50) for comparing, on condition that respective tax returns on the delivered contents were filed by both the contents sender's and receiver's terminals with a tax condition authority (network customhouse 2), the respective tax returns to determine whether the tax returns are relevant; and
informing means (2X of FIG. 45; N10 → S13, N10 → C16 of FIG. 50) for informing at least one of the contents receiver's and sender's terminals about the result of the determination via the network.

The embodiment also involves a post-contents delivery method performed after a contents sender's (contents trader 3's) terminal delivers contents via a network 100 to a contents receiver's (contents receiver 1) terminal (S9 of FIG. 50), comprising the steps of:
on condition that both of the contents receiver's and sender's terminals filed tax returns on the delivered contents with a tax condition authority (network customhouse 2), comparing the respective tax returns to determine whether the tax returns are relevant (S12 → N9, C14, C15 → N9 of FIG. 50); and
informing means (N10 → S13, N10 → C16 of FIG. 50) for informing at least one the contents receiver's and sender's terminals about the result of the determination via the network.

The embodiment also involves a terminal of a tax collection authority (network customhouse 2) for collecting via a network 100 a tax on contents delivered from a contents sender's (contents trader 3) terminal to a contents receiver's (1) terminal via a network (S9 of FIG. 50), comprising:
receiving means (2C, 2X of FIG. 45; S12 → N9, C14, C15 → N9 of FIG. 50), responsive to both of the contents sender's and receiver's terminals filing via a network with the tax collection authority their respective tax returns on the contents delivered from the contents sender's terminal to the receiver's terminal, for receiving the respective tax returns;
determining means (2X of FIG. 45; N9 of FIG. 50) for determining whether the respective tax returns received by said receiving means are relevant; and
informing means (2X of FIG. 45; N10 → S13, N10 → C16 of FIG.50) for informing at least one of the contents receiver's and sender's terminals of a result of the determination by said determining means via the network.

The embodiment also involves a recording medium (ROM 200 of FIG. 1) that has recorded a tax collecting terminal (network customhouse 2; CPU 2X of FIG. 1) executable tax collecting program comprising the steps of:
in response to both of the contents sender's and receiver's terminals filing via a network with the tax collection authority their respective tax returns on the-contents delivered from a contents sender's (contents dealer 3) terminal to a receiver's (1) terminal (S9 of FIG. 50), receiving the respective tax returns (S12 → N9, C14, C15 → N9 of FIG. 50);
determining whether the respective tax returns received in said receiving step are relevant (N9 of FIG. 50); and
informing at least one of the contents receiver's and sender's terminals of a result of the determination in said determining step via the network (N10 → S13, N10 → C16 of FIG. 50).

The embodiment also involves a post-contents delivery system in which required contents were delivered via a network 100 from a contents sender's (contents dealer 3) terminal to a contents receiver's (1) terminal in accordance with a request of the contents receiver's terminal, wherein:
in order to perform a post-contents delivery process, at least one of the contents receiver's and sender's who becomes a tax payer for a tax on the delivered contents or a terminal of a person (financial institution 8) required by the tax payer to pay the tax comprises tax declaring means (1A, 1C, 3A, 3C, 8A, 8C of FIG. 45; J1 → F1 → ① → ② → S12 → N9 of FIG. 50) for declaring via the network at a tax collection authority (network customhouse 2) for the tax payer's number and a tax on the delivered contents to be paid.

The embodiment also involves a post-contents delivery method performed after a contents sender's (contents trader 3) terminal delivered contents via a network 100 to a contents receiver's (1) terminal in accordance with a request of the contents receiver's terminal (S3 of FIG. 50), wherein:
at least one of the contents receiver and sender who becomes a tax payer for a tax on the delivered contents or a terminal of an entity designated by the tax payer files a tax return for the delivered contents via the network with a tax collection authority (network customhouse 2), the tax return having thereon indicated a tax payer number of the tax payer. (J1 → F1 → ① → ② → S12 → N9 of FIG. 49)

The embodiment also involves a contents sender's (contents dealer 3) terminal for delivering contents requested by a contents receiver (1) via a network 100 to the contents receiver in accordance with the contents receiver's request (S3 of FIG. 50), comprising:
filing means (3A, 3C of FIG. 45; J1 → F1 → ③ → C14, C15 → N9 of FIG. 49) for filing a tax return on the delivered contents via the network with a tax collection authority (network customhouse 2), the tax return having thereon indicated a tax payer number of a tax payer who is liable to pay the tax.

The embodiment also involves a recording medium that has recorded a contents sender's (CPU 3X of FIG. 45) executable tax collection program comprising the steps of:
delivering contents via a network 100 from a contents sender's (contents dealer 3) terminal to the contents receiver in accordance with a request of the contents receiver (S3 of FIG. 49; and
filing via the network a tax return on the delivered contents via a network 100 with a tax collection authority (network customhouse 2), the tax return having thereon indicated a tax payer number of a tax payer who is liable to pay the tax (J1 → F1 → ③ → S12 → N9 of FIG. 49).

The embodiment also involves a contents receiver's (consumer 1's) terminal for receiving contents delivered from a contents sender's (contents trader 3's) terminal via a network, comprising:
filing means (1A, 1C of FIG. 45; J1 → F1 → ① → ② → S12 → N9 of FIG. 49) for filing a tax return on the delivered contents via a network 100 with a tax collection authority (network customhouse 2), the tax return having thereon indicated a tax payer number of a tax payer who is liable to pay the tax.

The embodiment also involves a recording medium that has recorded a contents receiver's (CPU 1X of FIG. 45) executable taxing program comprising the steps of:
receiving contents delivered from a contents sender's (contents trader 3) terminal via a network (S9 of FIG. 45); and
filing via the network a tax return on the delivered contents via a network 100 with a tax collection authority (network customhouse 2), the tax return having thereon indicated a tax payer number of a tax payer who is liable to pay the tax)(J1 → F1 → ① → ② → S12 → N9 of FIG. 49).

As described above, according to this embodiment, before, when or after the contents are delivered from the contents dealer to the contents receiver, at least one of the terminals of the contents receiver and dealer can be notified of information on the tax on the delivery of the contents. Thus, a tax imposing system is constituted in which the contents dealer and the contents receiver using their terminals for delivering and receiving the contents are caused to promote payment of the tax to the network customhouse in accordance with the notified information on the tax.

According to this embodiment, a self-assessment tax return type tax paying system is constructed in which the contents receiver and the contents dealer pay the tax concerned to the network customhouse, using their respective terminals that are also used for the delivery of contents.

In this embodiment, a self-assessment tax paying system is constructed in which the terminal of the financier pays over the network to the tax collection organ the tax, imposed on the delivered contents, in accordance with a request of at least one of the contents receiver and dealer on behalf of the at least one of the contents receiver and dealer because the financier's terminal has the tax paying function.

According to this embodiment, the contents receiver, contents dealer or the person or dealer designated by one of the contents receiver and dealer uses the terminal thereof to pay a tax depending on the amount of contents delivered from the contents dealer to the contents receiver to the tax collection organ over the network. Thus, a tax paying system for carrying out such process is constructed.

According to this embodiment, the tax collection organ compares the tax returns on the delivered contents filed by both the contents receivers and dealers to determine whether the tax returns are proper. Thus, even if one of the contents dealer and receiver tries to avoid filing a tax return on the delivered contents, this fact will easily be revealed to thereby contribute to correct tax return or prevent incorrect tax return. Thus, the contents dealer and receiver are urged to file correct tax returns with the tax collection organ. Therefore, a tax collecting system suitable for such purpose is constructed.

In this embodiment, the contents dealer or receiver as a tax payer for the tax on the delivered contents or a person who is requested to pay as the tax payer the tax on the delivered contents by the contents dealer or receiver can file a tax return with the tax collection organ over the network, using the tax payer number. Thus, the tax collection organ can grasp the entity of the transaction based on the tax payer number and confirm whether the contents of the tax return are proper. If otherwise, the tax collection organ can examine the entity of the transaction to thereby ensure correct tax payment and collection on the delivered contents. Thus, a system for suitable for performing such process is constructed.

## Claims

1. A method of collecting taxes on contents delivered over a network(100), said method comprising:
registering (C2,N3;E3) a contents sender (3) in a country or region based on an application for registration made by the contents sender through the network; and
in response to contents being delivered through the network from the registered contents sender to a contents receiver (1) in a different country or region, causing (S9,C14,N9; E8) a tax collecting authority (2) in the different country or region to collect through the network a tax on the contents delivered to the contents receiver.

2. The method according to claim 1, wherein the contents are delivered through the network from the registered contents sender to the contents receiver in accordance with a request (S3) of the contents receiver.

3. The method according to claim 1, further comprising:
determining (C12) before the contents sender delivers the contents to the contents receiver if delivery of the contents from the contents sender to the contents receiver should be permitted, based on the application for registration made by the contents sender; and
sending (C12) the contents sender a notice of permission through the network if it is determined that delivery of the contents will be permitted.

4. The method according to claim 3, wherein the contents sender is enabled to be registered only if it is determined that delivery of the contents will be permitted.

5. The method according to claim 1, wherein the tax collecting authority in the different country or region collects (C14, N9) the tax on the delivered contents from a tax payer designated by the contents sender.

6. The method according to claim 5, wherein the designated tax payer comprises one of the contents sender itself, an in-area trader (7) in the different country, an outside-area tax payer or paying organization (7, 8 or 9) set up outside the first-mentioned country, an international paying organization (9), and an intermediary accounts settling organization.

7. The method according to claim 1, wherein the tax collecting authority sender is enabled to collect the tax only if the tax collecting authority has a right to impose taxation in the different country with respect to the delivered contents.

8. The method according to claim 1, further comprising informing (C9,N4) the contents receiver through the network, before or after delivery of the contents, whether or not delivery of the contents is a taxable event.

9. The method according to claim 8, wherein the contents receiver is informed of a tax rate and tax amount when delivery of the contents is a taxable event.

10. The method according to claim 1, wherein an amount of the tax collected on the delivered contents is determined (S1051) in accordance with a data amount of the delivered contents.

11. The method according to claim 1, further comprising a post-contents delivery processing step of determining (S12,C14,C15,N9), on condition that respective tax returns on the delivered contents were filed by both the contents sender and the contents receiver, whether the tax returns are relevant.

12. The method according to claim 11, further comprising informing at least one of the contents sender and contents receiver through the network of a result of the relevance determination.

13. Arecording medium having recorded thereon a computer readable program for implementing the method of claim 1.

14. A method of paying taxes on contents delivered over a network (100), said method comprising:
registering (C2,N3;E3) a contents sender (3) in a country or region based on an application for registration made by the contents sender through the network; and
in response to contents being delivered through the network from the registered contents sender to a contents receiver (1) in a different country or region, causing a tax payer to pay through the network a tax on the delivered contents to a tax collecting authority (2) in the different country.

15. The method according to claim 14, wherein the contents are delivered through the network from the registered contents sender to the contents receiver in accordance with a request (C3) of the contents receiver.

16. The method according to claim 14, further comprising:
determining (C12) before the contents sender delivers the contents to the contents receiver if delivery of the contents from the contents sender to the contents receiver should be permitted, based on the application for registration made by the contents sender; and
sending (C12) the contents sender a notice of permission through the network if it is determined that delivery of the contents will be permitted.

17. The method according to claim 16, wherein the contents sender is enabled to be registered only if it is determined that delivery of the contents will be permitted.

18. The method according to claim 14, wherein the tax payer is designated by the contents sender.

19. The method according to claim 18, wherein the designated tax payer comprises one of the contents sender itself, an in-area trader in the different country, an outside-area network customhouse set up outside the first-mentioned country, an international paying organization, and an intermediary accounts settling organization.

20. The method according to claim 14, wherein the tax payer is caused to pay the tax to the tax collecting authority only if the contents sender is liable to taxation in the different country with respect to the delivered contents.

21. The method according to claim 14, further comprising informing (C9;N4) the contents receiver through the network, before or after delivery of the contents, whether or not delivery of the contents is a taxable event.

22. The method according to claim 21, wherein the contents receiver is informed of a tax rate and tax amount when delivery of the contents is a taxable event.

23. The method according to claim 14, wherein an amount of the tax paid on the delivered contents is determined in accordance with a data amount of the delivered contents.

24. The method according to claim 14, further comprising a post-contents delivery processing step of causing the tax payer to file a tax return with the tax collecting authority in connection with the delivered contents.

25. The method according to claim 14, wherein when the contents are delivered through the network, the tax payer declares through the network to the tax collecting authority a tax ID number and a tax amount to be paid with respect to the delivered contents.

26. Arecording medium having recorded thereon a computer readable program for implementing the method of claim 14.

27. A contents delivery tax processing system comprising:
a first terminal (3) via which a contents sender in a country or region may:
(i) submit an application for registration through a network (100), (ii) deliver requested contents through the network (100), and (iii) cause taxes to be paid through the network on delivered contents;
a second terminal (1) via which a contents receiver in a different country or region may: (i) request (S3) through the network a delivery of contents from the contents sender, and (ii) receive (S9) delivery of the requested contents through the network; and
a third terminal (2) via which a tax collecting authority in the different country or region may collect through the network a tax on the contents delivered to the contents receiver.

28. The system according to claim 27, wherein:
the first terminal comprises: (i) applying means for enabling the contents sender to submit the application for registration through the network to the tax collection authority before delivering the contents to the contents receiver, (ii) delivering means for delivering the requested contents through the network to the contents receiver after registration has been achieved based on the application, and (iii) means for causing the tax on the delivered contents to be paid to the tax collection authorities through the network responsive to the contents being delivered to the contents receiver;
the second terminal comprises: (i) delivery requesting means for requesting through the network delivery of the contents from the contents sender, and (ii) downloading means for downloading through the network the requested contents from the contents sender; and
the third terminal comprises: (i) registering means for receiving and approving the application for registration of the contents sender, and (ii) tax collecting means responsive to the contents receiver downloading the requested contents from the contents sender for collecting the tax on the delivered contents through the network.

29. The system according to claim 27, further comprising a fourth terminal via which an intermediary pays the tax on the delivered contents through the network to the tax collecting authority, and wherein the first terminal causes the tax on the delivered contents to be paid by sending a request to the fourth terminal.

30. A recording medium having recorded thereon a computer readable program for implementing the system of claim 27.

31. A contents transaction network taxing method comprising the step of:
in response to a terminal (1) of a contents receiver belonging to a first country or region downloading (S9) contents via a network (100) from a terminal (3) of a contents sender belonging to a second country or region, causing (C14 → E7 → E8 → N9) a terminal (2) of a tax collection authority having a right to impose a tax on the downloaded contents in the first country or region to collect the tax via the network from a terminal (1, 3 or 7) of a tax payer who is liable to pay the tax.

32. A contents transaction network taxing method comprising the step of:
in response to a terminal (1) of a contents receiver belonging to a first country or region downloading (S9) contents via a network (100) from a terminal (3) of a contents sender belonging to a second country or region, causing (C14 → E7 → E8 → N9) a terminal (1, 3 or 7) of a tax payer who is liable to pay the tax on the downloaded contents to pay the tax via the network to a terminal (2) of a tax collection authority having a right of tax collection in the first country.

33. A contents transaction network taxing method comprising the step of:
in response to a terminal (1) of a contents receiver belonging to a first country or region downloading (S9) contents via a network (100) from a terminal (3) of a contents sender belonging to a second country or region, causing (N4 → E6; C9 → E6) the terminal (3) of the contents sender or a terminal (2) of a tax collection authority having a right to impose a tax on the downloaded contents in the first country or region to notify via the network a terminal (1 or 7) of a tax payer who is liable to pay the tax of information on the tax.

34. A recording medium that has recorded a computer (2) executable program comprising the step of:
in response to a terminal (1) of a contents receiver belonging to a first country or region downloading contents via a network (100) from a terminal (3) of a contents sender belonging to a second country or region, causing a terminal (2) of a tax collection authority having a right to impose a tax on the downloaded contents in the first country or region to collect the tax via the network from a terminal (1, 3 or 7) of a tax payer who is liable to pay the tax.

35. A recording medium that has recorded a computer (2) executable program comprising the step of:
in response to a terminal (1) of a contents receiver belonging to a first country or region downloading contents via the network (100) from a terminal (3) of a contents sender belonging to a second country or region, causing a terminal (1, 3 or 7) of a tax payer who is liable to pay a tax on the delivered contents to pay the tax via the network to a terminal (2) of a tax collecting authority.

36. A post-content delivery method performed after a contents sender's terminal (3) delivers contents via a network (100) to a contents receiver's terminal (1), the method comprising the steps of:
on conditon that both of the contents receiver's and sender's terminals filed tax returns on the delivered contents with a tax collection authority (2), comparing (S12→N9,C14, C15→N9) the tax returns to determine whether the tax returns are relevant; and
informing (N10 → S13, N10 → C16) a t least one of the contents receiver's and sender's terminals about a result of the determination via the network.

37. A recording medium that has recorded a tax collecting terminal (2; 2X) executable tax collecting program comprising the step of:
in response to both terminals (3,1) of a contents sender and receiver filing via a network (100) with a terminal (2) of a tax collection authority their respective tax returns on contents delivered from the terminal (3) of the contents sender to the terminal (1) of the contents receiver, receiving (S12 → N9, C14, C15 → N9) the respective tax returns;
comparing (N9) the tax returns to determine whether the respective tax returns received in said receiving step are relevant; and
informing (N10 → S13, N10 → C16) at least one of the terminals of the contents receiver and sender of a result of the determination in said determining step via the network.

38. A post-contents delivery method performed after a terminal (3) of a contents sender has delivered contents via a network (100) to a terminal (1) of a contents receiver in accordance with a request of the terminal (1) of the contents receiver, wherein:
at least one of the contents receiver and sender who becomes a tax payer for a tax on the delivered contents or a terminal of an entity designated by the tax payer files (J1 → F1 → ① → ② → S12 → N9) a tax return on the delivered contents via the network with a terminal (2) of a tax collection authority, the tax return having thereon indicated a tax payer number of the tax payer.

39. A recording medium that has recorded a contents sender's terminal (3) executable tax collection program comprising the steps of:
delivering (S3) contents via a network (100) from the terminal (3) of the contents sender te a terminal (1) of a contents receiver in accordance with a request of the terminal (1) of the contents receiver; and
filing (J1 → F1 → ③ → C14, C15 → N9) via the network a tax return for a tax on the delivered contents with a terminal (2) of a tax collection authority, the tax return having threeon indicated a tax payer number of a tax payer who is liable to pay the tax.

40. A recording medium that has recorded a contents receiver's terminal (1) executable taxing program comprising the step of:
receiving (S9) contents delivered from a terminal (3) of a contents sender via a network (100); and
filing (J1 → F1 → ① → ② → S12 → N9) via the network a tax return for a tax on the delivered contents with a terminal (2) of a tax collection authority, the tax return having threeon indicated a tax payer number of a tax payer who is liable to pay the tax.
